# EUROPEAN PATENT APPLICATION

(11) **EP 4 841 624 A1**
(43) Date of publication of application: **18.11.2026**
(21) Application number: 26175748.8
(22) Date of filing: 30.04.2026
(51) Int. Cl.: G10L 15/22, G06F 40/58, G10L 15/26

(54) **USER INTERFACE FOR TRANSLATIONS**

(30) Priority: 16.05.2025 US 202563807266 P; 15.01.2026 US 202619450534
(71) Applicant: Apple Inc., Cupertino, CA 95014 (US)
(72) Inventor: LEE, Eunice Y., San Francisco (US); CARRIGAN, Taylor G., San Francisco (US)
(74) Representative: COPA Copenhagen Patents

(57) **Abstract**

The present disclosure generally relates to user interfaces for audio processing, including detecting audio, translating speech, and outputting audio.

## Description

### FIELD

The present disclosure relates generally to computer user interfaces, and more specifically to techniques for managing translations.

### BACKGROUND

Computer systems are used to translate text from one language to another language, thereby enabling individuals who do not understand a particular language in which a document is written to access a translated version of the document.

### BRIEF SUMMARY

Some techniques for managing translations using electronic devices, however, are generally cumbersome and inefficient. For example, some existing techniques use a complex and time-consuming user interface, which may include multiple key presses or keystrokes. Existing techniques require more time than necessary, wasting user time and device energy. This latter consideration is particularly important in battery-operated devices.

Accordingly, the present technique provides electronic devices with faster, more efficient methods and interfaces for managing translations. Such methods and interfaces optionally complement or replace other methods for managing translations. Such methods and interfaces reduce the cognitive burden on a user and produce a more efficient human-machine interface. For battery-operated computing devices, such methods and interfaces conserve power and increase the time between battery charges.

A method is described. The method is performed at a computer system that is in communication with one or more audio devices, one or more input devices, and one or more display generation components. The method comprises: while not operating in a translation mode that automatically detects, via the one or more audio devices, spoken audio and outputs a translation of the detected spoken audio, detecting, via the one or more input devices, a set of one or more inputs to enable the translation mode; and in response to detecting the set of one or more inputs to enable the translation mode, operating in the translation mode that includes, without requiring additional user inputs: detecting, via the one or more audio devices, speech of a conversation of two or more conversation participants, including first speech in a first language and second speech in a second language that is different from the first language; outputting, via the one or more audio devices, an audio translation of the first speech and/or an audio translation of the second speech; and displaying, via the one or more display generation components and concurrently with outputting audio translations of the conversation, a conversation transcript that includes transcriptions of the first speech and the second speech of the conversation of the two or more conversation participants.

A non-transitory computer-readable storage medium is described. The non-transitory computer-readable storage medium stores one or more programs configured to be executed by one or more processors of a computer system that is in communication with one or more audio devices, one or more input devices, and one or more display generation components, the one or more programs including instructions for: while not operating in a translation mode that automatically detects, via the one or more audio devices, spoken audio and outputs a translation of the detected spoken audio, detecting, via the one or more input devices, a set of one or more inputs to enable the translation mode; and in response to detecting the set of one or more inputs to enable the translation mode, operating in the translation mode that includes, without requiring additional user inputs: detecting, via the one or more audio devices, speech of a conversation of two or more conversation participants, including first speech in a first language and second speech in a second language that is different from the first language; outputting, via the one or more audio devices, an audio translation of the first speech and/or an audio translation of the second speech; and displaying, via the one or more display generation components and concurrently with outputting audio translations of the conversation, a conversation transcript that includes transcriptions of the first speech and the second speech of the conversation of the two or more conversation participants.

A transitory computer-readable storage medium is described. The transitory computer-readable storage medium stores one or more programs configured to be executed by one or more processors of a computer system that is in communication with one or more audio devices, one or more input devices, and one or more display generation components, the one or more programs including instructions for: while not operating in a translation mode that automatically detects, via the one or more audio devices, spoken audio and outputs a translation of the detected spoken audio, detecting, via the one or more input devices, a set of one or more inputs to enable the translation mode; and in response to detecting the set of one or more inputs to enable the translation mode, operating in the translation mode that includes, without requiring additional user inputs: detecting, via the one or more audio devices, speech of a conversation of two or more conversation participants, including first speech in a first language and second speech in a second language that is different from the first language; outputting, via the one or more audio devices, an audio translation of the first speech and/or an audio translation of the second speech; and displaying, via the one or more display generation components and concurrently with outputting audio translations of the conversation, a conversation transcript that includes transcriptions of the first speech and the second speech of the conversation of the two or more conversation participants.

A computer system is described. The computer system is configured to communicate with one or more audio devices, one or more input devices, and one or more display generation components, and comprises: one or more processors; and memory storing one or more programs configured to be executed by the one or more processors, the one or more programs including instructions for: while not operating in a translation mode that automatically detects, via the one or more audio devices, spoken audio and outputs a translation of the detected spoken audio, detecting, via the one or more input devices, a set of one or more inputs to enable the translation mode; and in response to detecting the set of one or more inputs to enable the translation mode, operating in the translation mode that includes, without requiring additional user inputs: detecting, via the one or more audio devices, speech of a conversation of two or more conversation participants, including first speech in a first language and second speech in a second language that is different from the first language; outputting, via the one or more audio devices, an audio translation of the first speech and/or an audio translation of the second speech; and displaying, via the one or more display generation components and concurrently with outputting audio translations of the conversation, a conversation transcript that includes transcriptions of the first speech and the second speech of the conversation of the two or more conversation participants.

A computer system is described. The computer system is configured to communicate with one or more audio devices, one or more input devices, and one or more display generation components, and comprises: means, while not operating in a translation mode that automatically detects, via the one or more audio devices, spoken audio and outputs a translation of the detected spoken audio, for detecting, via the one or more input devices, a set of one or more inputs to enable the translation mode; and means, responsive to detecting the set of one or more inputs to enable the translation mode, for operating in the translation mode that includes, without requiring additional user inputs: means for detecting, via the one or more audio devices, speech of a conversation of two or more conversation participants, including first speech in a first language and second speech in a second language that is different from the first language; means for outputting, via the one or more audio devices, an audio translation of the first speech and/or an audio translation of the second speech; and means for displaying, via the one or more display generation components and concurrently with outputting audio translations of the conversation, a conversation transcript that includes transcriptions of the first speech and the second speech of the conversation of the two or more conversation participants.

A computer program product is described. The computer program product comprises one or more programs configured to be executed by one or more processors of a computer system that is in communication with one or more audio devices, one or more input devices, and one or more display generation components, the one or more programs including instructions for: while not operating in a translation mode that automatically detects, via the one or more audio devices, spoken audio and outputs a translation of the detected spoken audio, detecting, via the one or more input devices, a set of one or more inputs to enable the translation mode; and in response to detecting the set of one or more inputs to enable the translation mode, operating in the translation mode that includes, without requiring additional user inputs: detecting, via the one or more audio devices, speech of a conversation of two or more conversation participants, including first speech in a first language and second speech in a second language that is different from the first language; outputting, via the one or more audio devices, an audio translation of the first speech and/or an audio translation of the second speech; and displaying, via the one or more display generation components and concurrently with outputting audio translations of the conversation, a conversation transcript that includes transcriptions of the first speech and the second speech of the conversation of the two or more conversation participants.

A method is described. The method is performed at a computer system that is in communication with one or more audio devices. The method comprises: receiving an input audio stream that includes speech; and while receiving the input audio stream that includes speech: performing speech processing on the input audio stream, including performing speech recognition to produce text that is based on the speech of the input audio stream; determining a location for inserting punctuation within the text, wherein the location is not an end of a sentence; inserting punctuation at the determined location within the text; and prior to detecting an end of a sentence and based on the inserted punctuation at the determined location within the text, beginning outputting, via the one or more audio devices, spoken audio of a first part of the text that is before the inserted punctuation.

A non-transitory computer-readable storage medium is described. The non-transitory computer-readable storage medium stores one or more programs configured to be executed by one or more processors of a computer system that is in communication with one or more audio devices, the one or more programs including instructions for: receiving an input audio stream that includes speech; and while receiving the input audio stream that includes speech: performing speech processing on the input audio stream, including performing speech recognition to produce text that is based on the speech of the input audio stream; determining a location for inserting punctuation within the text, wherein the location is not an end of a sentence; inserting punctuation at the determined location within the text; and prior to detecting an end of a sentence and based on the inserted punctuation at the determined location within the text, beginning outputting, via the one or more audio devices, spoken audio of a first part of the text that is before the inserted punctuation.

A transitory computer-readable storage medium is described. The transitory computer-readable storage medium stores one or more programs configured to be executed by one or more processors of a computer system that is in communication with one or more audio devices, the one or more programs including instructions for: receiving an input audio stream that includes speech; and while receiving the input audio stream that includes speech: performing speech processing on the input audio stream, including performing speech recognition to produce text that is based on the speech of the input audio stream; determining a location for inserting punctuation within the text, wherein the location is not an end of a sentence; inserting punctuation at the determined location within the text; and prior to detecting an end of a sentence and based on the inserted punctuation at the determined location within the text, beginning outputting, via the one or more audio devices, spoken audio of a first part of the text that is before the inserted punctuation.

A computer system is described. The computer system is configured to communicate with one or more audio devices, and comprises: one or more processors; and memory storing one or more programs configured to be executed by the one or more processors, the one or more programs including instructions for: receiving an input audio stream that includes speech; and while receiving the input audio stream that includes speech: performing speech processing on the input audio stream, including performing speech recognition to produce text that is based on the speech of the input audio stream; determining a location for inserting punctuation within the text, wherein the location is not an end of a sentence; inserting punctuation at the determined location within the text; and prior to detecting an end of a sentence and based on the inserted punctuation at the determined location within the text, beginning outputting, via the one or more audio devices, spoken audio of a first part of the text that is before the inserted punctuation.

A computer system is described. The computer system is configured to communicate with one or more audio devices, and comprises: means for receiving an input audio stream that includes speech; and means, while receiving the input audio stream that includes speech, for: performing speech processing on the input audio stream, including performing speech recognition to produce text that is based on the speech of the input audio stream; determining a location for inserting punctuation within the text, wherein the location is not an end of a sentence; inserting punctuation at the determined location within the text; and prior to detecting an end of a sentence and based on the inserted punctuation at the determined location within the text, beginning outputting, via the one or more audio devices, spoken audio of a first part of the text that is before the inserted punctuation.

A computer program product is described. The computer program product comprises one or more programs configured to be executed by one or more processors of a computer system that is in communication with one or more audio devices, the one or more programs including instructions for: receiving an input audio stream that includes speech; and while receiving the input audio stream that includes speech: performing speech processing on the input audio stream, including performing speech recognition to produce text that is based on the speech of the input audio stream; determining a location for inserting punctuation within the text, wherein the location is not an end of a sentence; inserting punctuation at the determined location within the text; and prior to detecting an end of a sentence and based on the inserted punctuation at the determined location within the text, beginning outputting, via the one or more audio devices, spoken audio of a first part of the text that is before the inserted punctuation.

Executable instructions for performing these functions are, optionally, included in a non-transitory computer-readable storage medium or other computer program product configured for execution by one or more processors. Executable instructions for performing these functions are, optionally, included in a transitory computer-readable storage medium or other computer program product configured for execution by one or more processors.

Thus, devices are provided with faster, more efficient methods and interfaces for managing translations, thereby increasing the effectiveness, efficiency, and user satisfaction with such devices. Such methods and interfaces may complement or replace other methods for managing translations.

### DESCRIPTION OF THE FIGURES

For a better understanding of the various described embodiments, reference should be made to the Description of Embodiments below, in conjunction with the following drawings in which like reference numerals refer to corresponding parts throughout the figures.
FIG. 1A is a block diagram illustrating a portable multifunction device with a touch-sensitive display in accordance with some embodiments.
FIG. 1B is a block diagram illustrating exemplary components for event handling in accordance with some embodiments.
FIG. 2 illustrates a portable multifunction device having a touch screen in accordance with some embodiments.
FIG. 3A is a block diagram of an exemplary multifunction device with a display and a touch-sensitive surface in accordance with some embodiments.
FIGS. 3B-3G illustrate the use of Application Programming Interfaces (APIs) to perform operations.
FIG. 4A illustrates an exemplary user interface for a menu of applications on a portable multifunction device in accordance with some embodiments.
FIG. 4B illustrates an exemplary user interface for a multifunction device with a touch-sensitive surface that is separate from the display in accordance with some embodiments.
FIG. 5A illustrates a personal electronic device in accordance with some embodiments.
FIG. 5B is a block diagram illustrating a personal electronic device in accordance with some embodiments.
FIGS. 6A-6Y illustrate exemplary user interfaces for managing translations, in accordance with some embodiments.
FIG. 7 is a flow diagram illustrating methods of managing translations, in accordance with some embodiments.
FIG. 8 is a flow diagram illustrating methods of outputting audio, in accordance with some embodiments.

### DESCRIPTION OF EMBODIMENTS

The following description sets forth exemplary methods, parameters, and the like. It should be recognized, however, that such description is not intended as a limitation on the scope of the present disclosure but is instead provided as a description of exemplary embodiments.

There is a need for electronic devices that provide efficient methods and interfaces for managing translations. For example, it would be advantageous to access both audio and visual versions of translated text or audio. Such techniques can reduce the cognitive burden on a user who accesses translations, thereby enhancing productivity. Further, such techniques can reduce processor and battery power otherwise wasted on redundant user inputs.

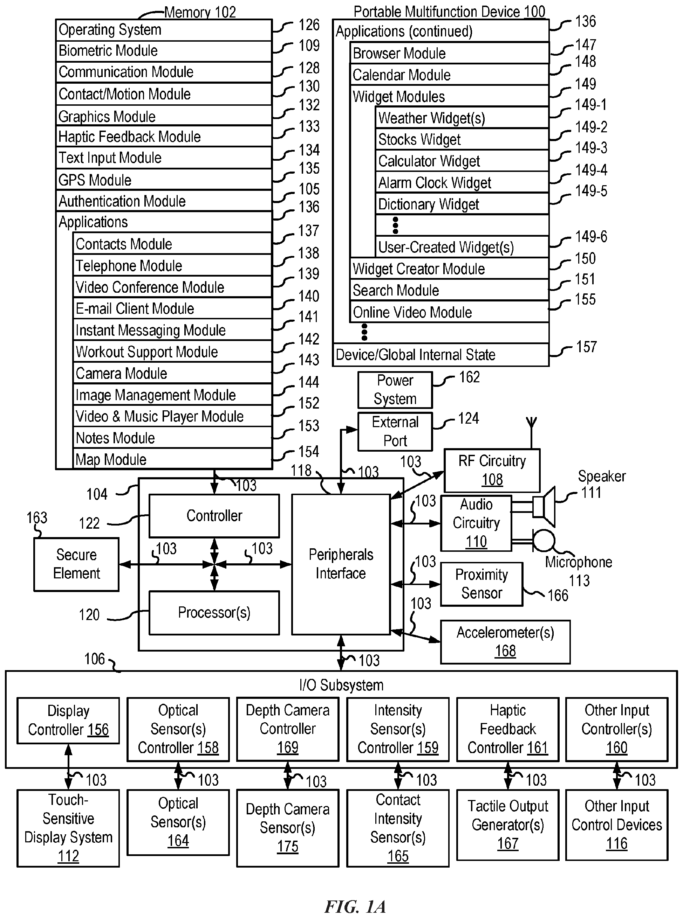

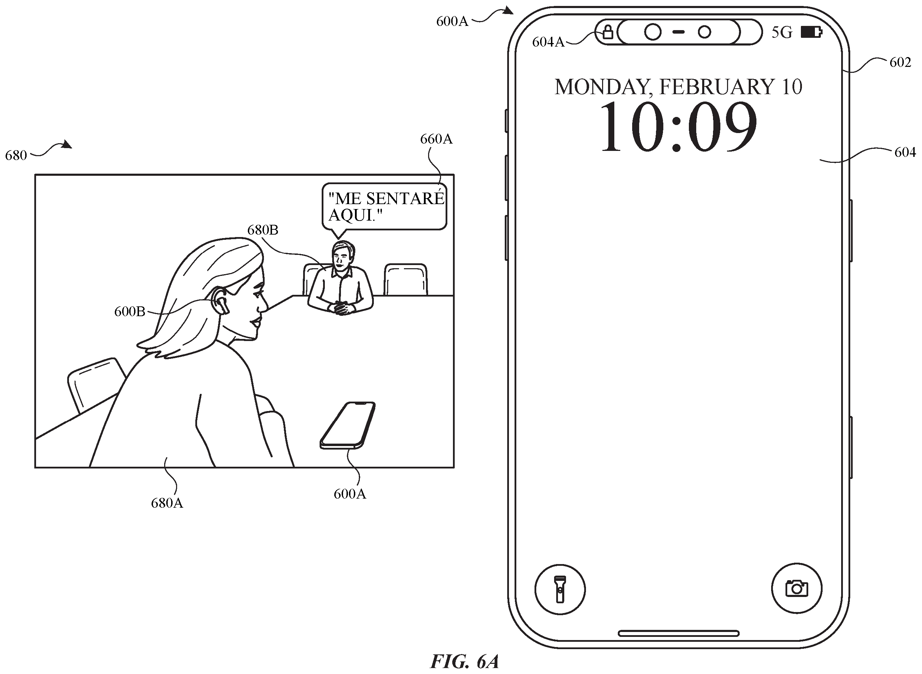

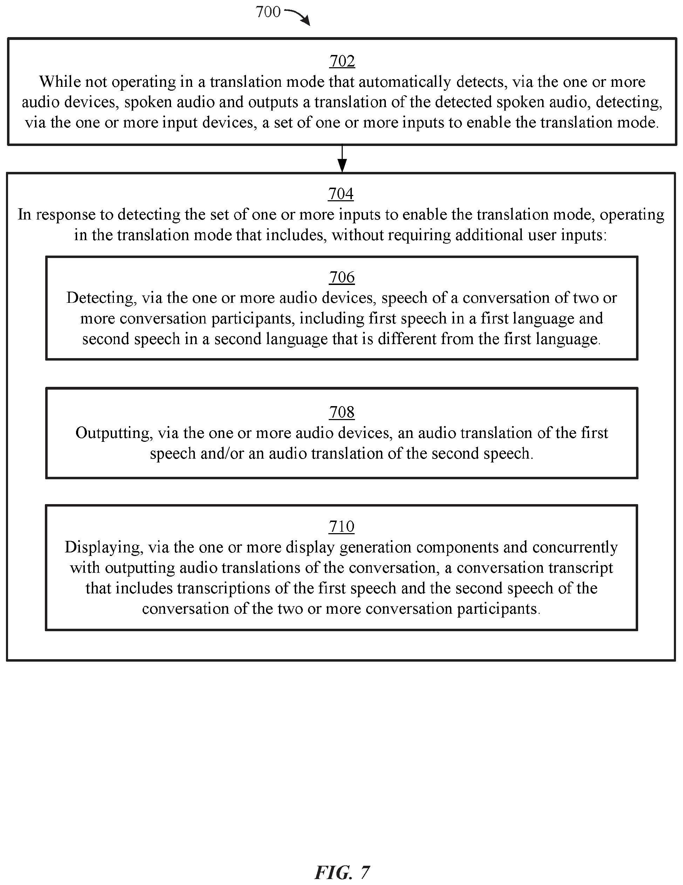

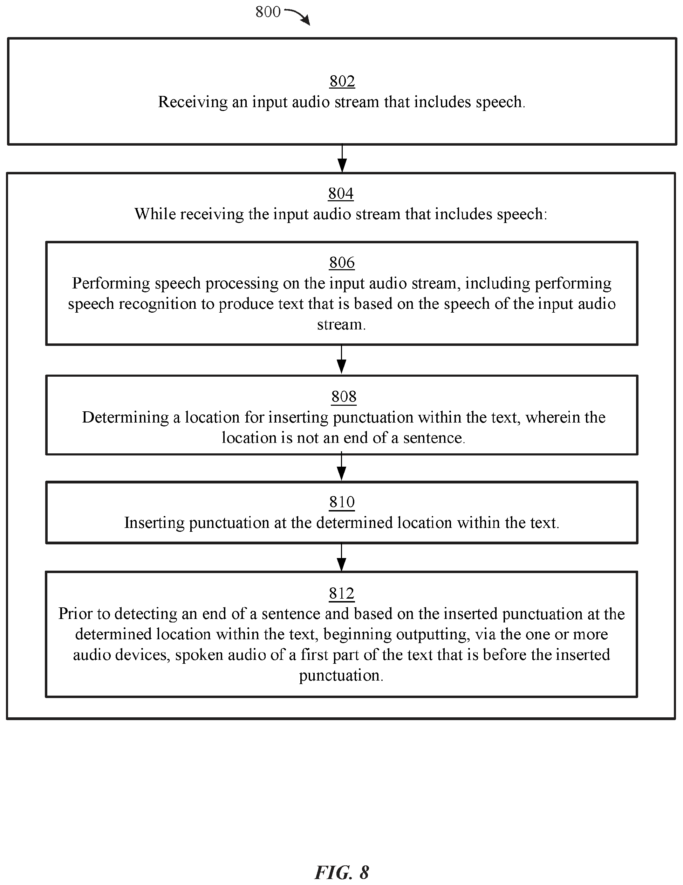

Below, FIGS. 1A-1B, 2, 3A-3G, 4A-4B, and 5A-5B provide a description of exemplary devices for performing the techniques for managing translations. FIGS. 6A-6Y illustrate exemplary user interfaces for managing translations, in accordance with some embodiments. FIG. 7 is a flow diagram illustrating methods of managing translations, in accordance with some embodiments. FIG. 8 is a flow diagram illustrating methods of outputting audio, in accordance with some embodiments. The user interfaces in FIGS. 6A-6Y are used to illustrate the processes described below, including the processes in FIGS. 7 and 8.

The processes described below enhance the operability of the devices and make the user-device interfaces more efficient (e.g., by helping the user to provide proper inputs and reducing user mistakes when operating/interacting with the device) through various techniques, including by providing improved visual feedback to the user, reducing the number of inputs needed to perform an operation, providing additional control options without cluttering the user interface with additional displayed controls, performing an operation when a set of conditions has been met without requiring further user input, and/or additional techniques. These techniques also reduce power usage and improve battery life of the device by enabling the user to use the device more quickly and efficiently.

In addition, in methods described herein where one or more steps are contingent upon one or more conditions having been met, it should be understood that the described method can be repeated in multiple repetitions so that over the course of the repetitions all of the conditions upon which steps in the method are contingent have been met in different repetitions of the method. For example, if a method requires performing a first step if a condition is satisfied, and a second step if the condition is not satisfied, then a person of ordinary skill would appreciate that the claimed steps are repeated until the condition has been both satisfied and not satisfied, in no particular order. Thus, a method described with one or more steps that are contingent upon one or more conditions having been met could be rewritten as a method that is repeated until each of the conditions described in the method has been met. This, however, is not required of system or computer readable medium claims where the system or computer readable medium contains instructions for performing the contingent operations based on the satisfaction of the corresponding one or more conditions and thus is capable of determining whether the contingency has or has not been satisfied without explicitly repeating steps of a method until all of the conditions upon which steps in the method are contingent have been met. A person having ordinary skill in the art would also understand that, similar to a method with contingent steps, a system or computer readable storage medium can repeat the steps of a method as many times as are needed to ensure that all of the contingent steps have been performed.

Although the following description uses terms "first," "second," etc. to describe various elements, these elements should not be limited by the terms. In some embodiments, these terms are used to distinguish one element from another. For example, a first touch could be termed a second touch, and, similarly, a second touch could be termed a first touch, without departing from the scope of the various described embodiments. In some embodiments, the first touch and the second touch are two separate references to the same touch. In some embodiments, the first touch and the second touch are both touches, but they are not the same touch.

As used herein, the phrase "one or more of A and/or B" is construed to include all combinations of A and B, including, but not limited to: A individually without B; B individually without A; as well as a combination of A and B. The phrase "one or more of A, B, and/or C" is construed to include all combinations of A, B, and C, including, but not limited to: A individually without B and C; B individually without A and C; C individually without A and B; as well as any combinations of A, B, and/or C (e.g., A and B without C; A and C without B; B and C without A; and/or A, B, and C). Additionally, as used herein, the phrase "selected from the group consisting of A, B, C, and a combination thereof" and the phrase "at least one of A, B, and C" shall be construed to have the same meaning as the phrase "one or more of A, B, and/or C" as defined above. As used herein, the phrase "at least one of A, B, or C" and "one or more of A, B, or C" shall be construed to have the same meaning as the phrase "one or more of A, B, and/or C" as defined above. As used herein, the phrase "a combination including all of A, B, and C" is construed to include a combination of all the elements listed (e.g., a combination of A, B, and C).

The terminology used in the description of the various described embodiments herein is for the purpose of describing particular embodiments only and is not intended to be limiting. As used in the description of the various described embodiments and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

The term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Embodiments of electronic devices, user interfaces for such devices, and associated processes for using such devices are described. In some embodiments, the device is a portable communications device, such as a mobile telephone, that also contains other functions, such as PDA and/or music player functions. Exemplary embodiments of portable multifunction devices include, without limitation, the iPhone^{®}, iPod Touch^{®}, and iPad^{®} devices from Apple Inc. of Cupertino, California. Other portable electronic devices, such as laptops or tablet computers with touch-sensitive surfaces (e.g., touch screen displays and/or touchpads), are, optionally, used. It should also be understood that, in some embodiments, the device is not a portable communications device, but is a desktop computer with a touch-sensitive surface (e.g., a touch screen display and/or a touchpad). In some embodiments, the electronic device is a computer system that is in communication (e.g., via wireless communication, via wired communication) with a display generation component (e.g., a display device such as a head-mounted display (HMD), a display, a projector, a touch-sensitive display, or other device or component that presents visual content to a user, for example on or in the display generation component itself or produced from the display generation component and visible elsewhere). The display generation component is configured to provide visual output, such as display via a CRT display, display via an LED display, or display via image projection. In some embodiments, the display generation component is integrated with the computer system. In some embodiments, the display generation component is separate from the computer system. As used herein, "displaying" content includes causing to display the content (e.g., video data rendered or decoded by display controller 156) by transmitting, via a wired or wireless connection, data (e.g., image data or video data) to an integrated or external display generation component to visually produce the content.

In the discussion that follows, an electronic device that includes a display and a touch-sensitive surface is described. It should be understood, however, that the electronic device optionally includes one or more other physical user-interface devices, such as a physical keyboard, a mouse, and/or a joystick.

The device typically supports a variety of applications, such as one or more of the following: a drawing application, a presentation application, a word processing application, a website creation application, a disk authoring application, a spreadsheet application, a gaming application, a telephone application, a video conferencing application, an e-mail application, an instant messaging application, a workout support application, a photo management application, a digital camera application, a digital video camera application, a web browsing application, a digital music player application, and/or a digital video player application.

The various applications that are executed on the device optionally use at least one common physical user-interface device, such as the touch-sensitive surface. One or more functions of the touch-sensitive surface as well as corresponding information displayed on the device are, optionally, adjusted and/or varied from one application to the next and/or within a respective application. In this way, a common physical architecture (such as the touch-sensitive surface) of the device optionally supports the variety of applications with user interfaces that are intuitive and transparent to the user.

Attention is now directed toward embodiments of portable devices with touch-sensitive displays. FIG. 1A is a block diagram illustrating portable multifunction device 100 with touch-sensitive display system 112 in accordance with some embodiments. Touch-sensitive display 112 is sometimes called a "touch screen" for convenience and is sometimes known as or called a "touch-sensitive display system." Device 100 includes memory 102 (which optionally includes one or more computer-readable storage media), memory controller 122, one or more processing units (CPUs) 120, peripherals interface 118, RF circuitry 108, audio circuitry 110, speaker 111, microphone 113, input/output (I/O) subsystem 106, other input control devices 116, and external port 124. Device 100 optionally includes one or more optical sensors 164. Device 100 optionally includes one or more contact intensity sensors 165 for detecting intensity of contacts on device 100 (e.g., a touch-sensitive surface such as touch-sensitive display system 112 of device 100). Device 100 optionally includes one or more tactile output generators 167 for generating tactile outputs on device 100 (e.g., generating tactile outputs on a touch-sensitive surface such as touch-sensitive display system 112 of device 100 or touchpad 355 of device 300). These components optionally communicate over one or more communication buses or signal lines 103.

As used in the specification and claims, the term "intensity" of a contact on a touch-sensitive surface refers to the force or pressure (force per unit area) of a contact (e.g., a finger contact) on the touch-sensitive surface, or to a substitute (proxy) for the force or pressure of a contact on the touch-sensitive surface. The intensity of a contact has a range of values that includes at least four distinct values and more typically includes hundreds of distinct values (e.g., at least 256). Intensity of a contact is, optionally, determined (or measured) using various approaches and various sensors or combinations of sensors. For example, one or more force sensors underneath or adjacent to the touch-sensitive surface are, optionally, used to measure force at various points on the touch-sensitive surface. In some implementations, force measurements from multiple force sensors are combined (e.g., a weighted average) to determine an estimated force of a contact. Similarly, a pressure-sensitive tip of a stylus is, optionally, used to determine a pressure of the stylus on the touch-sensitive surface. Alternatively, the size of the contact area detected on the touch-sensitive surface and/or changes thereto, the capacitance of the touch-sensitive surface proximate to the contact and/or changes thereto, and/or the resistance of the touch-sensitive surface proximate to the contact and/or changes thereto are, optionally, used as a substitute for the force or pressure of the contact on the touch-sensitive surface. In some implementations, the substitute measurements for contact force or pressure are used directly to determine whether an intensity threshold has been exceeded (e.g., the intensity threshold is described in units corresponding to the substitute measurements). In some implementations, the substitute measurements for contact force or pressure are converted to an estimated force or pressure, and the estimated force or pressure is used to determine whether an intensity threshold has been exceeded (e.g., the intensity threshold is a pressure threshold measured in units of pressure). Using the intensity of a contact as an attribute of a user input allows for user access to additional device functionality that may otherwise not be accessible by the user on a reduced-size device with limited real estate for displaying affordances (e.g., on a touch-sensitive display) and/or receiving user input (e.g., via a touch-sensitive display, a touch-sensitive surface, or a physical/mechanical control such as a knob or a button).

As used in the specification and claims, the term "tactile output" refers to physical displacement of a device relative to a previous position of the device, physical displacement of a component (e.g., a touch-sensitive surface) of a device relative to another component (e.g., housing) of the device, or displacement of the component relative to a center of mass of the device that will be detected by a user with the user's sense of touch. For example, in situations where the device or the component of the device is in contact with a surface of a user that is sensitive to touch (e.g., a finger, palm, or other part of a user's hand), the tactile output generated by the physical displacement will be interpreted by the user as a tactile sensation corresponding to a perceived change in physical characteristics of the device or the component of the device. For example, movement of a touch-sensitive surface (e.g., a touch-sensitive display or trackpad) is, optionally, interpreted by the user as a "down click" or "up click" of a physical actuator button. In some cases, a user will feel a tactile sensation such as an "down click" or "up click" even when there is no movement of a physical actuator button associated with the touch-sensitive surface that is physically pressed (e.g., displaced) by the user's movements. As another example, movement of the touch-sensitive surface is, optionally, interpreted or sensed by the user as "roughness" of the touch-sensitive surface, even when there is no change in smoothness of the touch-sensitive surface. While such interpretations of touch by a user will be subject to the individualized sensory perceptions of the user, there are many sensory perceptions of touch that are common to a large majority of users. Thus, when a tactile output is described as corresponding to a particular sensory perception of a user (e.g., an "up click," a "down click," "roughness"), unless otherwise stated, the generated tactile output corresponds to physical displacement of the device or a component thereof that will generate the described sensory perception for a typical (or average) user.

It should be appreciated that device 100 is only one example of a portable multifunction device, and that device 100 optionally has more or fewer components than shown, optionally combines two or more components, or optionally has a different configuration or arrangement of the components. The various components shown in FIG. 1A are implemented in hardware, software, or a combination of both hardware and software, including one or more signal processing and/or application-specific integrated circuits.

Memory 102 optionally includes high-speed random access memory and optionally also includes non-volatile memory, such as one or more magnetic disk storage devices, flash memory devices, or other non-volatile solid-state memory devices. Memory controller 122 optionally controls access to memory 102 by other components of device 100.

Peripherals interface 118 can be used to couple input and output peripherals of the device to CPU 120 and memory 102. The one or more processors 120 run or execute various software programs (such as computer programs (e.g., including instructions)) and/or sets of instructions stored in memory 102 to perform various functions for device 100 and to process data. In some embodiments, peripherals interface 118, CPU 120, and memory controller 122 are, optionally, implemented on a single chip, such as chip 104. In some other embodiments, they are, optionally, implemented on separate chips.

RF (radio frequency) circuitry 108 receives and sends RF signals, also called electromagnetic signals. RF circuitry 108 converts electrical signals to/from electromagnetic signals and communicates with communications networks and other communications devices via the electromagnetic signals. RF circuitry 108 optionally includes well-known circuitry for performing these functions, including but not limited to an antenna system, an RF transceiver, one or more amplifiers, a tuner, one or more oscillators, a digital signal processor, a CODEC chipset, a subscriber identity module (SIM) card, memory, and so forth. RF circuitry 108 optionally communicates with networks, such as the Internet, also referred to as the World Wide Web (WWW), an intranet and/or a wireless network, such as a cellular telephone network, a wireless local area network (LAN) and/or a metropolitan area network (MAN), and other devices by wireless communication. The RF circuitry 108 optionally includes well-known circuitry for detecting near field communication (NFC) fields, such as by a short-range communication radio. The wireless communication optionally uses any of a plurality of communications standards, protocols, and technologies, including but not limited to Global System for Mobile Communications (GSM), Enhanced Data GSM Environment (EDGE), high-speed downlink packet access (HSDPA), high-speed uplink packet access (HSUPA), Evolution, Data-Only (EV-DO), HSPA, HSPA+, Dual-Cell HSPA (DC-HSPDA), long term evolution (LTE), near field communication (NFC), wideband code division multiple access (W-CDMA), code division multiple access (CDMA), time division multiple access (TDMA), Bluetooth, Bluetooth Low Energy (BTLE), Wireless Fidelity (Wi-Fi) (e.g., IEEE 802.11a, IEEE 802.11b, IEEE 802.11g, IEEE 802.11n, and/or IEEE 802.11ac), voice over Internet Protocol (VoIP), Wi-MAX, a protocol for e-mail (e.g., Internet message access protocol (IMAP) and/or post office protocol (POP)), instant messaging (e.g., extensible messaging and presence protocol (XMPP), Session Initiation Protocol for Instant Messaging and Presence Leveraging Extensions (SIMPLE), Instant Messaging and Presence Service (IMPS)), and/or Short Message Service (SMS), or any other suitable communication protocol, including communication protocols not yet developed as of the filing date of this document.

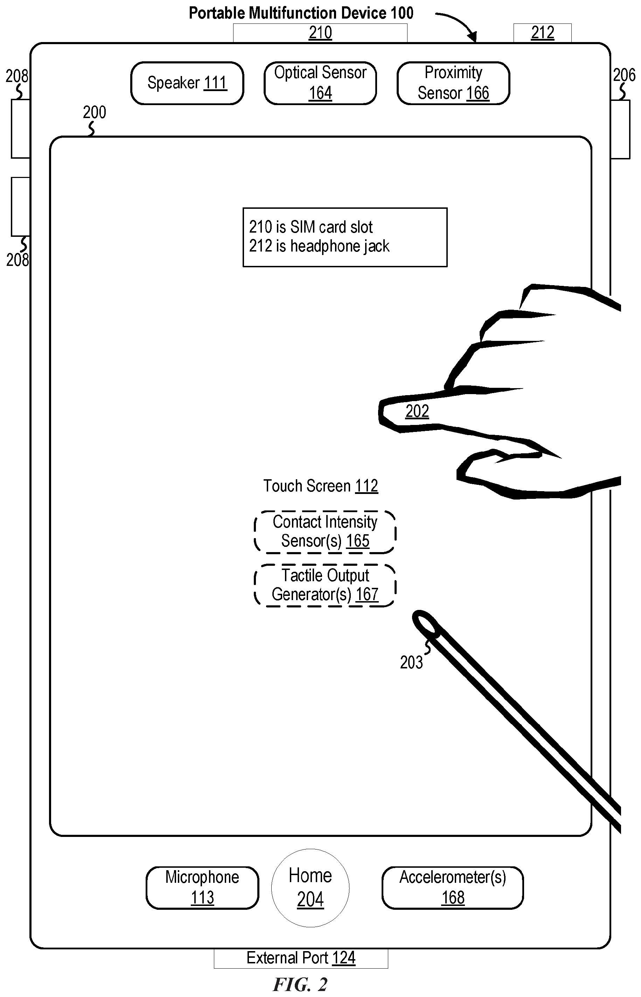

Audio circuitry 110, speaker 111, and microphone 113 provide an audio interface between a user and device 100. Audio circuitry 110 receives audio data from peripherals interface 118, converts the audio data to an electrical signal, and transmits the electrical signal to speaker 111. Speaker 111 converts the electrical signal to human-audible sound waves. Audio circuitry 110 also receives electrical signals converted by microphone 113 from sound waves. Audio circuitry 110 converts the electrical signal to audio data and transmits the audio data to peripherals interface 118 for processing. Audio data is, optionally, retrieved from and/or transmitted to memory 102 and/or RF circuitry 108 by peripherals interface 118. In some embodiments, audio circuitry 110 also includes a headset jack (e.g., 212, FIG. 2). The headset jack provides an interface between audio circuitry 110 and removable audio input/output peripherals, such as output-only headphones or a headset with both output (e.g., a headphone for one or both ears) and input (e.g., a microphone).

I/O subsystem 106 couples input/output peripherals on device 100, such as touch screen 112 and other input control devices 116, to peripherals interface 118. I/O subsystem 106 optionally includes display controller 156, optical sensor controller 158, depth camera controller 169, intensity sensor controller 159, haptic feedback controller 161, and one or more input controllers 160 for other input or control devices. The one or more input controllers 160 receive/send electrical signals from/to other input control devices 116. The other input control devices 116 optionally include physical buttons (e.g., push buttons, rocker buttons, etc.), dials, slider switches, joysticks, click wheels, and so forth. In some embodiments, input controller(s) 160 are, optionally, coupled to any (or none) of the following: a keyboard, an infrared port, a USB port, and a pointer device such as a mouse. The one or more buttons (e.g., 208, FIG. 2) optionally include an up/down button for volume control of speaker 111 and/or microphone 113. The one or more buttons optionally include a push button (e.g., 206, FIG. 2). In some embodiments, the electronic device is a computer system that is in communication (e.g., via wireless communication, via wired communication) with one or more input devices. In some embodiments, the one or more input devices include a touch-sensitive surface (e.g., a trackpad, as part of a touch-sensitive display). In some embodiments, the one or more input devices include one or more camera sensors (e.g., one or more optical sensors 164 and/or one or more depth camera sensors 175), such as for tracking a user's gestures (e.g., hand gestures and/or air gestures) as input. In some embodiments, the one or more input devices are integrated with the computer system. In some embodiments, the one or more input devices are separate from the computer system. In some embodiments, an air gesture is a gesture that is detected without the user touching an input element that is part of the device (or independently of an input element that is a part of the device) and is based on detected motion of a portion of the user's body through the air including motion of the user's body relative to an absolute reference (e.g., an angle of the user's arm relative to the ground or a distance of the user's hand relative to the ground), relative to another portion of the user's body (e.g., movement of a hand of the user relative to a shoulder of the user, movement of one hand of the user relative to another hand of the user, and/or movement of a finger of the user relative to another finger or portion of a hand of the user), and/or absolute motion of a portion of the user's body (e.g., a tap gesture that includes movement of a hand in a predetermined pose by a predetermined amount and/or speed, or a shake gesture that includes a predetermined speed or amount of rotation of a portion of the user's body).

A quick press of the push button optionally disengages a lock of touch screen 112 or optionally begins a process that uses gestures on the touch screen to unlock the device, as described in U.S. Patent Application 11/322,549, "Unlocking a Device by Performing Gestures on an Unlock Image," filed December 23, 2005, U.S. Pat. No. 7,657,849, which is hereby incorporated by reference in its entirety. A longer press of the push button (e.g., 206) optionally turns power to device 100 on or off. The functionality of one or more of the buttons are, optionally, user-customizable. Touch screen 112 is used to implement virtual or soft buttons and one or more soft keyboards.

Touch-sensitive display 112 provides an input interface and an output interface between the device and a user. Display controller 156 receives and/or sends electrical signals from/to touch screen 112. Touch screen 112 displays visual output to the user. The visual output optionally includes graphics, text, icons, video, and any combination thereof (collectively termed "graphics"). In some embodiments, some or all of the visual output optionally corresponds to user-interface objects.

Touch screen 112 has a touch-sensitive surface, sensor, or set of sensors that accepts input from the user based on haptic and/or tactile contact. Touch screen 112 and display controller 156 (along with any associated modules and/or sets of instructions in memory 102) detect contact (and any movement or breaking of the contact) on touch screen 112 and convert the detected contact into interaction with user-interface objects (e.g., one or more soft keys, icons, web pages, or images) that are displayed on touch screen 112. In an exemplary embodiment, a point of contact between touch screen 112 and the user corresponds to a finger of the user.

Touch screen 112 optionally uses LCD (liquid crystal display) technology, LPD (light emitting polymer display) technology, or LED (light emitting diode) technology, although other display technologies are used in other embodiments. Touch screen 112 and display controller 156 optionally detect contact and any movement or breaking thereof using any of a plurality of touch sensing technologies now known or later developed, including but not limited to capacitive, resistive, infrared, and surface acoustic wave technologies, as well as other proximity sensor arrays or other elements for determining one or more points of contact with touch screen 112. In an exemplary embodiment, projected mutual capacitance sensing technology is used, such as that found in the iPhone^{®} and iPod Touch^{®} from Apple Inc. of Cupertino, California.

A touch-sensitive display in some embodiments of touch screen 112 is, optionally, analogous to the multi-touch sensitive touchpads described in the following U.S. Patents: 6,323,846 (Westerman et al.), 6,570,557 (Westerman et al.), and/or 6,677,932 (Westerman), and/or U.S. Patent Publication 2002/0015024A1, each of which is hereby incorporated by reference in its entirety. However, touch screen 112 displays visual output from device 100, whereas touch-sensitive touchpads do not provide visual output.

A touch-sensitive display in some embodiments of touch screen 112 is described in the following applications: (1) U.S. Patent Application No. 11/381,313, "Multipoint Touch Surface Controller," filed May 2, 2006; (2) U.S. Patent Application No. 10/840,862, "Multipoint Touchscreen," filed May 6, 2004; (3) U.S. Patent Application No. 10/903,964, "Gestures For Touch Sensitive Input Devices," filed July 30, 2004; (4) U.S. Patent Application No. 11/048,264, "Gestures For Touch Sensitive Input Devices," filed January 31, 2005; (5) U.S. Patent Application No. 11/038,590, "Mode-Based Graphical User Interfaces For Touch Sensitive Input Devices," filed January 18, 2005; (6) U.S. Patent Application No. 11/228,758, "Virtual Input Device Placement On A Touch Screen User Interface," filed September 16, 2005; (7) U.S. Patent Application No. 11/228,700, "Operation Of A Computer With A Touch Screen Interface," filed September 16, 2005; (8) U.S. Patent Application No. 11/228,737, "Activating Virtual Keys Of A Touch-Screen Virtual Keyboard," filed September 16, 2005; and (9) U.S. Patent Application No. 11/367,749, "Multi-Functional Hand-Held Device," filed March 3, 2006. All of these applications are incorporated by reference herein in their entirety.

Touch screen 112 optionally has a video resolution in excess of 100 dpi. In some embodiments, the touch screen has a video resolution of approximately 160 dpi. The user optionally makes contact with touch screen 112 using any suitable object or appendage, such as a stylus, a finger, and so forth. In some embodiments, the user interface is designed to work primarily with finger-based contacts and gestures, which can be less precise than stylus-based input due to the larger area of contact of a finger on the touch screen. In some embodiments, the device translates the rough finger-based input into a precise pointer/cursor position or command for performing the actions desired by the user.

In some embodiments, in addition to the touch screen, device 100 optionally includes a touchpad for activating or deactivating particular functions. In some embodiments, the touchpad is a touch-sensitive area of the device that, unlike the touch screen, does not display visual output. The touchpad is, optionally, a touch-sensitive surface that is separate from touch screen 112 or an extension of the touch-sensitive surface formed by the touch screen.

Device 100 also includes power system 162 for powering the various components. Power system 162 optionally includes a power management system, one or more power sources (e.g., battery, alternating current (AC)), a recharging system, a power failure detection circuit, a power converter or inverter, a power status indicator (e.g., a light-emitting diode (LED)) and any other components associated with the generation, management and distribution of power in portable devices.

Device 100 optionally also includes secure element 163 for securely storing information. In some embodiments, secure element 163 is a hardware component (e.g., a secure microcontroller chip) configured to securely store data or an algorithm. In some embodiments, secure element 163 provides (e.g., releases) secure information (e.g., payment information (e.g., an account number and/or a transaction-specific dynamic security code), identification information (e.g., credentials of a state-approved digital identification), and/or authentication information (e.g., data generated using a cryptography engine and/or by performing asymmetric cryptography operations)). In some embodiments, secure element 163 provides (or releases) the secure information in response to device 100 receiving authorization, such as a user authentication (e.g., fingerprint authentication; passcode authentication; detecting double-press of a hardware button when device 100 is in an unlocked state, and optionally, while device 100 has been continuously on a user's wrist since device 100 was unlocked by providing authentication credentials to device 100, where the continuous presence of device 100 on the user's wrist is determined by periodically checking that the device is in contact with the user's skin). For example, device 100 detects a fingerprint at a fingerprint sensor (e.g., a fingerprint sensor integrated into a button) of device 100. Device 100 determines whether the detected fingerprint is consistent with an enrolled fingerprint. In accordance with a determination that the fingerprint is consistent with the enrolled fingerprint, secure element 163 provides (e.g., releases) the secure information. In accordance with a determination that the fingerprint is not consistent with the enrolled fingerprint, secure element 163 forgoes providing (e.g., releasing) the secure information.

Device 100 optionally also includes one or more optical sensors 164. FIG. 1A shows an optical sensor coupled to optical sensor controller 158 in I/O subsystem 106. Optical sensor 164 optionally includes charge-coupled device (CCD) or complementary metal-oxide semiconductor (CMOS) phototransistors. Optical sensor 164 receives light from the environment, projected through one or more lenses, and converts the light to data representing an image. In conjunction with imaging module 143 (also called a camera module), optical sensor 164 optionally captures still images or video. In some embodiments, an optical sensor is located on the back of device 100, opposite touch screen display 112 on the front of the device so that the touch screen display is enabled for use as a viewfinder for still and/or video image acquisition. In some embodiments, an optical sensor is located on the front of the device so that the user's image is, optionally, obtained for video conferencing while the user views the other video conference participants on the touch screen display. In some embodiments, the position of optical sensor 164 can be changed by the user (e.g., by rotating the lens and the sensor in the device housing) so that a single optical sensor 164 is used along with the touch screen display for both video conferencing and still and/or video image acquisition.

Device 100 optionally also includes one or more depth camera sensors 175. FIG. 1A shows a depth camera sensor coupled to depth camera controller 169 in I/O subsystem 106. Depth camera sensor 175 receives data from the environment to create a three dimensional model of an object (e.g., a face) within a scene from a viewpoint (e.g., a depth camera sensor). In some embodiments, in conjunction with imaging module 143 (also called a camera module), depth camera sensor 175 is optionally used to determine a depth map of different portions of an image captured by the imaging module 143. In some embodiments, a depth camera sensor is located on the front of device 100 so that the user's image with depth information is, optionally, obtained for video conferencing while the user views the other video conference participants on the touch screen display and to capture selfies with depth map data. In some embodiments, the depth camera sensor 175 is located on the back of device, or on the back and the front of the device 100. In some embodiments, the position of depth camera sensor 175 can be changed by the user (e.g., by rotating the lens and the sensor in the device housing) so that a depth camera sensor 175 is used along with the touch screen display for both video conferencing and still and/or video image acquisition.

Device 100 optionally also includes one or more contact intensity sensors 165. FIG. 1A shows a contact intensity sensor coupled to intensity sensor controller 159 in I/O subsystem 106. Contact intensity sensor 165 optionally includes one or more piezoresistive strain gauges, capacitive force sensors, electric force sensors, piezoelectric force sensors, optical force sensors, capacitive touch-sensitive surfaces, or other intensity sensors (e.g., sensors used to measure the force (or pressure) of a contact on a touch-sensitive surface). Contact intensity sensor 165 receives contact intensity information (e.g., pressure information or a proxy for pressure information) from the environment. In some embodiments, at least one contact intensity sensor is collocated with, or proximate to, a touch-sensitive surface (e.g., touch-sensitive display system 112). In some embodiments, at least one contact intensity sensor is located on the back of device 100, opposite touch screen display 112, which is located on the front of device 100.

Device 100 optionally also includes one or more proximity sensors 166. FIG. 1A shows proximity sensor 166 coupled to peripherals interface 118. Alternately, proximity sensor 166 is, optionally, coupled to input controller 160 in I/O subsystem 106. Proximity sensor 166 optionally performs as described in U.S. Patent Application Nos. 11/241,839, "Proximity Detector In Handheld Device"; 11/240,788, "Proximity Detector In Handheld Device"; 11/620,702, "Using Ambient Light Sensor To Augment Proximity Sensor Output"; 11/586,862, "Automated Response To And Sensing Of User Activity In Portable Devices"; and 11/638,251, "Methods And Systems For Automatic Configuration Of Peripherals," which are hereby incorporated by reference in their entirety. In some embodiments, the proximity sensor turns off and disables touch screen 112 when the multifunction device is placed near the user's ear (e.g., when the user is making a phone call).

Device 100 optionally also includes one or more tactile output generators 167. FIG. 1A shows a tactile output generator coupled to haptic feedback controller 161 in I/O subsystem 106. Tactile output generator 167 optionally includes one or more electroacoustic devices such as speakers or other audio components and/or electromechanical devices that convert energy into linear motion such as a motor, solenoid, electroactive polymer, piezoelectric actuator, electrostatic actuator, or other tactile output generating component (e.g., a component that converts electrical signals into tactile outputs on the device). Contact intensity sensor 165 receives tactile feedback generation instructions from haptic feedback module 133 and generates tactile outputs on device 100 that are capable of being sensed by a user of device 100. In some embodiments, at least one tactile output generator is collocated with, or proximate to, a touch-sensitive surface (e.g., touch-sensitive display system 112) and, optionally, generates a tactile output by moving the touch-sensitive surface vertically (e.g., in/out of a surface of device 100) or laterally (e.g., back and forth in the same plane as a surface of device 100). In some embodiments, at least one tactile output generator sensor is located on the back of device 100, opposite touch screen display 112, which is located on the front of device 100.

Device 100 optionally also includes one or more accelerometers 168. FIG. 1A shows accelerometer 168 coupled to peripherals interface 118. Alternately, accelerometer 168 is, optionally, coupled to an input controller 160 in I/O subsystem 106. Accelerometer 168 optionally performs as described in U.S. Patent Publication No. 20050190059, "Acceleration-based Theft Detection System for Portable Electronic Devices," and U.S. Patent Publication No. 20060017692, "Methods And Apparatuses For Operating A Portable Device Based On An Accelerometer," both of which are incorporated by reference herein in their entirety. In some embodiments, information is displayed on the touch screen display in a portrait view or a landscape view based on an analysis of data received from the one or more accelerometers. Device 100 optionally includes, in addition to accelerometer(s) 168, a magnetometer and a GPS (or GLONASS or other global navigation system) receiver for obtaining information concerning the location and orientation (e.g., portrait or landscape) of device 100.

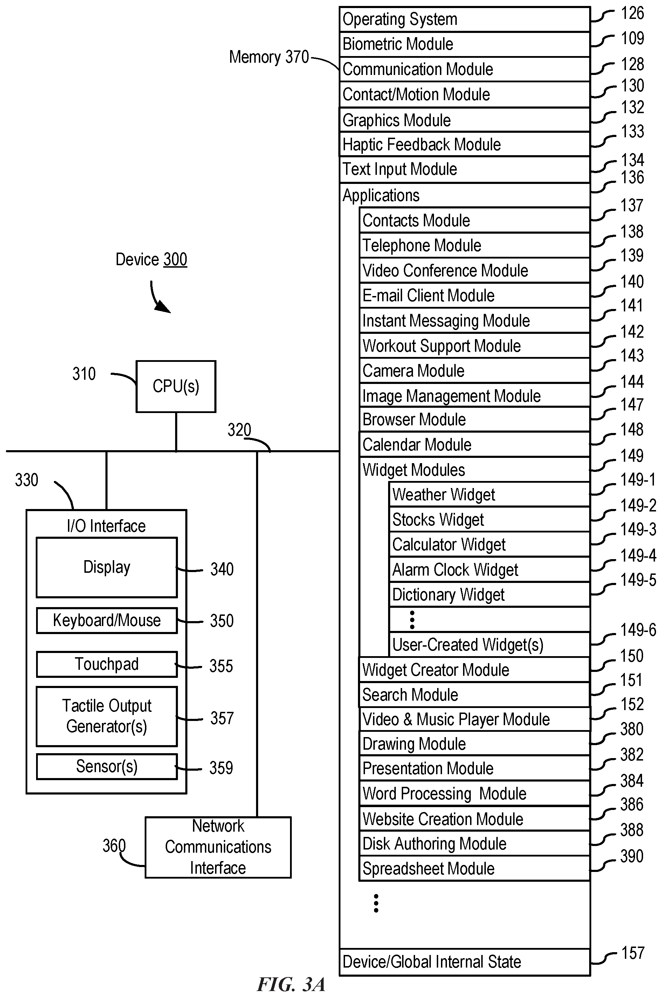

In some embodiments, the software components stored in memory 102 include operating system 126, biometric module 109, communication module (or set of instructions) 128, contact/motion module (or set of instructions) 130, graphics module (or set of instructions) 132, text input module (or set of instructions) 134, Global Positioning System (GPS) module (or set of instructions) 135, authentication module 105, and applications (or sets of instructions) 136. Furthermore, in some embodiments, memory 102 (FIG. 1A) or 370 (FIG. 3A) stores device/global internal state 157, as shown in FIGS. 1A and 3A. Device/global internal state 157 includes one or more of: active application state, indicating which applications, if any, are currently active; display state, indicating what applications, views or other information occupy various regions of touch screen display 112; sensor state, including information obtained from the device's various sensors and input control devices 116; and location information concerning the device's location and/or attitude.

Operating system 126 (e.g., Darwin, RTXC, LINUX, UNIX, OS X, iOS, WINDOWS, or an embedded operating system such as VxWorks) includes various software components and/or drivers for controlling and managing general system tasks (e.g., memory management, storage device control, power management, etc.) and facilitates communication between various hardware and software components.

Communication module 128 facilitates communication with other devices over one or more external ports 124 and also includes various software components for handling data received by RF circuitry 108 and/or external port 124. External port 124 (e.g., Universal Serial Bus (USB), FIREWIRE^{®}, etc.) is adapted for coupling directly to other devices or indirectly over a network (e.g., the Internet, wireless LAN, etc.). In some embodiments, the external port is a multi-pin (e.g., 30-pin) connector that is the same as, or similar to and/or compatible with, the 30-pin connector used on iPod^{®} (trademark of Apple Inc.) devices.

Biometric module 109 optionally stores information about one or more enrolled biometric features (e.g., fingerprint feature information, facial recognition feature information, eye and/or iris feature information) for use to verify whether received biometric information matches the enrolled biometric features. In some embodiments, the information stored about the one or more enrolled biometric features includes data that enables the comparison between the stored information and received biometric information without including enough information to reproduce the enrolled biometric features. In some embodiments, biometric module 109 stores the information about the enrolled biometric features in association with a user account of device 100. In some embodiments, biometric module 109 compares the received biometric information to an enrolled biometric feature to determine whether the received biometric information matches the enrolled biometric feature.

Contact/motion module 130 optionally detects contact with touch screen 112 (in conjunction with display controller 156) and other touch-sensitive devices (e.g., a touchpad or physical click wheel). Contact/motion module 130 includes various software components for performing various operations related to detection of contact, such as determining if contact has occurred (e.g., detecting a finger-down event), determining an intensity of the contact (e.g., the force or pressure of the contact or a substitute for the force or pressure of the contact), determining if there is movement of the contact and tracking the movement across the touch-sensitive surface (e.g., detecting one or more finger-dragging events), and determining if the contact has ceased (e.g., detecting a finger-up event or a break in contact). Contact/motion module 130 receives contact data from the touch-sensitive surface. Determining movement of the point of contact, which is represented by a series of contact data, optionally includes determining speed (magnitude), velocity (magnitude and direction), and/or an acceleration (a change in magnitude and/or direction) of the point of contact. These operations are, optionally, applied to single contacts (e.g., one finger contacts) or to multiple simultaneous contacts (e.g., "multitouch"/multiple finger contacts). In some embodiments, contact/motion module 130 and display controller 156 detect contact on a touchpad.

In some embodiments, contact/motion module 130 uses a set of one or more intensity thresholds to determine whether an operation has been performed by a user (e.g., to determine whether a user has "clicked" on an icon). In some embodiments, at least a subset of the intensity thresholds are determined in accordance with software parameters (e.g., the intensity thresholds are not determined by the activation thresholds of particular physical actuators and can be adjusted without changing the physical hardware of device 100). For example, a mouse "click" threshold of a trackpad or touch screen display can be set to any of a large range of predefined threshold values without changing the trackpad or touch screen display hardware. Additionally, in some implementations, a user of the device is provided with software settings for adjusting one or more of the set of intensity thresholds (e.g., by adjusting individual intensity thresholds and/or by adjusting a plurality of intensity thresholds at once with a system-level click "intensity" parameter).

Contact/motion module 130 optionally detects a gesture input by a user. Different gestures on the touch-sensitive surface have different contact patterns (e.g., different motions, timings, and/or intensities of detected contacts). Thus, a gesture is, optionally, detected by detecting a particular contact pattern. For example, detecting a finger tap gesture includes detecting a finger-down event followed by detecting a finger-up (liftoff) event at the same position (or substantially the same position) as the finger-down event (e.g., at the position of an icon). As another example, detecting a finger swipe gesture on the touch-sensitive surface includes detecting a finger-down event followed by detecting one or more finger-dragging events, and subsequently followed by detecting a finger-up (liftoff) event.

Graphics module 132 includes various known software components for rendering and displaying graphics on touch screen 112 or other display, including components for changing the visual impact (e.g., brightness, transparency, saturation, contrast, or other visual property) of graphics that are displayed. As used herein, the term "graphics" includes any object that can be displayed to a user, including, without limitation, text, web pages, icons (such as user-interface objects including soft keys), digital images, videos, animations, and the like.

In some embodiments, graphics module 132 stores data representing graphics to be used. Each graphic is, optionally, assigned a corresponding code. Graphics module 132 receives, from applications etc., one or more codes specifying graphics to be displayed along with, if necessary, coordinate data and other graphic property data, and then generates screen image data to output to display controller 156.

Haptic feedback module 133 includes various software components for generating instructions used by tactile output generator(s) 167 to produce tactile outputs at one or more locations on device 100 in response to user interactions with device 100.

Text input module 134, which is, optionally, a component of graphics module 132, provides soft keyboards for entering text in various applications (e.g., contacts module 137, e-mail client module 140, IM module 141, browser module 147, and any other application that needs text input).

GPS module 135 determines the location of the device and provides this information for use in various applications (e.g., to telephone module 138 for use in location-based dialing; to camera module 143 as picture/video metadata; and to applications that provide location-based services such as weather widgets, local yellow page widgets, and map/navigation widgets).

Authentication module 105 determines whether a requested operation (e.g., requested by an application of applications 136) is authorized to be performed. In some embodiments, authentication module 105 receives for an operation to be perform that optionally requires authentication. Authentication module 105 determines whether the operation is authorized to be performed, such as based on a series of factors, including the lock status of device 100, the location of device 100, whether a security delay has elapsed, whether received biometric information matches enrolled biometric features, and/or other factors. Once authentication module 105 determines that the operation is authorized to be performed, authentication module 105 triggers performance of the operation.

Applications 136 optionally include the following modules (or sets of instructions), or a subset or superset thereof:
- Contacts module 137 (sometimes called an address book or contact list);
- Telephone module 138;
- Video conference module 139;
- E-mail client module 140;
- Instant messaging (IM) module 141;
- Workout support module 142;
- Camera module 143 for still and/or video images;
- Image management module 144;
- Video player module;
- Music player module;
- Browser module 147;
- Calendar module 148;
- Widget modules 149, which optionally include one or more of: weather widget 149-1, stocks widget 149-2, calculator widget 149-3, alarm clock widget 149-4, dictionary widget 149-5, and other widgets obtained by the user, as well as user-created widgets 149-6;
- Widget creator module 150 for making user-created widgets 149-6;
- Search module 151;
- Video and music player module 152, which merges video player module and music player module;
- Notes module 153;
- Map module 154; and/or
- Online video module 155.

Examples of other applications 136 that are, optionally, stored in memory 102 include other word processing applications, other image editing applications, drawing applications, presentation applications, JAVA-enabled applications, encryption, digital rights management, voice recognition, and voice replication.

In conjunction with touch screen 112, display controller 156, contact/motion module 130, graphics module 132, and text input module 134, contacts module 137 are, optionally, used to manage an address book or contact list (e.g., stored in application internal state 192 of contacts module 137 in memory 102 or memory 370), including: adding name(s) to the address book; deleting name(s) from the address book; associating telephone number(s), e-mail address(es), physical address(es) or other information with a name; associating an image with a name; categorizing and sorting names; providing telephone numbers or e-mail addresses to initiate and/or facilitate communications by telephone module 138, video conference module 139, e-mail client module 140, or IM module 141; and so forth.

In conjunction with RF circuitry 108, audio circuitry 110, speaker 111, microphone 113, touch screen 112, display controller 156, contact/motion module 130, graphics module 132, and text input module 134, telephone module 138 are optionally, used to enter a sequence of characters corresponding to a telephone number, access one or more telephone numbers in contacts module 137, modify a telephone number that has been entered, dial a respective telephone number, conduct a conversation, and disconnect or hang up when the conversation is completed. As noted above, the wireless communication optionally uses any of a plurality of communications standards, protocols, and technologies.

In conjunction with RF circuitry 108, audio circuitry 110, speaker 111, microphone 113, touch screen 112, display controller 156, optical sensor 164, optical sensor controller 158, contact/motion module 130, graphics module 132, text input module 134, contacts module 137, and telephone module 138, video conference module 139 includes executable instructions to initiate, conduct, and terminate a video conference between a user and one or more other participants in accordance with user instructions.

In conjunction with RF circuitry 108, touch screen 112, display controller 156, contact/motion module 130, graphics module 132, and text input module 134, e-mail client module 140 includes executable instructions to create, send, receive, and manage e-mail in response to user instructions. In conjunction with image management module 144, e-mail client module 140 makes it very easy to create and send e-mails with still or video images taken with camera module 143.

In conjunction with RF circuitry 108, touch screen 112, display controller 156, contact/motion module 130, graphics module 132, and text input module 134, the instant messaging module 141 includes executable instructions to enter a sequence of characters corresponding to an instant message, to modify previously entered characters, to transmit a respective instant message (for example, using a Short Message Service (SMS) or Multimedia Message Service (MMS) protocol for telephony-based instant messages or using XMPP, SIMPLE, or IMPS for Internet-based instant messages), to receive instant messages, and to view received instant messages. In some embodiments, transmitted and/or received instant messages optionally include graphics, photos, audio files, video files and/or other attachments as are supported in an MMS and/or an Enhanced Messaging Service (EMS). As used herein, "instant messaging" refers to both telephony-based messages (e.g., messages sent using SMS or MMS) and Internet-based messages (e.g., messages sent using XMPP, SIMPLE, or IMPS).

In conjunction with RF circuitry 108, touch screen 112, display controller 156, contact/motion module 130, graphics module 132, text input module 134, GPS module 135, map module 154, and music player module, workout support module 142 includes executable instructions to create workouts (e.g., with time, distance, and/or calorie burning goals); communicate with workout sensors (sports devices); receive workout sensor data; calibrate sensors used to monitor a workout; select and play music for a workout; and display, store, and transmit workout data.

In conjunction with touch screen 112, display controller 156, optical sensor(s) 164, optical sensor controller 158, contact/motion module 130, graphics module 132, and image management module 144, camera module 143 includes executable instructions to capture still images or video (including a video stream) and store them into memory 102, modify characteristics of a still image or video, or delete a still image or video from memory 102.

In conjunction with touch screen 112, display controller 156, contact/motion module 130, graphics module 132, text input module 134, and camera module 143, image management module 144 includes executable instructions to arrange, modify (e.g., edit), or otherwise manipulate, label, delete, present (e.g., in a digital slide show or album), and store still and/or video images.

In conjunction with RF circuitry 108, touch screen 112, display controller 156, contact/motion module 130, graphics module 132, and text input module 134, browser module 147 includes executable instructions to browse the Internet in accordance with user instructions, including searching, linking to, receiving, and displaying web pages or portions thereof, as well as attachments and other files linked to web pages.

In conjunction with RF circuitry 108, touch screen 112, display controller 156, contact/motion module 130, graphics module 132, text input module 134, e-mail client module 140, and browser module 147, calendar module 148 includes executable instructions to create, display, modify, and store calendars and data associated with calendars (e.g., calendar entries, to-do lists, etc.) in accordance with user instructions.

In conjunction with RF circuitry 108, touch screen 112, display controller 156, contact/motion module 130, graphics module 132, text input module 134, and browser module 147, widget modules 149 are mini-applications that are, optionally, downloaded and used by a user (e.g., weather widget 149-1, stocks widget 149-2, calculator widget 149-3, alarm clock widget 149-4, and dictionary widget 149-5) or created by the user (e.g., user-created widget 149-6). In some embodiments, a widget includes an HTML (Hypertext Markup Language) file, a CSS (Cascading Style Sheets) file, and a JavaScript^{®} file. In some embodiments, a widget includes an XML (Extensible Markup Language) file and a JavaScript^{®} file (e.g., Yahoo!^{®} Widgets).

In conjunction with RF circuitry 108, touch screen 112, display controller 156, contact/motion module 130, graphics module 132, text input module 134, and browser module 147, the widget creator module 150 are, optionally, used by a user to create widgets (e.g., turning a user-specified portion of a web page into a widget).

In conjunction with touch screen 112, display controller 156, contact/motion module 130, graphics module 132, and text input module 134, search module 151 includes executable instructions to search for text, music, sound, image, video, and/or other files in memory 102 that match one or more search criteria (e.g., one or more user-specified search terms) in accordance with user instructions.

In conjunction with touch screen 112, display controller 156, contact/motion module 130, graphics module 132, audio circuitry 110, speaker 111, RF circuitry 108, and browser module 147, video and music player module 152 includes executable instructions that allow the user to download and play back recorded music and other sound files stored in one or more file formats, such as MP3 or AAC files, and executable instructions to display, present, or otherwise play back videos (e.g., on touch screen 112 or on an external, connected display via external port 124). In some embodiments, device 100 optionally includes the functionality of an MP3 player, such as an iPod (trademark of Apple Inc.).

In conjunction with touch screen 112, display controller 156, contact/motion module 130, graphics module 132, and text input module 134, notes module 153 includes executable instructions to create and manage notes, to-do lists, and the like in accordance with user instructions.

In conjunction with RF circuitry 108, touch screen 112, display controller 156, contact/motion module 130, graphics module 132, text input module 134, GPS module 135, and browser module 147, map module 154 are, optionally, used to receive, display, modify, and store maps and data associated with maps (e.g., driving directions, data on stores and other points of interest at or near a particular location, and other location-based data) in accordance with user instructions.

In conjunction with touch screen 112, display controller 156, contact/motion module 130, graphics module 132, audio circuitry 110, speaker 111, RF circuitry 108, text input module 134, e-mail client module 140, and browser module 147, online video module 155 includes instructions that allow the user to access, browse, receive (e.g., by streaming and/or download), play back (e.g., on the touch screen or on an external, connected display via external port 124), send an e-mail with a link to a particular online video, and otherwise manage online videos in one or more file formats, such as H.264. In some embodiments, instant messaging module 141, rather than e-mail client module 140, is used to send a link to a particular online video. Additional description of the online video application can be found in U.S. Provisional Patent Application No. 60/936,562, "Portable Multifunction Device, Method, and Graphical User Interface for Playing Online Videos," filed June 20, 2007, and U.S. Patent Application No. 11/968,067, "Portable Multifunction Device, Method, and Graphical User Interface for Playing Online Videos," filed December 31, 2007, the contents of which are hereby incorporated by reference in their entirety.

Each of the above-identified modules and applications corresponds to a set of executable instructions for performing one or more functions described above and the methods described in this application (e.g., the computer-implemented methods and other information processing methods described herein). These modules (e.g., sets of instructions) need not be implemented as separate software programs (such as computer programs (e.g., including instructions)), procedures, or modules, and thus various subsets of these modules are, optionally, combined or otherwise rearranged in various embodiments. For example, video player module is, optionally, combined with music player module into a single module (e.g., video and music player module 152, FIG. 1A). In some embodiments, memory 102 optionally stores a subset of the modules and data structures identified above. Furthermore, memory 102 optionally stores additional modules and data structures not described above.

In some embodiments, device 100 is a device where operation of a predefined set of functions on the device is performed exclusively through a touch screen and/or a touchpad. By using a touch screen and/or a touchpad as the primary input control device for operation of device 100, the number of physical input control devices (such as push buttons, dials, and the like) on device 100 is, optionally, reduced.

The predefined set of functions that are performed exclusively through a touch screen and/or a touchpad optionally include navigation between user interfaces. In some embodiments, the touchpad, when touched by the user, navigates device 100 to a main, home, or root menu from any user interface that is displayed on device 100. In such embodiments, a "menu button" is implemented using a touchpad. In some other embodiments, the menu button is a physical push button or other physical input control device instead of a touchpad.

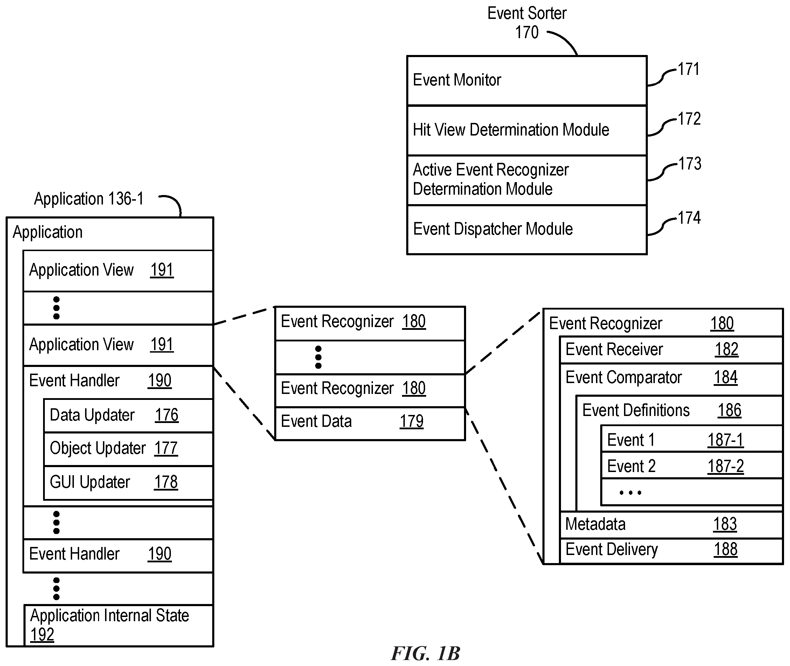

FIG. 1B is a block diagram illustrating exemplary components for event handling in accordance with some embodiments. In some embodiments, memory 102 (FIG. 1A) or 370 (FIG. 3A) includes event sorter 170 (e.g., in operating system 126) and a respective application 136-1 (e.g., any of the aforementioned applications 137-151, 155, 380-390).

Event sorter 170 receives event information and determines the application 136-1 and application view 191 of application 136-1 to which to deliver the event information. Event sorter 170 includes event monitor 171 and event dispatcher module 174. In some embodiments, application 136-1 includes application internal state 192, which indicates the current application view(s) displayed on touch-sensitive display 112 when the application is active or executing. In some embodiments, device/global internal state 157 is used by event sorter 170 to determine which application(s) is (are) currently active, and application internal state 192 is used by event sorter 170 to determine application views 191 to which to deliver event information.

In some embodiments, application internal state 192 includes additional information, such as one or more of: resume information to be used when application 136-1 resumes execution, user interface state information that indicates information being displayed or that is ready for display by application 136-1, a state queue for enabling the user to go back to a prior state or view of application 136-1, and a redo/undo queue of previous actions taken by the user.

Event monitor 171 receives event information from peripherals interface 118. Event information includes information about a sub-event (e.g., a user touch on touch-sensitive display 112, as part of a multi-touch gesture). Peripherals interface 118 transmits information it receives from I/O subsystem 106 or a sensor, such as proximity sensor 166, accelerometer(s) 168, and/or microphone 113 (through audio circuitry 110). Information that peripherals interface 118 receives from I/O subsystem 106 includes information from touch-sensitive display 112 or a touch-sensitive surface.

In some embodiments, event monitor 171 sends requests to the peripherals interface 118 at predetermined intervals. In response, peripherals interface 118 transmits event information. In other embodiments, peripherals interface 118 transmits event information only when there is a significant event (e.g., receiving an input above a predetermined noise threshold and/or for more than a predetermined duration).

In some embodiments, event sorter 170 also includes a hit view determination module 172 and/or an active event recognizer determination module 173.

Hit view determination module 172 provides software procedures for determining where a sub-event has taken place within one or more views when touch-sensitive display 112 displays more than one view. Views are made up of controls and other elements that a user can see on the display.

Another aspect of the user interface associated with an application is a set of views, sometimes herein called application views or user interface windows, in which information is displayed and touch-based gestures occur. The application views (of a respective application) in which a touch is detected optionally correspond to programmatic levels within a programmatic or view hierarchy of the application. For example, the lowest level view in which a touch is detected is, optionally, called the hit view, and the set of events that are recognized as proper inputs are, optionally, determined based, at least in part, on the hit view of the initial touch that begins a touch-based gesture.

Hit view determination module 172 receives information related to sub-events of a touch-based gesture. When an application has multiple views organized in a hierarchy, hit view determination module 172 identifies a hit view as the lowest view in the hierarchy which should handle the sub-event. In most circumstances, the hit view is the lowest level view in which an initiating sub-event occurs (e.g., the first sub-event in the sequence of sub-events that form an event or potential event). Once the hit view is identified by the hit view determination module 172, the hit view typically receives all sub-events related to the same touch or input source for which it was identified as the hit view.

Active event recognizer determination module 173 determines which view or views within a view hierarchy should receive a particular sequence of sub-events. In some embodiments, active event recognizer determination module 173 determines that only the hit view should receive a particular sequence of sub-events. In other embodiments, active event recognizer determination module 173 determines that all views that include the physical location of a sub-event are actively involved views, and therefore determines that all actively involved views should receive a particular sequence of sub-events. In other embodiments, even if touch sub-events were entirely confined to the area associated with one particular view, views higher in the hierarchy would still remain as actively involved views.

Event dispatcher module 174 dispatches the event information to an event recognizer (e.g., event recognizer 180). In embodiments including active event recognizer determination module 173, event dispatcher module 174 delivers the event information to an event recognizer determined by active event recognizer determination module 173. In some embodiments, event dispatcher module 174 stores in an event queue the event information, which is retrieved by a respective event receiver 182.

In some embodiments, operating system 126 includes event sorter 170. Alternatively, application 136-1 includes event sorter 170. In yet other embodiments, event sorter 170 is a stand-alone module, or a part of another module stored in memory 102, such as contact/motion module 130.

In some embodiments, application 136-1 includes a plurality of event handlers 190 and one or more application views 191, each of which includes instructions for handling touch events that occur within a respective view of the application's user interface. Each application view 191 of the application 136-1 includes one or more event recognizers 180. Typically, a respective application view 191 includes a plurality of event recognizers 180. In other embodiments, one or more of event recognizers 180 are part of a separate module, such as a user interface kit or a higher level object from which application 136-1 inherits methods and other properties. In some embodiments, a respective event handler 190 includes one or more of: data updater 176, object updater 177, GUI updater 178, and/or event data 179 received from event sorter 170. Event handler 190 optionally utilizes or calls data updater 176, object updater 177, or GUI updater 178 to update the application internal state 192. Alternatively, one or more of the application views 191 include one or more respective event handlers 190. Also, in some embodiments, one or more of data updater 176, object updater 177, and GUI updater 178 are included in a respective application view 191.

A respective event recognizer 180 receives event information (e.g., event data 179) from event sorter 170 and identifies an event from the event information. Event recognizer 180 includes event receiver 182 and event comparator 184. In some embodiments, event recognizer 180 also includes at least a subset of: metadata 183, and event delivery instructions 188 (which optionally include sub-event delivery instructions).

Event receiver 182 receives event information from event sorter 170. The event information includes information about a sub-event, for example, a touch or a touch movement. Depending on the sub-event, the event information also includes additional information, such as location of the sub-event. When the sub-event concerns motion of a touch, the event information optionally also includes speed and direction of the sub-event. In some embodiments, events include rotation of the device from one orientation to another (e.g., from a portrait orientation to a landscape orientation, or vice versa), and the event information includes corresponding information about the current orientation (also called device attitude) of the device.

Event comparator 184 compares the event information to predefined event or sub-event definitions and, based on the comparison, determines an event or sub-event, or determines or updates the state of an event or sub-event. In some embodiments, event comparator 184 includes event definitions 186. Event definitions 186 contain definitions of events (e.g., predefined sequences of sub-events), for example, event 1 (187-1), event 2 (187-2), and others. In some embodiments, sub-events in an event (e.g., 187-1 and/or 187-2) include, for example, touch begin, touch end, touch movement, touch cancellation, and multiple touching. In one example, the definition for event 1 (187-1) is a double tap on a displayed object. The double tap, for example, comprises a first touch (touch begin) on the displayed object for a predetermined phase, a first liftoff (touch end) for a predetermined phase, a second touch (touch begin) on the displayed object for a predetermined phase, and a second liftoff (touch end) for a predetermined phase. In another example, the definition for event 2 (187-2) is a dragging on a displayed object. The dragging, for example, comprises a touch (or contact) on the displayed object for a predetermined phase, a movement of the touch across touch-sensitive display 112, and liftoff of the touch (touch end). In some embodiments, the event also includes information for one or more associated event handlers 190.

In some embodiments, event definitions 186 include a definition of an event for a respective user-interface object. In some embodiments, event comparator 184 performs a hit test to determine which user-interface object is associated with a sub-event. For example, in an application view in which three user-interface objects are displayed on touch-sensitive display 112, when a touch is detected on touch-sensitive display 112, event comparator 184 performs a hit test to determine which of the three user-interface objects is associated with the touch (sub-event). If each displayed object is associated with a respective event handler 190, the event comparator uses the result of the hit test to determine which event handler 190 should be activated. For example, event comparator 184 selects an event handler associated with the sub-event and the object triggering the hit test.

In some embodiments, the definition for a respective event (187) also includes delayed actions that delay delivery of the event information until after it has been determined whether the sequence of sub-events does or does not correspond to the event recognizer's event type.

When a respective event recognizer 180 determines that the series of sub-events do not match any of the events in event definitions 186, the respective event recognizer 180 enters an event impossible, event failed, or event ended state, after which it disregards subsequent sub-events of the touch-based gesture. In this situation, other event recognizers, if any, that remain active for the hit view continue to track and process sub-events of an ongoing touch-based gesture.

In some embodiments, a respective event recognizer 180 includes metadata 183 with configurable properties, flags, and/or lists that indicate how the event delivery system should perform sub-event delivery to actively involved event recognizers. In some embodiments, metadata 183 includes configurable properties, flags, and/or lists that indicate how event recognizers interact, or are enabled to interact, with one another. In some embodiments, metadata 183 includes configurable properties, flags, and/or lists that indicate whether sub-events are delivered to varying levels in the view or programmatic hierarchy.

In some embodiments, a respective event recognizer 180 activates event handler 190 associated with an event when one or more particular sub-events of an event are recognized. In some embodiments, a respective event recognizer 180 delivers event information associated with the event to event handler 190. Activating an event handler 190 is distinct from sending (and deferred sending) sub-events to a respective hit view. In some embodiments, event recognizer 180 throws a flag associated with the recognized event, and event handler 190 associated with the flag catches the flag and performs a predefined process.

In some embodiments, event delivery instructions 188 include sub-event delivery instructions that deliver event information about a sub-event without activating an event handler. Instead, the sub-event delivery instructions deliver event information to event handlers associated with the series of sub-events or to actively involved views. Event handlers associated with the series of sub-events or with actively involved views receive the event information and perform a predetermined process.

In some embodiments, data updater 176 creates and updates data used in application 136-1. For example, data updater 176 updates the telephone number used in contacts module 137, or stores a video file used in video player module. In some embodiments, object updater 177 creates and updates objects used in application 136-1. For example, object updater 177 creates a new user-interface object or updates the position of a user-interface object. GUI updater 178 updates the GUI. For example, GUI updater 178 prepares display information and sends it to graphics module 132 for display on a touch-sensitive display.

In some embodiments, event handler(s) 190 includes or has access to data updater 176, object updater 177, and GUI updater 178. In some embodiments, data updater 176, object updater 177, and GUI updater 178 are included in a single module of a respective application 136-1 or application view 191. In other embodiments, they are included in two or more software modules.

It shall be understood that the foregoing discussion regarding event handling of user touches on touch-sensitive displays also applies to other forms of user inputs to operate multifunction devices 100 with input devices, not all of which are initiated on touch screens. For example, mouse movement and mouse button presses, optionally coordinated with single or multiple keyboard presses or holds; contact movements such as taps, drags, scrolls, etc. on touchpads; pen stylus inputs; movement of the device; oral instructions; detected eye movements; biometric inputs; and/or any combination thereof are optionally utilized as inputs corresponding to sub-events which define an event to be recognized.

FIG. 2 illustrates a portable multifunction device 100 having a touch screen 112 in accordance with some embodiments. The touch screen optionally displays one or more graphics within user interface (UI) 200. In this embodiment, as well as others described below, a user is enabled to select one or more of the graphics by making a gesture on the graphics, for example, with one or more fingers 202 (not drawn to scale in the figure) or one or more styluses 203 (not drawn to scale in the figure). In some embodiments, selection of one or more graphics occurs when the user breaks contact with the one or more graphics. In some embodiments, the gesture optionally includes one or more taps, one or more swipes (from left to right, right to left, upward and/or downward), and/or a rolling of a finger (from right to left, left to right, upward and/or downward) that has made contact with device 100. In some implementations or circumstances, inadvertent contact with a graphic does not select the graphic. For example, a swipe gesture that sweeps over an application icon optionally does not select the corresponding application when the gesture corresponding to selection is a tap.

Device 100 optionally also include one or more physical buttons, such as "home" or menu button 204. As described previously, menu button 204 is, optionally, used to navigate to any application 136 in a set of applications that are, optionally, executed on device 100. Alternatively, in some embodiments, the menu button is implemented as a soft key in a GUI displayed on touch screen 112.

In some embodiments, device 100 includes touch screen 112, menu button 204, push button 206 for powering the device on/off and locking the device, volume adjustment button(s) 208, subscriber identity module (SIM) card slot 210, headset jack 212, and docking/charging external port 124. Push button 206 is, optionally, used to turn the power on/off on the device by depressing the button and holding the button in the depressed state for a predefined time interval; to lock the device by depressing the button and releasing the button before the predefined time interval has elapsed; and/or to unlock the device or initiate an unlock process. In an alternative embodiment, device 100 also accepts verbal input for activation or deactivation of some functions through microphone 113. Device 100 also, optionally, includes one or more contact intensity sensors 165 for detecting intensity of contacts on touch screen 112 and/or one or more tactile output generators 167 for generating tactile outputs for a user of device 100.

FIG. 3A is a block diagram of an exemplary multifunction device with a display and a touch-sensitive surface in accordance with some embodiments. Device 300 need not be portable. In some embodiments, device 300 is a laptop computer, a desktop computer, a tablet computer, a multimedia player device, a navigation device, an educational device (such as a child's learning toy), a gaming system, or a control device (e.g., a home or industrial controller). Device 300 typically includes one or more processing units (CPUs) 310, one or more network or other communications interfaces 360, memory 370, and one or more communication buses 320 for interconnecting these components. Communication buses 320 optionally include circuitry (sometimes called a chipset) that interconnects and controls communications between system components. Device 300 includes input/output (I/O) interface 330 comprising display 340, which is typically a touch screen display. I/O interface 330 also optionally includes a keyboard and/or mouse (or other pointing device) 350 and touchpad 355, tactile output generator 357 for generating tactile outputs on device 300 (e.g., similar to tactile output generator(s) 167 described above with reference to FIG. 1A), sensors 359 (e.g., optical, acceleration, proximity, touch-sensitive, and/or contact intensity sensors similar to contact intensity sensor(s) 165 described above with reference to FIG. 1A). Memory 370 includes high-speed random access memory, such as DRAM, SRAM, DDR RAM, or other random access solid state memory devices; and optionally includes non-volatile memory, such as one or more magnetic disk storage devices, optical disk storage devices, flash memory devices, or other non-volatile solid state storage devices. Memory 370 optionally includes one or more storage devices remotely located from CPU(s) 310. In some embodiments, memory 370 stores programs, modules, and data structures analogous to the programs, modules, and data structures stored in memory 102 of portable multifunction device 100 (FIG. 1A), or a subset thereof. Furthermore, memory 370 optionally stores additional programs, modules, and data structures not present in memory 102 of portable multifunction device 100. For example, memory 370 of device 300 optionally stores drawing module 380, presentation module 382, word processing module 384, website creation module 386, disk authoring module 388, and/or spreadsheet module 390, while memory 102 of portable multifunction device 100 (FIG. 1A) optionally does not store these modules.

Each of the above-identified elements in FIG. 3A is, optionally, stored in one or more of the previously mentioned memory devices. Each of the above-identified modules corresponds to a set of instructions for performing a function described above. The above-identified modules or computer programs (e.g., sets of instructions or including instructions) need not be implemented as separate software programs (such as computer programs (e.g., including instructions)), procedures, or modules, and thus various subsets of these modules are, optionally, combined or otherwise rearranged in various embodiments. In some embodiments, memory 370 optionally stores a subset of the modules and data structures identified above. Furthermore, memory 370 optionally stores additional modules and data structures not described above.

Implementations within the scope of the present disclosure can be partially or entirely realized using a tangible computer-readable storage medium (or multiple tangible computer-readable storage media of one or more types) encoding one or more computer-readable instructions. It should be recognized that computer-readable instructions can be organized in any format, including applications, widgets, processes, software, and/or components.

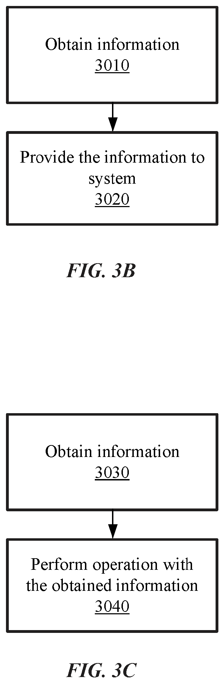

Implementations within the scope of the present disclosure include a computer-readable storage medium that encodes instructions organized as an application (e.g., application 3160) that, when executed by one or more processing units, control an electronic device (e.g., device 3150) to perform the method of FIG. 3B, the method of FIG. 3C, and/or one or more other processes and/or methods described herein.

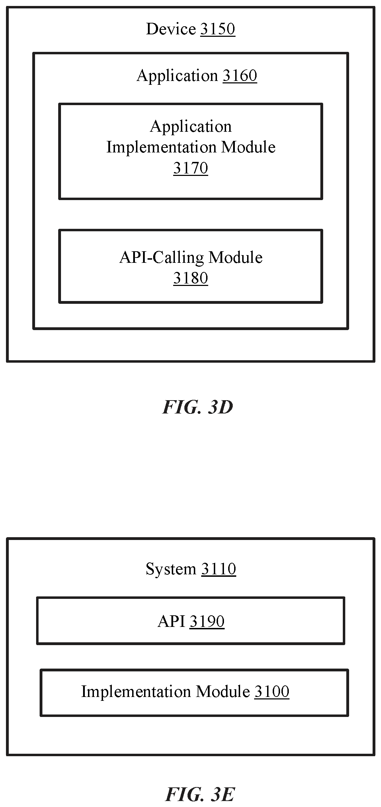

It should be recognized that application 3160 (shown in FIG. 3D) can be any suitable type of application, including, for example, one or more of: a browser application, an application that functions as an execution environment for plug-ins, widgets or other applications, a fitness application, a health application, a digital payments application, a media application, a social network application, a messaging application, and/or a maps application. In some embodiments, application 3160 is an application that is pre-installed on device 3150 at purchase (e.g., a first-party application). In some embodiments, application 3160 is an application that is provided to device 3150 via an operating system update file (e.g., a first-party application or a second-party application). In some embodiments, application 3160 is an application that is provided via an application store. In some embodiments, the application store can be an application store that is pre-installed on device 3150 at purchase (e.g., a first-party application store). In some embodiments, the application store is a third-party application store (e.g., an application store that is provided by another application store, downloaded via a network, and/or read from a storage device).

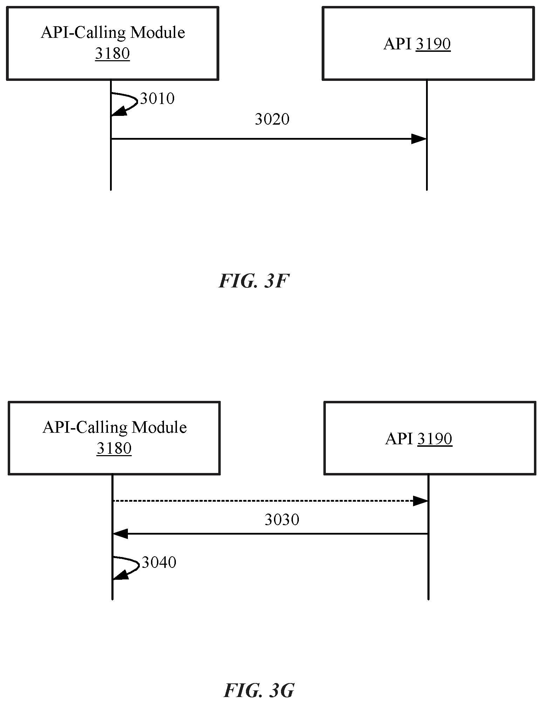

Referring to FIG. 3B and FIG. 3F, application 3160 obtains information (e.g., 3010). In some embodiments, at 3010, information is obtained from at least one hardware component of device 3150. In some embodiments, at 3010, information is obtained from at least one software module of device 3150. In some embodiments, at 3010, information is obtained from at least one hardware component external to device 3150 (e.g., a peripheral device, an accessory device, and/or a server). In some embodiments, the information obtained at 3010 includes positional information, time information, notification information, user information, environment information, electronic device state information, weather information, media information, historical information, event information, hardware information, and/or motion information. In some embodiments, in response to and/or after obtaining the information at 3010, application 3160 provides the information to a system (e.g., 3020).

In some embodiments, the system (e.g., 3110 shown in FIG. 3E) is an operating system hosted on device 3150. In some embodiments, the system (e.g., 3110 shown in FIG. 3E) is an external device (e.g., a server, a peripheral device, an accessory, and/or a personal computing device) that includes an operating system.

Referring to FIG. 3C and FIG. 3G, application 3160 obtains information (e.g., 3030). In some embodiments, the information obtained at 3030 includes positional information, time information, notification information, user information, environment information electronic device state information, weather information, media information, historical information, event information, hardware information, and/or motion information. In response to and/or after obtaining the information at 3030, application 3160 performs an operation with the information (e.g., 3040). In some embodiments, the operation performed at 3040 includes: providing a notification based on the information, sending a message based on the information, displaying the information, controlling a user interface of a fitness application based on the information, controlling a user interface of a health application based on the information, controlling a focus mode based on the information, setting a reminder based on the information, adding a calendar entry based on the information, and/or calling an API of system 3110 based on the information.

In some embodiments, one or more steps of the method of FIG. 3B and/or the method of FIG. 3C is performed in response to a trigger. In some embodiments, the trigger includes detection of an event, a notification received from system 3110, a user input, and/or a response to a call to an API provided by system 3110.

In some embodiments, the instructions of application 3160, when executed, control device 3150 to perform the method of FIG. 3B and/or the method of FIG. 3C by calling an application programming interface (API) (e.g., API 3190) provided by system 3110. In some embodiments, application 3160 performs at least a portion of the method of FIG. 3B and/or the method of FIG. 3C without calling API 3190.

In some embodiments, one or more steps of the method of FIG. 3B and/or the method of FIG. 3C includes calling an API (e.g., API 3190) using one or more parameters defined by the API. In some embodiments, the one or more parameters include a constant, a key, a data structure, an object, an object class, a variable, a data type, a pointer, an array, a list or a pointer to a function or method, and/or another way to reference a data or other item to be passed via the API.

Referring to FIG. 3D, device 3150 is illustrated. In some embodiments, device 3150 is a personal computing device, a smart phone, a smart watch, a fitness tracker, a head mounted display (HMD) device, a media device, a communal device, a speaker, a television, and/or a tablet. As illustrated in FIG. 3D, device 3150 includes application 3160 and an operating system (e.g., system 3110 shown in FIG. 3E). Application 3160 includes application implementation module 3170 and API-calling module 3180. System 3110 includes API 3190 and implementation module 3100. It should be recognized that device 3150, application 3160, and/or system 3110 can include more, fewer, and/or different components than illustrated in FIGS. 3D and 3E.

In some embodiments, application implementation module 3170 includes a set of one or more instructions corresponding to one or more operations performed by application 3160. For example, when application 3160 is a messaging application, application implementation module 3170 can include operations to receive and send messages. In some embodiments, application implementation module 3170 communicates with API-calling module 3180 to communicate with system 3110 via API 3190 (shown in FIG. 3E).

In some embodiments, API 3190 is a software module (e.g., a collection of computer-readable instructions) that provides an interface that allows a different module (e.g., API-calling module 3180) to access and/or use one or more functions, methods, procedures, data structures, classes, and/or other services provided by implementation module 3100 of system 3110. For example, API-calling module 3180 can access a feature of implementation module 3100 through one or more API calls or invocations (e.g., embodied by a function or a method call) exposed by API 3190 (e.g., a software and/or hardware module that can receive API calls, respond to API calls, and/or send API calls) and can pass data and/or control information using one or more parameters via the API calls or invocations. In some embodiments, API 3190 allows application 3160 to use a service provided by a Software Development Kit (SDK) library. In some embodiments, application 3160 incorporates a call to a function or method provided by the SDK library and provided by API 3190 or uses data types or objects defined in the SDK library and provided by API 3190. In some embodiments, API-calling module 3180 makes an API call via API 3190 to access and use a feature of implementation module 3100 that is specified by API 3190. In such embodiments, implementation module 3100 can return a value via API 3190 to API-calling module 3180 in response to the API call. The value can report to application 3160 the capabilities or state of a hardware component of device 3150, including those related to aspects such as input capabilities and state, output capabilities and state, processing capability, power state, storage capacity and state, and/or communications capability. In some embodiments, API 3190 is implemented in part by firmware, microcode, or other low level logic that executes in part on the hardware component.

In some embodiments, API 3190 allows a developer of API-calling module 3180 (which can be a third-party developer) to leverage a feature provided by implementation module 3100. In such embodiments, there can be one or more API-calling modules (e.g., including API-calling module 3180) that communicate with implementation module 3100. In some embodiments, API 3190 allows multiple API-calling modules written in different programming languages to communicate with implementation module 3100 (e.g., API 3190 can include features for translating calls and returns between implementation module 3100 and API-calling module 3180) while API 3190 is implemented in terms of a specific programming language. In some embodiments, API-calling module 3180 calls APIs from different providers such as a set of APIs from an OS provider, another set of APIs from a plug-in provider, and/or another set of APIs from another provider (e.g., the provider of a software library) or creator of the another set of APIs.

Examples of API 3190 can include one or more of: a pairing API (e.g., for establishing secure connection, e.g., with an accessory), a device detection API (e.g., for locating nearby devices, e.g., media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a WiFi API, a Bluetooth API, an NFC API, a UWB API, a fitness API, a smart home API, contact transfer API, photos API, camera API, and/or image processing API. In some embodiments, the sensor API is an API for accessing data associated with a sensor of device 3150. For example, the sensor API can provide access to raw sensor data. For another example, the sensor API can provide data derived (and/or generated) from the raw sensor data. In some embodiments, the sensor data includes temperature data, image data, video data, audio data, heart rate data, IMU (inertial measurement unit) data, lidar data, location data, GPS data, and/or camera data. In some embodiments, the sensor includes one or more of an accelerometer, temperature sensor, infrared sensor, optical sensor, heartrate sensor, barometer, gyroscope, proximity sensor, temperature sensor, and/or biometric sensor.

In some embodiments, implementation module 3100 is a system (e.g., operating system and/or server system) software module (e.g., a collection of computer-readable instructions) that is constructed to perform an operation in response to receiving an API call via API 3190. In some embodiments, implementation module 3100 is constructed to provide an API response (via API 3190) as a result of processing an API call. By way of example, implementation module 3100 and API-calling module 3180 can each be any one of an operating system, a library, a device driver, an API, an application program, or other module. It should be understood that implementation module 3100 and API-calling module 3180 can be the same or different type of module from each other. In some embodiments, implementation module 3100 is embodied at least in part in firmware, microcode, or hardware logic.

In some embodiments, implementation module 3100 returns a value through API 3190 in response to an API call from API-calling module 3180. While API 3190 defines the syntax and result of an API call (e.g., how to invoke the API call and what the API call does), API 3190 might not reveal how implementation module 3100 accomplishes the function specified by the API call. Various API calls are transferred via the one or more application programming interfaces between API-calling module 3180 and implementation module 3100. Transferring the API calls can include issuing, initiating, invoking, calling, receiving, returning, and/or responding to the function calls or messages. In other words, transferring can describe actions by either of API-calling module 3180 or implementation module 3100. In some embodiments, a function call or other invocation of API 3190 sends and/or receives one or more parameters through a parameter list or other structure.

In some embodiments, implementation module 3100 provides more than one API, each providing a different view of or with different aspects of functionality implemented by implementation module 3100. For example, one API of implementation module 3100 can provide a first set of functions and can be exposed to third-party developers, and another API of implementation module 3100 can be hidden (e.g., not exposed) and provide a subset of the first set of functions and also provide another set of functions, such as testing or debugging functions which are not in the first set of functions. In some embodiments, implementation module 3100 calls one or more other components via an underlying API and thus is both an API-calling module and an implementation module. It should be recognized that implementation module 3100 can include additional functions, methods, classes, data structures, and/or other features that are not specified through API 3190 and are not available to API-calling module 3180. It should also be recognized that API-calling module 3180 can be on the same system as implementation module 3100 or can be located remotely and access implementation module 3100 using API 3190 over a network. In some embodiments, implementation module 3100, API 3190, and/or API-calling module 3180 is stored in a machine-readable medium, which includes any mechanism for storing information in a form readable by a machine (e.g., a computer or other data processing system). For example, a machine-readable medium can include magnetic disks, optical disks, random access memory; read only memory, and/or flash memory devices.

An application programming interface (API) is an interface between a first software process and a second software process that specifies a format for communication between the first software process and the second software process. Limited APIs (e.g., private APIs or partner APIs) are APIs that are accessible to a limited set of software processes (e.g., only software processes within an operating system or only software processes that are approved to access the limited APIs). Public APIs that are accessible to a wider set of software processes. Some APIs enable software processes to communicate about or set a state of one or more input devices (e.g., one or more touch sensors, proximity sensors, visual sensors, motion/orientation sensors, pressure sensors, intensity sensors, sound sensors, wireless proximity sensors, biometric sensors, buttons, switches, rotatable elements, and/or external controllers). Some APIs enable software processes to communicate about and/or set a state of one or more output generation components (e.g., one or more audio output generation components, one or more display generation components, and/or one or more tactile output generation components). Some APIs enable particular capabilities (e.g., scrolling, handwriting, text entry, image editing, and/or image creation) to be accessed, performed, and/or used by a software process (e.g., generating outputs for use by a software process based on input from the software process). Some APIs enable content from a software process to be inserted into a template and displayed in a user interface that has a layout and/or behaviors that are specified by the template.

Many software platforms include a set of frameworks that provides the core objects and core behaviors that a software developer needs to build software applications that can be used on the software platform. Software developers use these objects to display content onscreen, to interact with that content, and to manage interactions with the software platform. Software applications rely on the set of frameworks for their basic behavior, and the set of frameworks provides many ways for the software developer to customize the behavior of the application to match the specific needs of the software application. Many of these core objects and core behaviors are accessed via an API. An API will typically specify a format for communication between software processes, including specifying and grouping available variables, functions, and protocols. An API call (sometimes referred to as an API request) will typically be sent from a sending software process to a receiving software process as a way to accomplish one or more of the following: the sending software process requesting information from the receiving software process (e.g., for the sending software process to take action on), the sending software process providing information to the receiving software process (e.g., for the receiving software process to take action on), the sending software process requesting action by the receiving software process, or the sending software process providing information to the receiving software process about action taken by the sending software process. Interaction with a device (e.g., using a user interface) will in some circumstances include the transfer and/or receipt of one or more API calls (e.g., multiple API calls) between multiple different software processes (e.g., different portions of an operating system, an application and an operating system, or different applications) via one or more APIs (e.g., via multiple different APIs). For example, when an input is detected the direct sensor data is frequently processed into one or more input events that are provided (e.g., via an API) to a receiving software process that makes some determination based on the input events, and then sends (e.g., via an API) information to a software process to perform an operation (e.g., change a device state and/or user interface) based on the determination. While a determination and an operation performed in response could be made by the same software process, alternatively the determination could be made in a first software process and relayed (e.g., via an API) to a second software process, that is different from the first software process, that causes the operation to be performed by the second software process. Alternatively, the second software process could relay instructions (e.g., via an API) to a third software process that is different from the first software process and/or the second software process to perform the operation. It should be understood that some or all user interactions with a computer system could involve one or more API calls within a step of interacting with the computer system (e.g., between different software components of the computer system or between a software component of the computer system and a software component of one or more remote computer systems). It should be understood that some or all user interactions with a computer system could involve one or more API calls between steps of interacting with the computer system (e.g., between different software components of the computer system or between a software component of the computer system and a software component of one or more remote computer systems).

In some embodiments, the application can be any suitable type of application, including, for example, one or more of: a browser application, an application that functions as an execution environment for plug-ins, widgets or other applications, a fitness application, a health application, a digital payments application, a media application, a social network application, a messaging application, and/or a maps application.

In some embodiments, the application is an application that is pre-installed on the first computer system at purchase (e.g., a first-party application). In some embodiments, the application is an application that is provided to the first computer system via an operating system update file (e.g., a first-party application). In some embodiments, the application is an application that is provided via an application store. In some embodiments, the application store is pre-installed on the first computer system at purchase (e.g., a first-party application store) and allows download of one or more applications. In some embodiments, the application store is a third-party application store (e.g., an application store that is provided by another device, downloaded via a network, and/or read from a storage device). In some embodiments, the application is a third-party application (e.g., an app that is provided by an application store, downloaded via a network, and/or read from a storage device). In some embodiments, the application controls the first computer system to perform method 700 and/or 800 (e.g., FIGS. 7 and/or 8) by calling an application programming interface (API) provided by the system process using one or more parameters.

In some embodiments, exemplary APIs provided by the system process include one or more of: a pairing API (e.g., for establishing secure connection, e.g., with an accessory), a device detection API (e.g., for locating nearby devices, e.g., media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a WiFi API, a Bluetooth API, an NFC API, a UWB API, a fitness API, a smart home API, contact transfer API, a photos API, a camera API, and/or an image processing API.

In some embodiments, at least one API is a software module (e.g., a collection of computer-readable instructions) that provides an interface that allows a different module (e.g., API-calling module 3180) to access and use one or more functions, methods, procedures, data structures, classes, and/or other services provided by an implementation module of the system process. The API can define one or more parameters that are passed between the API-calling module and the implementation module. In some embodiments, API 3190 defines a first API call that can be provided by API-calling module 3180. The implementation module is a system software module (e.g., a collection of computer-readable instructions) that is constructed to perform an operation in response to receiving an API call via the API. In some embodiments, the implementation module is constructed to provide an API response (via the API) as a result of processing an API call. In some embodiments, the implementation module is included in the device (e.g., 3150) that runs the application. In some embodiments, the implementation module is included in an electronic device that is separate from the device that runs the application.

Attention is now directed towards embodiments of user interfaces that are, optionally, implemented on, for example, portable multifunction device 100.

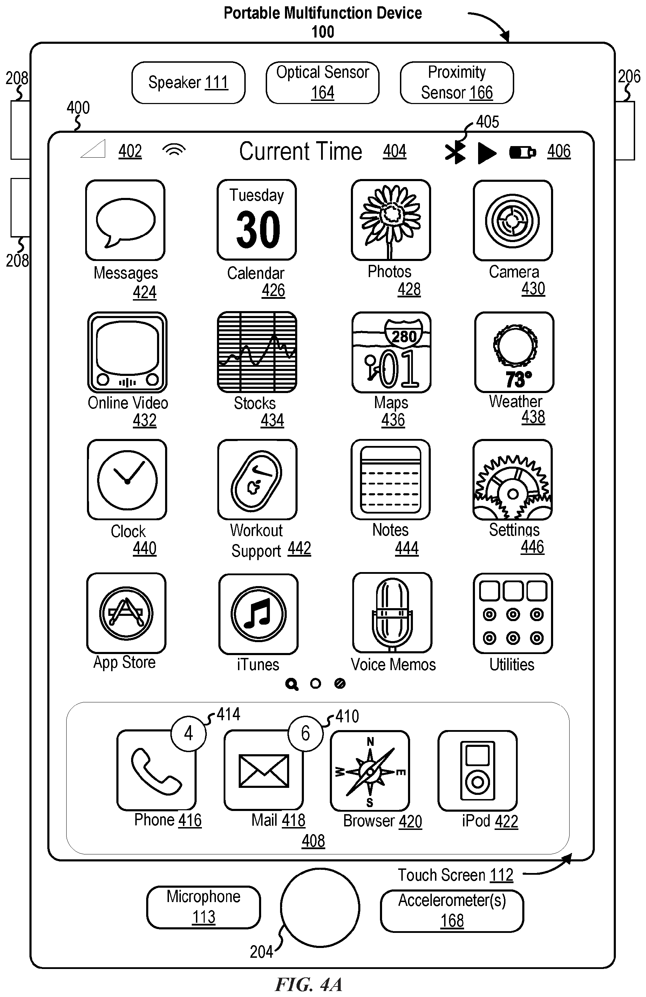

FIG. 4A illustrates an exemplary user interface for a menu of applications on portable multifunction device 100 in accordance with some embodiments. Similar user interfaces are, optionally, implemented on device 300. In some embodiments, user interface 400 includes the following elements, or a subset or superset thereof:
- Signal strength indicator(s) 402 for wireless communication(s), such as cellular and Wi-Fi signals;
- Time 404;
- Bluetooth indicator 405;
- Battery status indicator 406;
- Tray 408 with icons for frequently used applications, such as:
   ∘ Icon 416 for telephone module 138, labeled "Phone," which optionally includes an indicator 414 of the number of missed calls or voicemail messages;
   ∘ Icon 418 for e-mail client module 140, labeled "Mail," which optionally includes an indicator 410 of the number of unread e-mails;
   ∘ Icon 420 for browser module 147, labeled "Browser;" and
   ∘ Icon 422 for video and music player module 152, also referred to as iPod (trademark of Apple Inc.) module 152, labeled "iPod;" and
- Icons for other applications, such as:
   ∘ Icon 424 for IM module 141, labeled "Messages;"
   ∘ Icon 426 for calendar module 148, labeled "Calendar;"
   ∘ Icon 428 for image management module 144, labeled "Photos;"
   ∘ Icon 430 for camera module 143, labeled "Camera;"
   ∘ Icon 432 for online video module 155, labeled "Online Video;"
   ∘ Icon 434 for stocks widget 149-2, labeled "Stocks;"
   ∘ Icon 436 for map module 154, labeled "Maps;"
   ∘ Icon 438 for weather widget 149-1, labeled "Weather;"
   ∘ Icon 440 for alarm clock widget 149-4, labeled "Clock;"
   ∘ Icon 442 for workout support module 142, labeled "Workout Support;"
   ∘ Icon 444 for notes module 153, labeled "Notes;" and
   ∘ Icon 446 for a settings application or module, labeled "Settings," which provides access to settings for device 100 and its various applications 136.

It should be noted that the icon labels illustrated in FIG. 4A are merely exemplary. For example, icon 422 for video and music player module 152 is labeled "Music" or "Music Player." Other labels are, optionally, used for various application icons. In some embodiments, a label for a respective application icon includes a name of an application corresponding to the respective application icon. In some embodiments, a label for a particular application icon is distinct from a name of an application corresponding to the particular application icon.

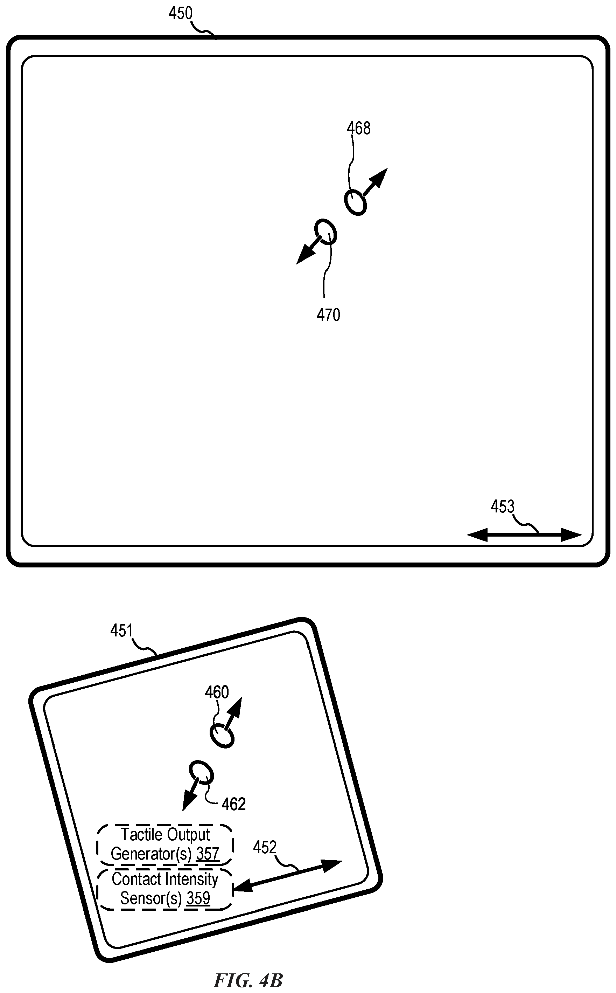

FIG. 4B illustrates an exemplary user interface on a device (e.g., device 300, FIG. 3A) with a touch-sensitive surface 451 (e.g., a tablet or touchpad 355, FIG. 3A) that is separate from the display 450 (e.g., touch screen display 112). Device 300 also, optionally, includes one or more contact intensity sensors (e.g., one or more of sensors 359) for detecting intensity of contacts on touch-sensitive surface 451 and/or one or more tactile output generators 357 for generating tactile outputs for a user of device 300.

Although some of the examples that follow will be given with reference to inputs on touch screen display 112 (where the touch-sensitive surface and the display are combined), in some embodiments, the device detects inputs on a touch-sensitive surface that is separate from the display, as shown in FIG. 4B. In some embodiments, the touch-sensitive surface (e.g., touch-sensitive surface 451 in FIG. 4B) has a primary axis (e.g., 452 in FIG. 4B) that corresponds to a primary axis (e.g., 453 in FIG. 4B) on the display (e.g., display 450). In accordance with these embodiments, the device detects contacts (e.g., contact 460 and contact 462 in FIG. 4B) with the touch-sensitive surface 451 at locations that correspond to respective locations on the display (e.g., in FIG. 4B, contact 460 corresponds to 468 and contact 462 corresponds to 470). In this way, user inputs (e.g., contacts 460 and 462, and movements thereof) detected by the device on the touch-sensitive surface (e.g., touch-sensitive surface 451 in FIG. 4B) are used by the device to manipulate the user interface on the display (e.g., display 450 in FIG. 4B) of the multifunction device when the touch-sensitive surface is separate from the display. It should be understood that similar methods are, optionally, used for other user interfaces described herein.

Additionally, while the following examples are given primarily with reference to finger inputs (e.g., finger contacts, finger tap gestures, finger swipe gestures), it should be understood that, in some embodiments, one or more of the finger inputs are replaced with input from another input device (e.g., a mouse-based input or stylus input). For example, a swipe gesture is, optionally, replaced with a mouse click (e.g., instead of a contact) followed by movement of the cursor along the path of the swipe (e.g., instead of movement of the contact). As another example, a tap gesture is, optionally, replaced with a mouse click while the cursor is located over the location of the tap gesture (e.g., instead of detection of the contact followed by ceasing to detect the contact). Similarly, when multiple user inputs are simultaneously detected, it should be understood that multiple computer mice are, optionally, used simultaneously, or a mouse and finger contacts are, optionally, used simultaneously.

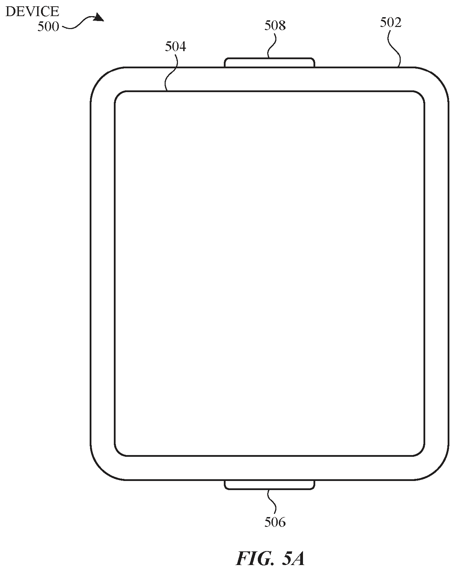

FIG. 5A illustrates exemplary personal electronic device 500. Device 500 includes body 502. In some embodiments, device 500 can include some or all of the features described with respect to devices 100 and 300 (e.g., FIGS. 1A-4B). In some embodiments, device 500 has touch-sensitive display screen 504, hereafter touch screen 504. Alternatively, or in addition to touch screen 504, device 500 has a display and a touch-sensitive surface. As with devices 100 and 300, in some embodiments, touch screen 504 (or the touch-sensitive surface) optionally includes one or more intensity sensors for detecting intensity of contacts (e.g., touches) being applied. The one or more intensity sensors of touch screen 504 (or the touch-sensitive surface) can provide output data that represents the intensity of touches. The user interface of device 500 can respond to touches based on their intensity, meaning that touches of different intensities can invoke different user interface operations on device 500.

Exemplary techniques for detecting and processing touch intensity are found, for example, in related applications: International Patent Application Serial No. PCT/US2013/040061, titled "Device, Method, and Graphical User Interface for Displaying User Interface Objects Corresponding to an Application," filed May 8, 2013, published as WIPO Publication No. WO/2013/169849, and International Patent Application Serial No. PCT/US2013/069483, titled "Device, Method, and Graphical User Interface for Transitioning Between Touch Input to Display Output Relationships," filed November 11, 2013, published as WIPO Publication No. WO/2014/105276, each of which is hereby incorporated by reference in their entirety.

In some embodiments, device 500 has one or more input mechanisms 506 and 508. Input mechanisms 506 and 508, if included, can be physical. Examples of physical input mechanisms include push buttons and rotatable mechanisms. In some embodiments, device 500 has one or more attachment mechanisms. Such attachment mechanisms, if included, can permit attachment of device 500 with, for example, hats, eyewear, earrings, necklaces, shirts, jackets, bracelets, watch straps, chains, trousers, belts, shoes, purses, backpacks, and so forth. These attachment mechanisms permit device 500 to be worn by a user.

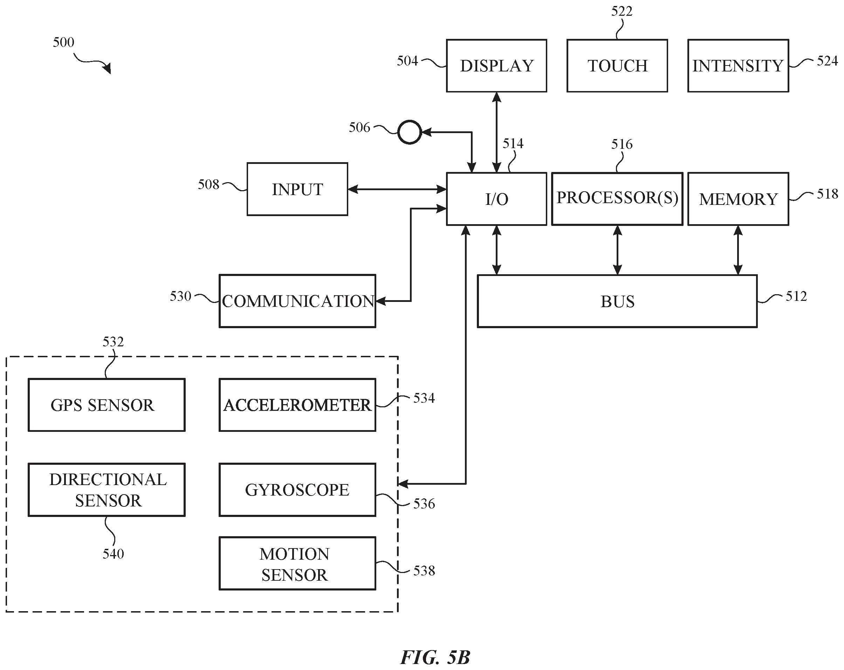

FIG. 5B depicts exemplary personal electronic device 500. In some embodiments, device 500 can include some or all of the components described with respect to FIGS. 1A, 1B, and 3A. Device 500 has bus 512 that operatively couples I/O section 514 with one or more computer processors 516 and memory 518. I/O section 514 can be connected to display screen 504, which can have touch-sensitive component 522 and, optionally, intensity sensor 524 (e.g., contact intensity sensor). In addition, I/O section 514 can be connected with communication unit 530 for receiving application and operating system data, using Wi-Fi, Bluetooth, near field communication (NFC), cellular, and/or other wireless communication techniques. Device 500 can include input mechanisms 506 and/or 508. Input mechanism 506 is, optionally, a rotatable input device or a depressible and rotatable input device, for example. Input mechanism 508 is, optionally, a button, in some examples.

Input mechanism 508 is, optionally, a microphone, in some examples. Personal electronic device 500 optionally includes various sensors, such as GPS sensor 532, accelerometer 534, directional sensor 540 (e.g., compass), gyroscope 536, motion sensor 538, and/or a combination thereof, all of which can be operatively connected to I/O section 514.

Memory 518 of personal electronic device 500 can include one or more non-transitory computer-readable storage media, for storing computer-executable instructions, which, when executed by one or more computer processors 516, for example, can cause the computer processors to perform the techniques described below, including processes 700-800 (e.g., FIGS. 7-8). A computer-readable storage medium can be any medium that can tangibly contain or store computer-executable instructions for use by or in connection with the instruction execution system, apparatus, or device. In some examples, the storage medium is a transitory computer-readable storage medium. In some examples, the storage medium is a non-transitory computer-readable storage medium. The non-transitory computer-readable storage medium can include, but is not limited to, magnetic, optical, and/or semiconductor storages. Examples of such storage include magnetic disks, optical discs based on CD, DVD, or Blu-ray^{®} technologies, as well as persistent solid-state memory such as flash, solid-state drives, and the like. Personal electronic device 500 is not limited to the components and configuration of FIG. 5B, but can include other or additional components in multiple configurations.

As used here, the term "affordance" refers to a user-interactive graphical user interface object that is, optionally, displayed on the display screen of devices 100, 300, and/or 500 (FIGS. 1A, 3A, and 5A-5B). For example, an image (e.g., icon), a button, and text (e.g., hyperlink) each optionally constitute an affordance.

As used herein, the term "focus selector" refers to an input element that indicates a current part of a user interface with which a user is interacting. In some implementations that include a cursor or other location marker, the cursor acts as a "focus selector" so that when an input (e.g., a press input) is detected on a touch-sensitive surface (e.g., touchpad 355 in FIG. 3A or touch-sensitive surface 451 in FIG. 4B) while the cursor is over a particular user interface element (e.g., a button, window, slider, or other user interface element), the particular user interface element is adjusted in accordance with the detected input. In some implementations that include a touch screen display (e.g., touch-sensitive display system 112 in FIG. 1A or touch screen 112 in FIG. 4A) that enables direct interaction with user interface elements on the touch screen display, a detected contact on the touch screen acts as a "focus selector" so that when an input (e.g., a press input by the contact) is detected on the touch screen display at a location of a particular user interface element (e.g., a button, window, slider, or other user interface element), the particular user interface element is adjusted in accordance with the detected input. In some implementations, focus is moved from one region of a user interface to another region of the user interface without corresponding movement of a cursor or movement of a contact on a touch screen display (e.g., by using a tab key or arrow keys to move focus from one button to another button); in these implementations, the focus selector moves in accordance with movement of focus between different regions of the user interface. Without regard to the specific form taken by the focus selector, the focus selector is generally the user interface element (or contact on a touch screen display) that is controlled by the user so as to communicate the user's intended interaction with the user interface (e.g., by indicating, to the device, the element of the user interface with which the user is intending to interact). For example, the location of a focus selector (e.g., a cursor, a contact, or a selection box) over a respective button while a press input is detected on the touch-sensitive surface (e.g., a touchpad or touch screen) will indicate that the user is intending to activate the respective button (as opposed to other user interface elements shown on a display of the device).

As used in the specification and claims, the term "characteristic intensity" of a contact refers to a characteristic of the contact based on one or more intensities of the contact. In some embodiments, the characteristic intensity is based on multiple intensity samples. The characteristic intensity is, optionally, based on a predefined number of intensity samples, or a set of intensity samples collected during a predetermined time period (e.g., 0.05, 0.1, 0.2, 0.5, 1, 2, 5, 10 seconds) relative to a predefined event (e.g., after detecting the contact, prior to detecting liftoff of the contact, before or after detecting a start of movement of the contact, prior to detecting an end of the contact, before or after detecting an increase in intensity of the contact, and/or before or after detecting a decrease in intensity of the contact). A characteristic intensity of a contact is, optionally, based on one or more of: a maximum value of the intensities of the contact, a mean value of the intensities of the contact, an average value of the intensities of the contact, a top 10 percentile value of the intensities of the contact, a value at the half maximum of the intensities of the contact, a value at the 90 percent maximum of the intensities of the contact, or the like. In some embodiments, the duration of the contact is used in determining the characteristic intensity (e.g., when the characteristic intensity is an average of the intensity of the contact over time). In some embodiments, the characteristic intensity is compared to a set of one or more intensity thresholds to determine whether an operation has been performed by a user. For example, the set of one or more intensity thresholds optionally includes a first intensity threshold and a second intensity threshold. In this example, a contact with a characteristic intensity that does not exceed the first threshold results in a first operation, a contact with a characteristic intensity that exceeds the first intensity threshold and does not exceed the second intensity threshold results in a second operation, and a contact with a characteristic intensity that exceeds the second threshold results in a third operation. In some embodiments, a comparison between the characteristic intensity and one or more thresholds is used to determine whether or not to perform one or more operations (e.g., whether to perform a respective operation or forgo performing the respective operation), rather than being used to determine whether to perform a first operation or a second operation.

In some embodiments, the computer system is in a locked state or an unlocked state. In the locked state, the computer system is powered on and operational but is prevented from performing a predefined set of operations in response to user input. The predefined set of operations optionally includes navigation between user interfaces, activation or deactivation of a predefined set of functions, and activation or deactivation of certain applications. The locked state can be used to prevent unintentional or unauthorized use of some functionality of the computer system or activation or deactivation of some functions on the computer system. In some embodiments, in the unlocked state, the computer system is powered on and operational and is not prevented from performing at least a portion of the predefined set of operations that cannot be performed while in the locked state. When the computer system is in the locked state, the computer system is said to be locked. When the computer system is in the unlocked state, the computer is said to be unlocked. In some embodiments, the computer system in the locked state optionally responds to a limited set of user inputs, including input that corresponds to an attempt to transition the computer system to the unlocked state or input that corresponds to powering the computer system off.

Attention is now directed towards embodiments of user interfaces ("UI") and associated processes that are implemented on an electronic device, such as portable multifunction device 100, device 300, or device 500.

FIGS. 6A-6Y illustrate exemplary user interfaces for managing translations, in accordance with some embodiments. The user interfaces in these figures are used to illustrate the processes described below, including the processes in FIGS. 7 and 8.

FIG. 6A illustrates scene 680, including user 680A of computer system 600. Computer system 600 includes phone 600A and earphones 600B. Scene 680 shows two people, user 680A and person 680B, sitting at the same table. User 680A is a user of computer system 600 (e.g., is logged into computer system 600 using a user account, owns computer system 600, and/or is wearing a component of computer system 600). Person 680B is not logged into computer system 600, does not own computer system 600, and/or is not wearing a component of computer system 600. User 680A speaks and understands a first language (e.g., English) and has limited ability to (e.g., does not) speak and understand a second language (e.g., Spanish). Person 680B speaks and understands the second language (e.g., Spanish) and has limited ability to (e.g., does not) speak and understand the first language (e.g., English). As illustrated throughout FIGS. 6A-6Y, although user 680A and person 680B do not share a common language, computer system 600 facilitates a conversation between user 680A and person 680B. Scene 680 is not part of a displayed user interface, but is illustrated for ease of understanding of the described techniques. User 680A is wearing earphones 600B, which are in wireless communication with phone 600A of user 680A. In some embodiments, phone 600A has been configured by user 680A to operate a virtual assistant using a first language (e.g., English), such that the virtual assistant outputs responses to commands in the first language. In some embodiments, phone 600A has been configured (e.g., based on input from user 680A) to translate between the first language and a second language, such as by downloading language information corresponding to the first language and/or the second language from on online source. Phone 600A is in a locked state, as optionally indicated by display of lock indicator 604A and lock screen user interface 604 via display 602. In some embodiments, phone 600A remains locked throughout the translation process, as illustrated in FIGS. 6A-6Y. In some embodiments, phone 600A is unlocked throughout a portion of or all of the translation process.

As described in greater detail below, in some embodiments, while computer system 600 is not in a translation mode, computer system 600 does not output (e.g., via audio speakers and via displays) translations of speech. For example, microphones of computer system 600 are not enabled to allow computer system 600 to detect speech, computer system 600 does not translate detected speech, and/or computer system 600 does not output translated speech. Once computer system 600 is in the translation mode (e.g., in response to detecting a corresponding user request), computer system 600 automatically detects speech (e.g., of both user 680A and other persons, such as person 680B) and outputs corresponding translations via one or more of speakers of earphones 600B, speakers of phone 600A, and/or display of phone 600A (e.g., without requiring or receiver additional user inputs). Thus, computer system 600 detects the request to operate in the translation mode, users 680A and person 680B can participate in a multi-language conversation without the need to provide extraneous user inputs at computer system 600. In some embodiments, the speech is detected using one or more microphones of earphones 600B and/or one or more microphones of phone 600A.

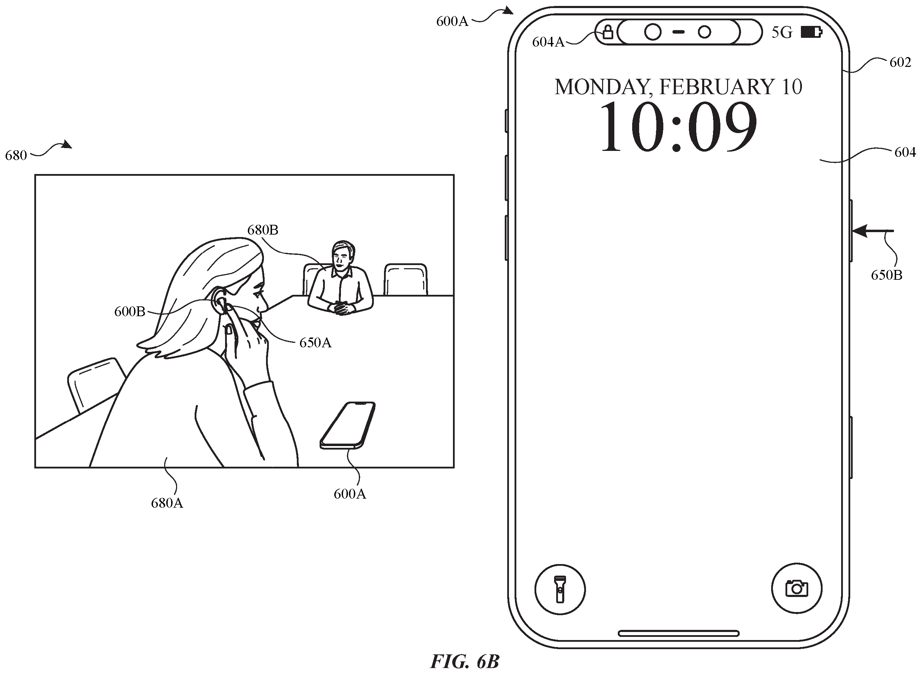

At FIG. 6A, phone 600A is not operating in a translation mode (e.g., the translation mode is disabled and/or has not been enabled). Person 680B speaks (e.g., 660A), but computer system 600 does not detect the audio, does not transcribe the audio, and/or does not output a transcription/translation of the speech because computer system 600 not operating in the translation mode. Accordingly, at FIG. 6B, phone 600A continues to display lock screen user interface 604 via display 602. Similarly, because computer system 600 is not operating in the translation mode, computer system 600 also does not translate and/or output translations of speech of user 680A.

At FIG. 6B, computer system 600 detects a request to enable the translation mode, such as input 650A (e.g., a touch input and/or an air gesture) directed to earphones 600B and/or input 650B (e.g., a button press and/or a touch input) directed to phone 600A.

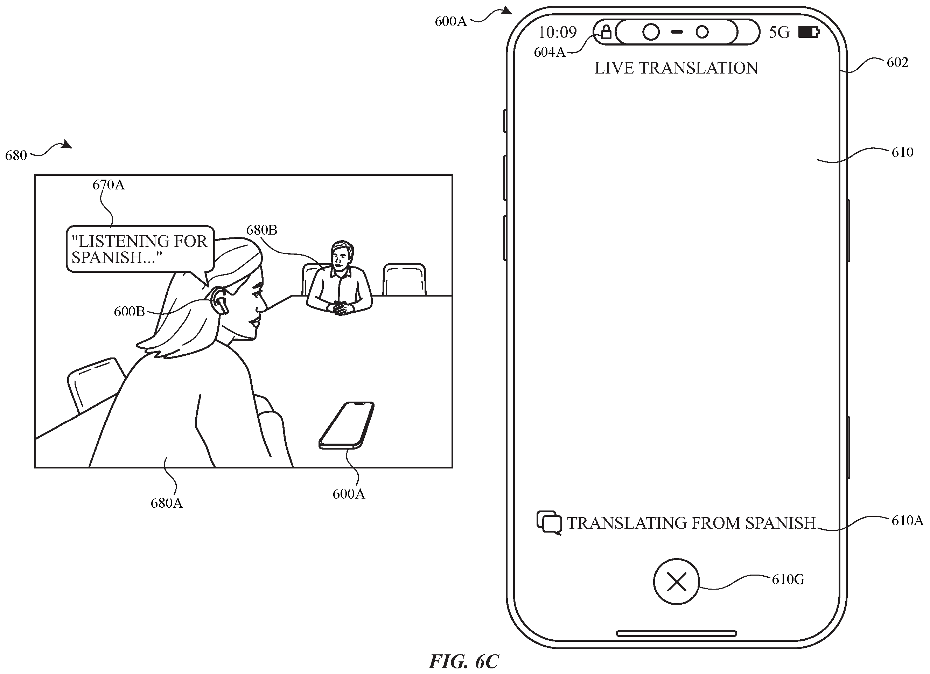

At FIG. 6C, in response to detecting the request (e.g., input 650A and/or 650B) to enable the translation mode, computer system 600 begins operating in the translation mode (and remains in the translation mode throughout FIGS. 6C-6Y). In some embodiments, in response to detecting the request (e.g., input 650A and/or 650B) to enable the translation mode, computer system 600 outputs audio 670A via (e.g., one or more speakers of) earphones 600B (e.g., without outputting the audio via one or more speakers of phone 600A) indicating a language (e.g., the second language, such as Spanish) that computer system 600 will translate speech from when detected from remote persons, such as person 680B. For example, computer system 600 outputs audio that computer system 600 is listening for Spanish speech to translate to the first language. In some embodiments, as shown in FIG. 6C, in response to detecting the request (e.g., input 650A and/or 650B) to enable the translation mode, computer system 600 displays, via display 602, conversation transcript user interface 610 (e.g., by replacing display of lock screen user interface 604 and, optionally, continuing to display lock indicator 604A). For example, conversation transcript user interface 610 includes indication 610A of the second language that computer system 600 will translate speech from when speech in that language is detected from remote persons, such as person 680B.

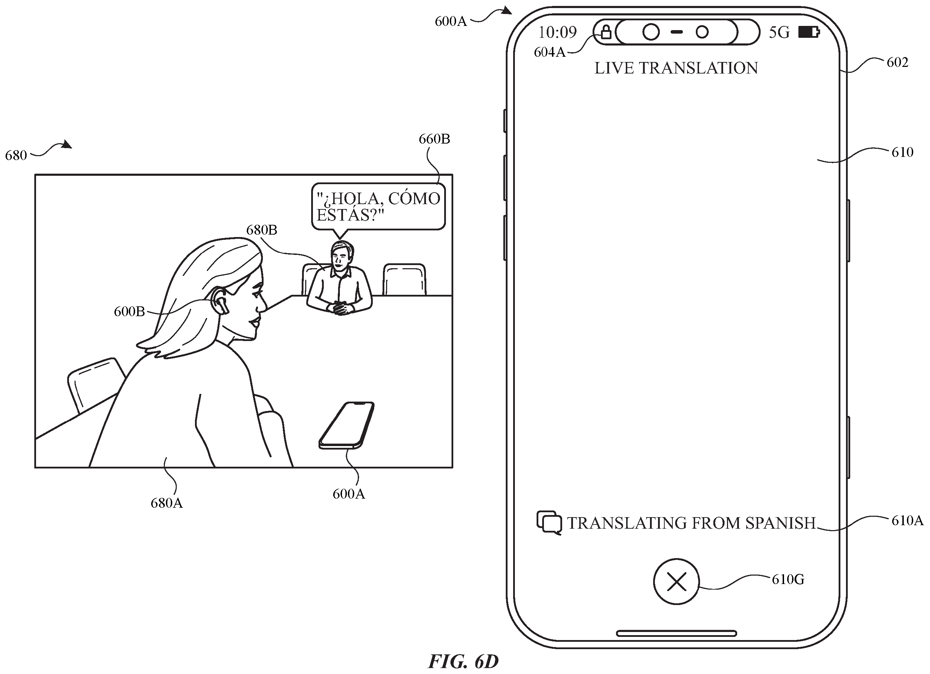

At FIG. 6D, while computer system 600 is operating in the translation mode, person 680B speaks speech 660B, as shown in scene 680. For example, person 680B says "¿Hola, cómo estás?" (in Spanish). Computer system 600 detects speech 660B using one or more microphones of earphones 600B (and, optionally, not using microphones of phone 600A). Computer system 600 optionally determines that detected speech 660B is from a remote speaker (e.g., not user 680A) and/or that detected speech 660B is in the second language. In response to detecting speech 660B, computer system 600 translates speech 660B from the second language (e.g., Spanish) to the first language (e.g., English). In some embodiments, computer system 600 translates from the second language based on having previously received user selection of that language for translation, as described above. In some embodiments, computer system 600 translates from the second language based on determining that speech 660B is spoken in the second language. For example, computer system 600 detects speech, determines the language of the speech, and uses the determined language to translate the speech into the first language. In some embodiments, translating speech 660B from the second language to the first language includes performing speech recognition to transcribe the speech audio (e.g., 660B) to text, such as transcribing the speech audio in the second language to text in the second language. In some embodiments, the text in the second language is then translated to text in the first language, which is then output by computer system 600.

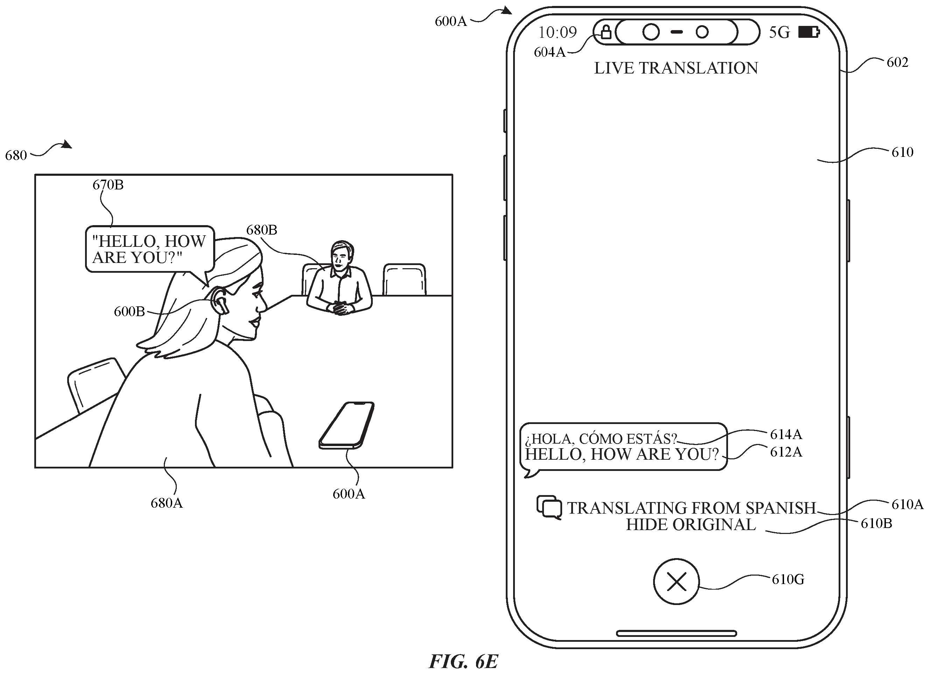

At FIG. 6E, in response to computer system 600 detecting speech 660B, computer system 600 outputs a translation of speech 660B. In some embodiments, computer system 600 outputs audio translation 670B (in the first language) of speech 660B via one or more speakers of earphones 600B and outputs visual translation 612A as part of conversation transcript user interface 610. In some embodiments, computer system 600 displays text 614A of speech 660B in the second language (e.g., un-translated) as part of conversation transcript user interface 610 (e.g., concurrently with visual translation 612A). For example, visual translation 612A and text 614A are displayed in the same speech balloon, positioned to one side (e.g., the left side) of conversation transcript user interface 610 to indicate that person 680B is the speaker. In some examples, the font size of text 614A is smaller than the font size of visual translation 612A. In some embodiments, phone 600A does not automatically output audio (translated or not) corresponding to speech 660B in response to detecting speech 660B. Accordingly, user 680A hears the translation of speech 660B and user 680A and/or person 680B see the translation of speech 660B.

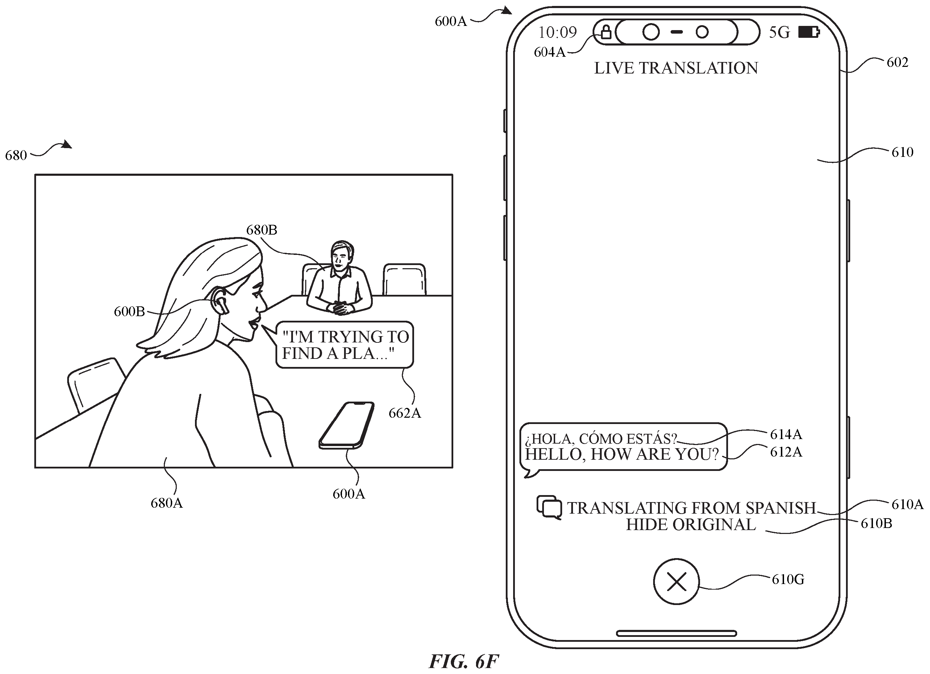

At FIGS. 6F-6H, while computer system 600 continues operating in the translation mode, user 680A speaks (e.g., speech 662A), as shown in scene 680 at FIGS. 6F-6G. For example, user 680A says "I'm trying to find a place to have dinner before it gets dark" (in English). Computer system 600 detects speech 662A using one or more microphones of earphones 600B (and, optionally, not using microphones of phone 600A). Computer system 600 optionally determines that detected speech 662A is from a local speaker (e.g., user 680A) and/or that detected speech 662A is in the first language. Computer system 600 translates speech 662A from the first language (e.g., English) to the second language (e.g., Spanish) (e.g., without requiring further user inputs). In some embodiments, computer system 600 translates from the first language based on having previously received selection of that language for translation, as described above. In some embodiments, computer system 600 translates from the first language based on determining that speech 662A is spoken in the first language. In some embodiments, translating speech 662A from the first language to the second language includes performing speech recognition to transcribe the speech audio to text, such as transcribing the speech audio in the first language to text in the first language. The text in the first language is then translated to text in the second language, which is then output (e.g., 616A and/or 672A) by computer system 600. In some embodiments, computer system 600 translates to the second language based on previously having received selection of that language, as described above. In some embodiments, computer system 600 translates to the second language based on previously having detected speech (e.g., speech 660B) in that language (e.g., from a remote person).

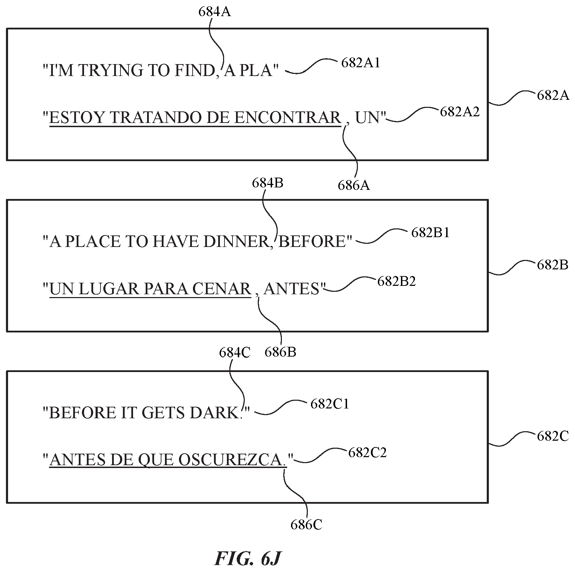

In some embodiments, to reduce the latency in outputting the translation of speech 662A, computer system 600 starts to output (e.g., via display 602 and/or via one or more speakers) a translation of detected speech 662A without waiting for a pause in speech 662A and without waiting for an end of a sentence in speech 662A, as described in greater detail with respect to FIG. 6J.

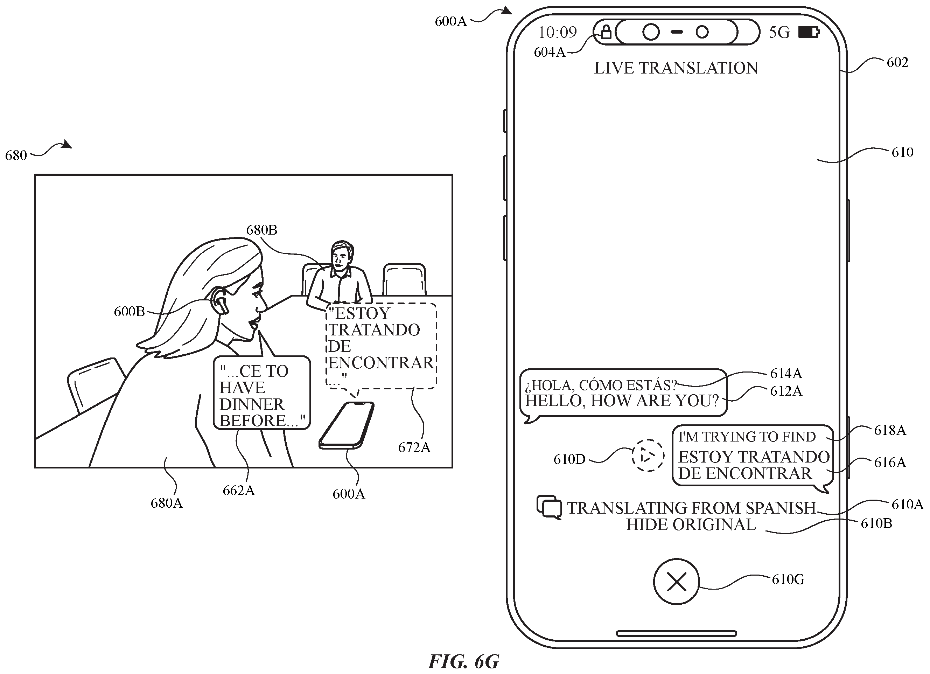

At FIGS. 6G-6I, as (e.g., in response to) computer system 600 detects respective portions of speech 662A, computer system 600 translates and outputs the respective translation of the respective portion of speech 662A, such as by using markers, as described in detail below. In some embodiments, computer system 600 outputs audio translation 672A (in the second language) of speech 662A via one or more speakers of phone 600A and outputs visual translation 616A as part of conversation transcript user interface 610. In some embodiments, computer system 600 displays text 618A of speech 660B in the first language (e.g., un-translated) as part of conversation transcript user interface 610. For example, visual translation 616A and text 618A are displayed in the same speech balloon, positioned to another side (e.g., the right side) of conversation transcript user interface 610 to indicate that user 680A is the speaker. In this example, the font size of text 618A is smaller than the font size of visual translation 616A. In some embodiments, phone 600A does not output audio (e.g., 672A, translated or not) corresponding to speech 662A. Accordingly, user 680A and/or person 680B hears the translation of speech 662A (with reduced latency) and/or sees the translation of speech 662A (with reduced latency).

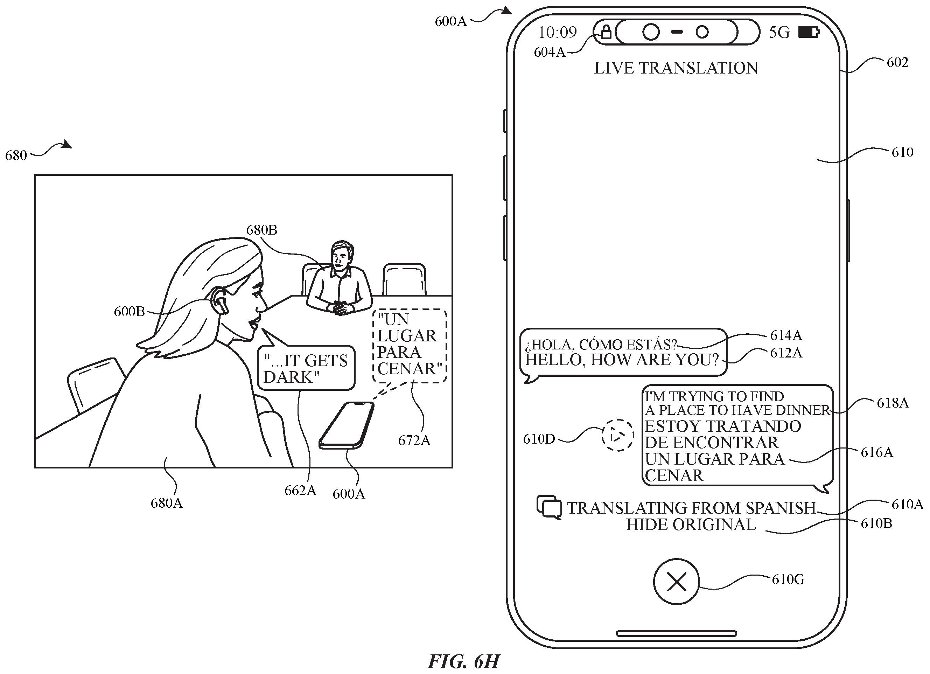

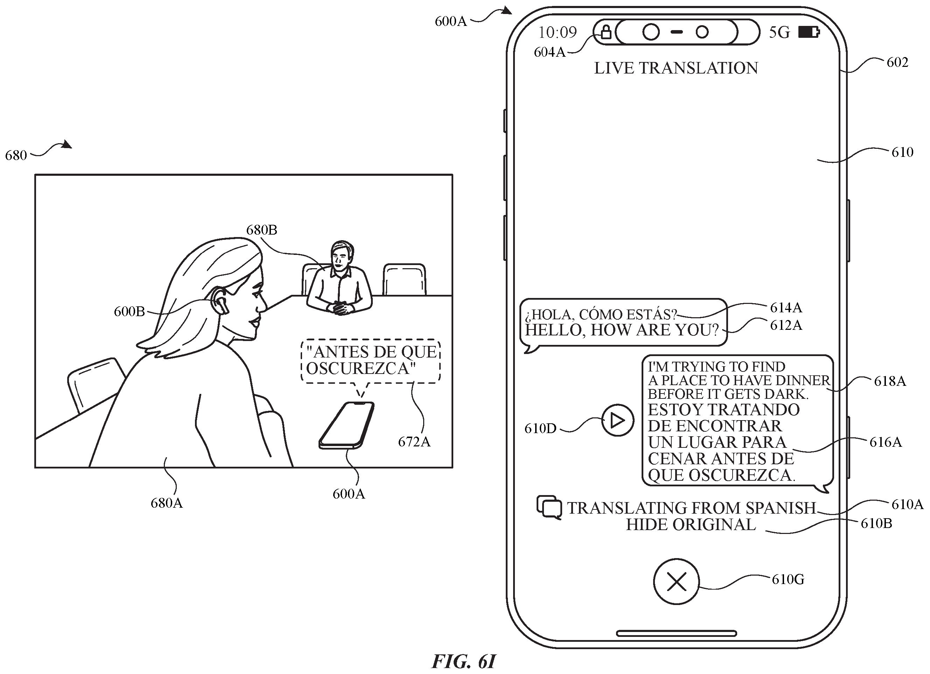

FIG. 6J illustrates an example procedure for reducing latency when outputting translations of detected speech. At 682A, computer system 600 has detected speech 662A of FIG. 6F and has performed speech recognition to transcribe the speech audio to transcribed text 682A1, such as transcribing the speech audio in the first language to text in the first language as the speech is detected. In some embodiments, computer system 600 inserts marker 684A (e.g., a comma) into the transcribed (untranslated) text 682A1 of speech 682A. Once the marker (e.g., 684A) is inserted into transcribed text 682A1, computer system 600 translates the portion of transcribed text 682A1 up to the inserted marker ("I'm trying to find") and begins to output (e.g., as shown in FIG. 6G) the translation without waiting for a pause in the speech (e.g., of speech 662A) and without waiting for an end of the sentence of the speech (e.g., of speech 662A). The remaining portion of transcribed text 682A1 (e.g., "a pla...") is retained and becomes a part of the next portion of speech that is analyzed. For example, at 682B of FIG. 6J, computer system 600 has detected additional speech 662A at FIG. 6G and has performed speech recognition to transcribe the speech audio to transcribed text 682B1, which includes the remaining portion of transcribed text 682A1 that is after marker 684A. In some embodiments, computer system 600 inserts marker 684B (e.g., a comma) into the transcribed (untranslated) text 682B1 of speech 682A. Once the marker (e.g., 684B) is inserted into transcribed text 682B1, computer system 600 translates the portion of transcribed text 682B1 up to the inserted marker ("a place to have dinner") and computer system 600 queues the translation to be output (e.g., as shown in FIG. 6H) without waiting for a pause in the speech (e.g., of speech 662A) and without waiting for an end of the sentence of the speech (e.g., of speech 662A). The remaining portion of transcribed text 682B1 (e.g., "before...") is retained and becomes a part of the next portion of speech that is analyzed. For example, at 682C of FIG. 6J, computer system 600 has detected additional speech 662A at FIG. 6H and has performed speech recognition to transcribe the speech audio to transcribed text 682C1, which includes the remaining portion of transcribed text 682B1 that is after marker 684B (e.g., "before"). Computer system 600 detects an end of sentence (e.g., period 684C) and therefore does not insert an additional marker. Computer system 600 translates the portion of transcribed text 682C1 up to the end of sentence ("before it gets dark") and computer system 600 queues the translation to be output (e.g., as shown in FIG. 6I). Accordingly, computer system 600 outputs translations of detected speech with significantly reduced latency (e.g., as compared to waiting for a pause in speech or an end of sentence). Although a comma (e.g., 684A, 684B) is used in this example as the marker, other markers can also be used, such as other punctuation marks or text symbols. In some embodiments, the marker (e.g., the comma) is not inserted based on being grammatically correct, but rather based on identifying a location in the speech that translation/output can begin. In some embodiments, the marker is not used for purposes of pronunciation and/or intonation when outputting the translation (e.g., via display and/or via speech using one or more speakers of the computer system).

Similarly, rather than inserting the marker (e.g., 684A) in the transcribed (untranslated) text (e.g., 682A1, 682B1), computer system 600 can insert the marker into the translated text (e.g., 682A2, 682B2), as shown in FIG. 6J. Thus, as the speech is detected and transcribed, the transcribed text is translated. The computer system inserts a marker (e.g., 686A and/or 686B) into the translated text to indicate that the portion before the marker can be output (e.g., via display and/or via spoken audio using one or more speakers) and/or queued to be output. As shown in FIG. 6J, at 682A, computer system 600 inserts marker 686A and begins to output the underlined translated text in 682A (e.g., the portion up to the marker). Similarly, at 682B, computer system 600 inserts marker 686B and begins to output (or queue for output) the underlined translated text in 682B (e.g., the portion up to the marker). At 682C, computer system 600 detects an end of sentence (e.g., based on period 686C) and outputs (or queues to output) the underlined translated text in 686C (e.g., the remainder of the sentence). Accordingly, computer system 600 outputs translations of detected speech with significantly reduced latency (e.g., as compared to waiting for a pause in speech or an end of sentence). Although a comma (e.g., 686A, 686B) is used in this example as the marker, other markers can also be used, such as other punctuation marks or text symbols. In some embodiments, the marker (e.g., the comma) is not inserted based on being grammatically correct, but rather based on identifying a location in the speech that output can begin. In some embodiments, the marker is not used for purposes of pronunciation and/or intonation when outputting the translation (e.g., via display and/or via speech using one or more speakers of the computer system).

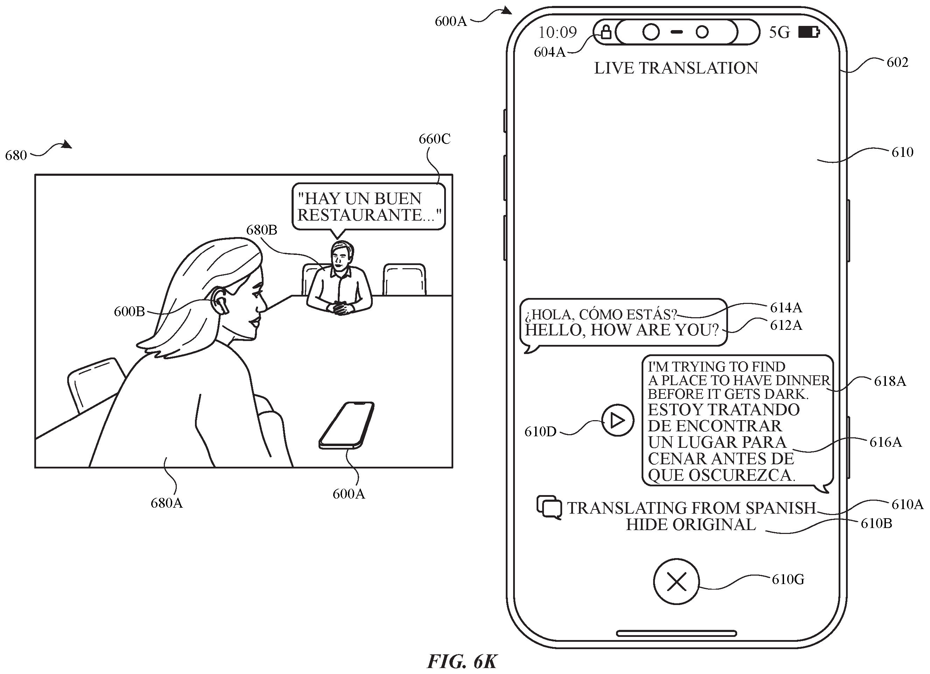

At FIGS. 6K-6M, as (e.g., in response to) computer system 600 detects respective portions of speech 660C, computer system 600 translates and outputs the respective translation of the respective portion of speech 660C, such as by inserting markers, as described in more detail below. In some embodiments, computer system 600 outputs audio translation 670C (in the first language) of speech 660C via one or more speakers of earphones 600B and outputs visual translation 612B as part of conversation transcript user interface 610. In some embodiments, computer system 600 displays text 614B of speech 660C in the second language (e.g., un-translated) as part of conversation transcript user interface 610. For example, visual translation 612B and text 614B are displayed in the same speech balloon, positioned to the side (e.g., the left side) of conversation transcript user interface 610 to indicate that person 680B is the speaker. In this example, the font size of text 614B is smaller than the font size of visual translation 612B. In some embodiments, phone 600A does not output audio (e.g., 672A, translated or not) corresponding to speech 660C. Accordingly, user 680A hears the translation of speech 660C (with reduced latency) and user 680A and/or person 680B sees the translation of speech 660C (with reduced latency).

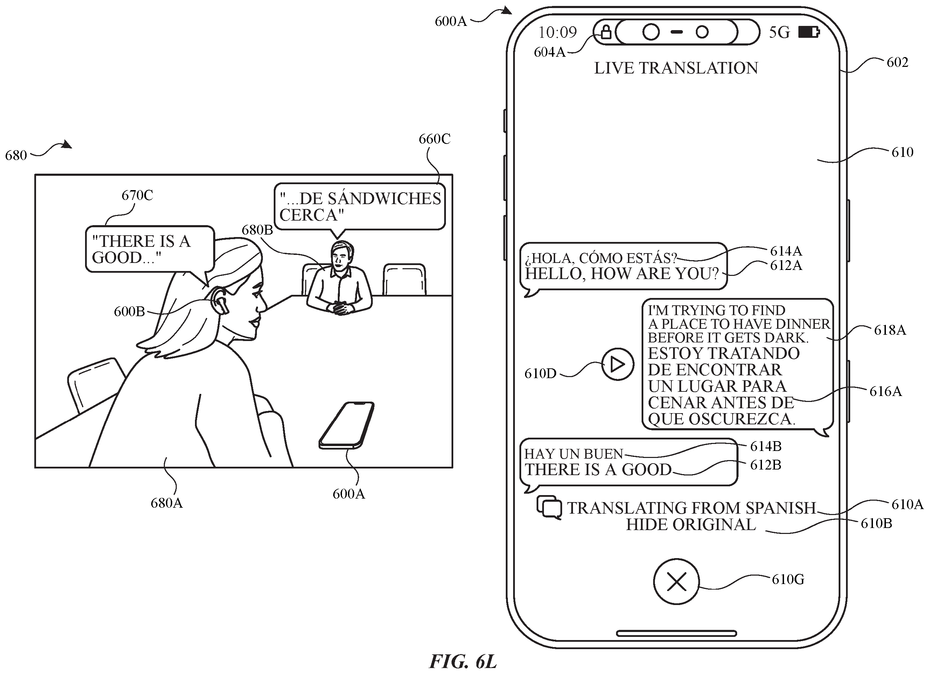

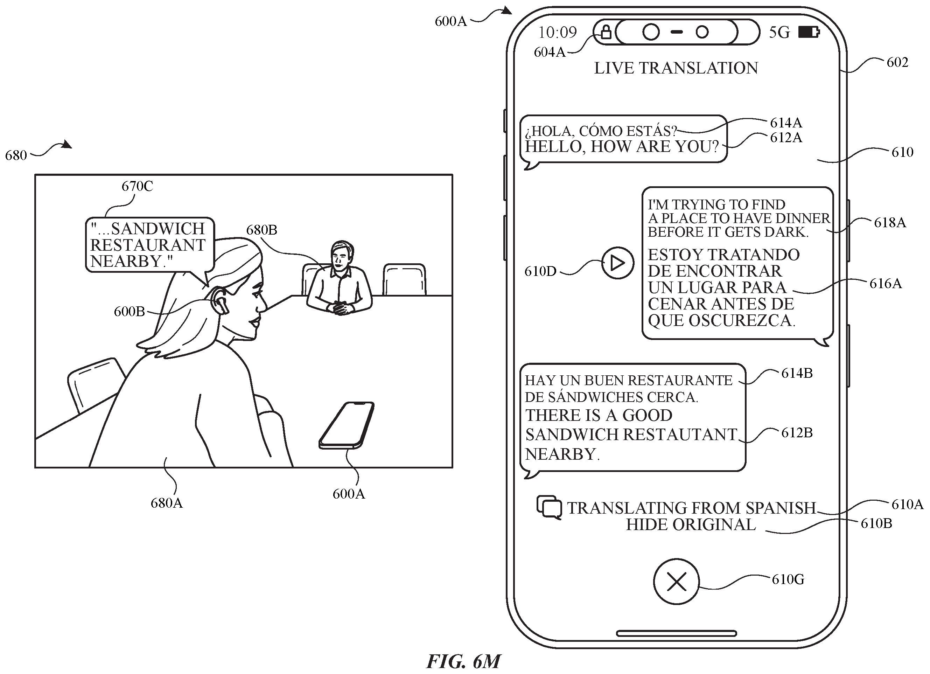

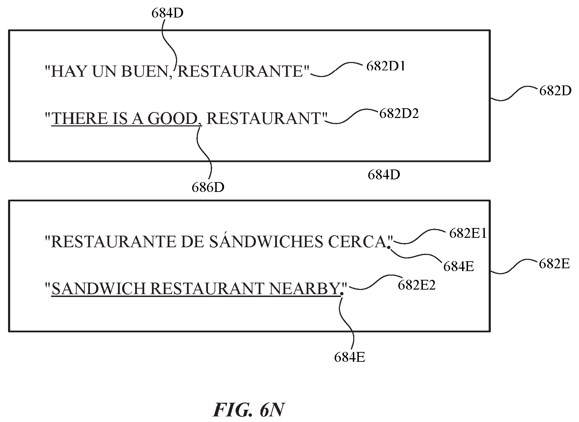

FIG. 6N illustrates an example procedure for reducing latency when outputting translations of detected speech. At 682D, computer system 600 has detected speech 660C of FIG. 6K and has performed speech recognition to transcribe the speech audio to transcribed text 682D1, such as transcribing the speech audio in the second language to text in the second language as the speech is detected. In some embodiments, computer system 600 inserts marker 684D (e.g., a comma) into the transcribed (untranslated) text 682D1 of speech 660C. Once the marker (e.g., 684D) is inserted into transcribed text 682D1, computer system 600 translates the portion of transcribed text 682D1 up to the inserted marker ("Hay un buen") and begins to output (e.g., as shown in FIG. 6L) the translation without waiting for a pause in the speech (e.g., of speech 660C) and without waiting for an end of the sentence of the speech (e.g., of speech 660C). The remaining portion of transcribed text 682D1 (e.g., "restaurante...") is retained and becomes a part of the next portion of speech that is analyzed. For example, at 682E of FIG. 6N, computer system 600 has detected additional speech 660C at FIG. 6L and has performed speech recognition to transcribe the speech audio to transcribed text 682E1, which includes the remaining portion of transcribed text 682D1 that is after marker 684D (e.g., "restaurante"). Computer system 600 detects an end of sentence (e.g., period 684E) and therefore does not insert an additional marker. Computer system 600 translates the portion of transcribed text 682E1 up to the end of sentence ("restaurante de sándwiches cerca") and computer system 600 queues the translation ("sandwich restaurant nearby") to be output (e.g., as shown in FIG. 6M). Accordingly, computer system 600 outputs translations of detected speech with significantly reduced latency (e.g., as compared to waiting for a pause in speech or an end of sentence). Although a comma (e.g., 684D) is used in this example as the marker, other markers can also be used, such as other punctuation marks or text symbols. In some embodiments, the marker (e.g., the comma) is not inserted based on being grammatically correct, but rather based on identifying a location in the speech that translation/output can begin. In some embodiments, the marker is not used for purposes of pronunciation and/or intonation when outputting the translation (e.g., via display and/or via speech using one or more speakers of the computer system).

Similarly, rather than inserting the marker (e.g., 684A) in the transcribed (untranslated) text (e.g., 682A1, 682B1), computer system 600 can insert the marker into the translated text (e.g., 682A2, 682B2), as shown in FIG. 6J. Thus, as the speech is detected and transcribed, the transcribed text is translated. The computer system inserts a marker (e.g., 686A and/or 686B) into the translated text to indicate that the portion before the marker can be output (e.g., via display and/or via spoken audio using one or more speakers) and/or queued to be output. As shown in FIG. 6J, at 682A, computer system 600 inserts marker 686A and begins to output the underlined translated text in 682A (e.g., the portion up to the marker). Similarly, at 682B, computer system 600 inserts marker 686B and begins to output (or queue for output) the underlined translated text in 682B (e.g., the portion up to the marker). At 682C, computer system 600 detects an end of sentence (e.g., based on period 686C) and outputs (or queues to output) the underlined translated text in 686C (e.g., the remainder of the sentence). Accordingly, computer system 600 outputs translations of detected speech with significantly reduced latency (e.g., as compared to waiting for a pause in speech or an end of sentence). Although a comma (e.g., 686A, 686B) is used in this example as the marker, other markers can also be used, such as other punctuation marks or text symbols. In some embodiments, the marker (e.g., the comma) is not inserted based on being grammatically correct, but rather based on identifying a location in the speech that output can begin. In some embodiments, the marker is not used for purposes of pronunciation and/or intonation when outputting the translation as speech (e.g., via display and/or one or more speakers of the computer system).

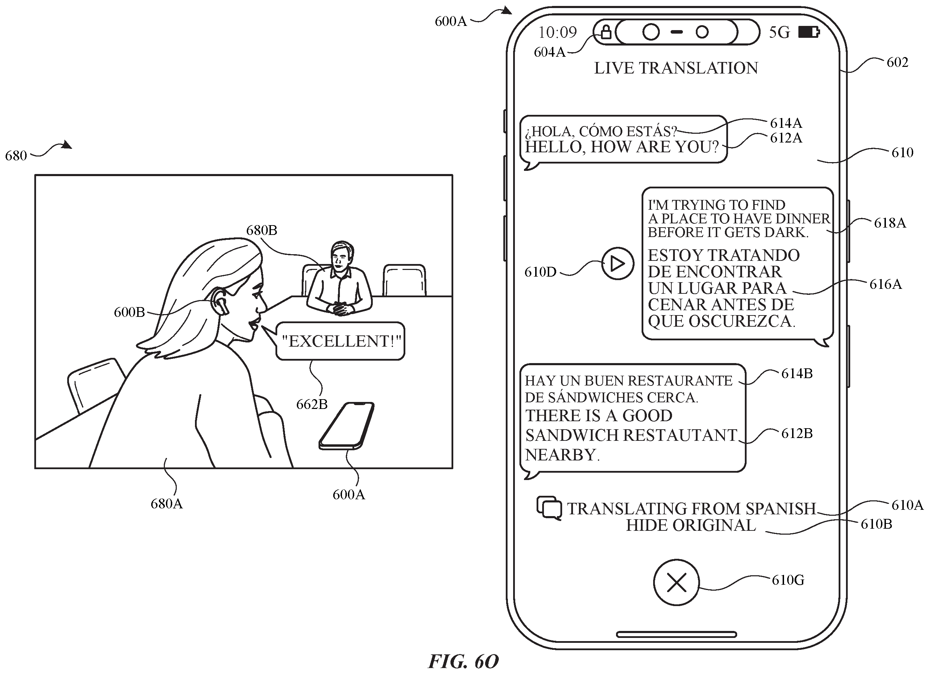

At FIGS. 6O-6P, while computer system 600 is operating in the translation mode, user 680A speaks (e.g., speech 662B), as shown in scene 680 at FIGS. 6O. For example, user 680A says "Excellent!" (in English). Computer system 600 detects speech 662B using one or more microphones of earphones 600B (and, optionally, not using microphones of phone 600A). Computer system 600 optionally determines that detected speech 662B is from a local speaker (e.g., user 680A) and/or that detected speech 662A is in the first language. Computer system 600 translates speech 662B from the first language (e.g., English) to the second language (e.g., Spanish). In some embodiments, computer system 600 translates from the first language based on having previously received selection of that language for translation, as described above. In some embodiments, computer system 600 translates from the first language based on determining that speech 662B is spoken in the first language. In some embodiments, translating speech 662B from the first language to the second language includes performing speech recognition to transcribe the speech audio to text, such as transcribing the speech audio in the first language to text in the first language. The text in the first language is then translated to text in the second language, which is then output by computer system 600.

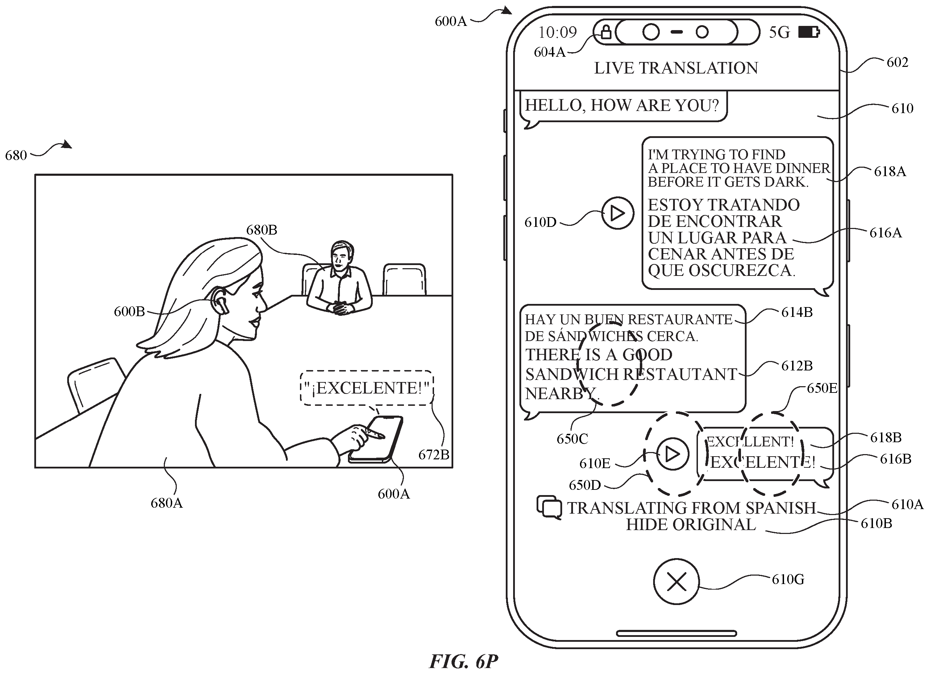

At FIG. 6P, in response to computer system 600 detecting speech 662B, computer system 600 outputs a translation of speech 662B. In some embodiments, computer system 600 outputs audio translation 672B (in the second language) of speech 662B via one or more speakers of phone 600A and outputs visual translation 616B as part of conversation transcript user interface 610. In some embodiments, computer system 600 displays text 618B of speech 662B in the first language (e.g., un-translated) as part of conversation transcript user interface 610. For example, visual translation 616B and text 618B are displayed in the same speech balloon, positioned to one side (e.g., the right side) of conversation transcript user interface 610 to indicate that user 680A is the speaker. In this example, the font size of text 618B is smaller than the font size of visual translation 616B. Accordingly, user 680A and person 680B hear the translation of speech 662B and/or see the translation of speech 662B. In some embodiments, phone 600A does not output audio (translated or not) corresponding to speech 662B.

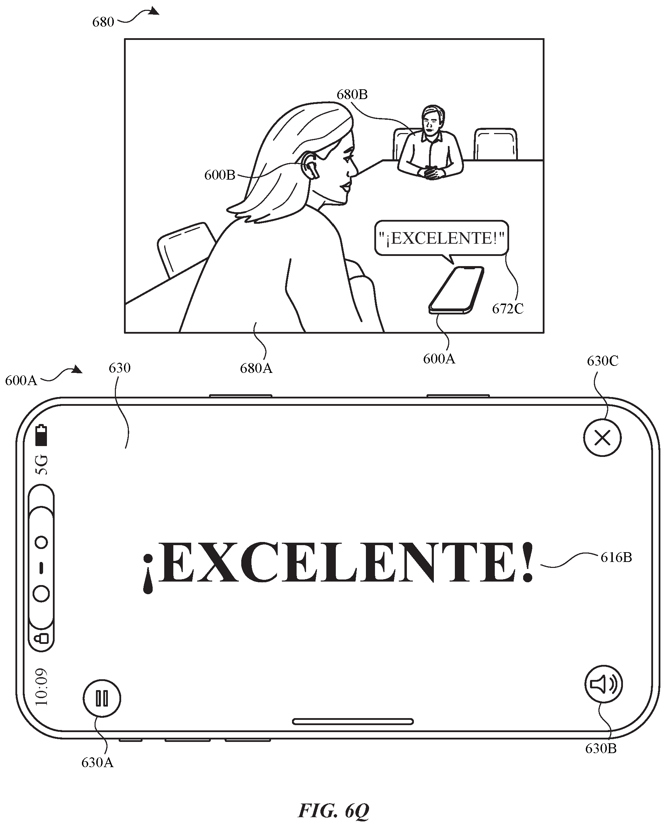

At FIG. 6P, computer system 600 detects a user input (e.g., 650C). In response to detecting the user input and in accordance with a determination that the user input (e.g., 650C) is directed to (e.g., is a tap or swipe on) a respective conversation transcription (e.g., visual translation 612B, text 614B, and/or the corresponding speech balloon) corresponding to speech of person 680B, computer system 600 forgoes outputting audio corresponding to the respective speech (e.g., does not output audio of visual translation 612B and text 614B). For example, computer system 600 does not output audio of 612B and/or 614B in response to detecting input 650C. In response to detecting the user input and in accordance with a determination that the user input (e.g., 650D and/or 650E) is directed to (e.g., is a tap or swipe on) a respective conversation transcription (e.g., visual translation 616B, text 618B, and/or the corresponding speech balloon) corresponding to speech of user 680A and/or is directed to playback option 610E (e.g., a play button or other graphic) corresponding to speech of user 680A, computer system 600 outputs (e.g., re-outputs) audio (e.g., 672C) corresponding to the respective speech (e.g., outputs audio corresponding to visual translation 616B), as shown in FIG. 6Q, and/or changes a display orientation (e.g., changes from portrait orientation to landscape orientation) of displayed content, as shown in FIG. 6Q. In some embodiments, computer system 600 outputs (e.g., re-outputs) audio of a translation of the respective speech of user 680A using one or more speakers of phone 600A and without using earphones 600B. Accordingly, computer system 600 enables user 680A to cause computer system 600 to produce an audio output (e.g., again) of a translation of speech of user 680A. In some embodiments, in accordance with a determination that the user input (e.g., 650D and/or 650E) is directed to (e.g., is a tap or swipe) a respective conversation transcription corresponding to speech of user 680A, phone 600A additionally transitions to displaying an enlarged version of the respective transcription via user interface 630 for displaying enlarged translations, as shown in FIG. 6Q. In some embodiments, phone 600A transitions to displaying an enlarged version of the respective transcription via user interface 630 for displaying enlarged translations in response to detecting a separate user input, such as detecting rotation of phone 600A into a landscape orientation, as shown in FIG. 6Q.

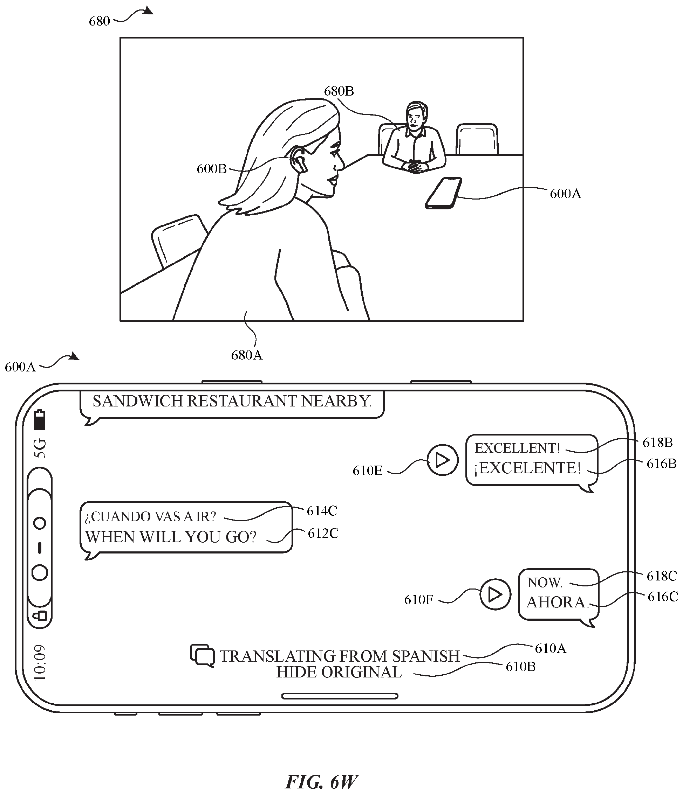

At FIG. 6Q, computer system 600 displays an enlarged version of visual translation 616B as part of user interface 630. The enlarged version of visual translation 616B that is displayed as part of user interface 630 (e.g., as in FIGS. 6Q-6U) is larger than (e.g., is displayed in a font size larger than, is taller than, is wider than, and/or is bolded as compared to) visual translation 616B that is displayed as part of conversation transcript user interface 610 (e.g., as in FIGS. 6P and 6W-6Y). The enlarged translations displayed as part of user interface 630 enable people, such as person 680B, to more easily see translations of speech of user 680A.

In some embodiments, and as described in greater detail with respect to FIGS. 6Q-6V, while computer system 600 is displaying user interface 630 for displaying enlarged translations, computer system 600 displays translations of speech of user 680A without displaying translations of speech of other people, such as person 680B.

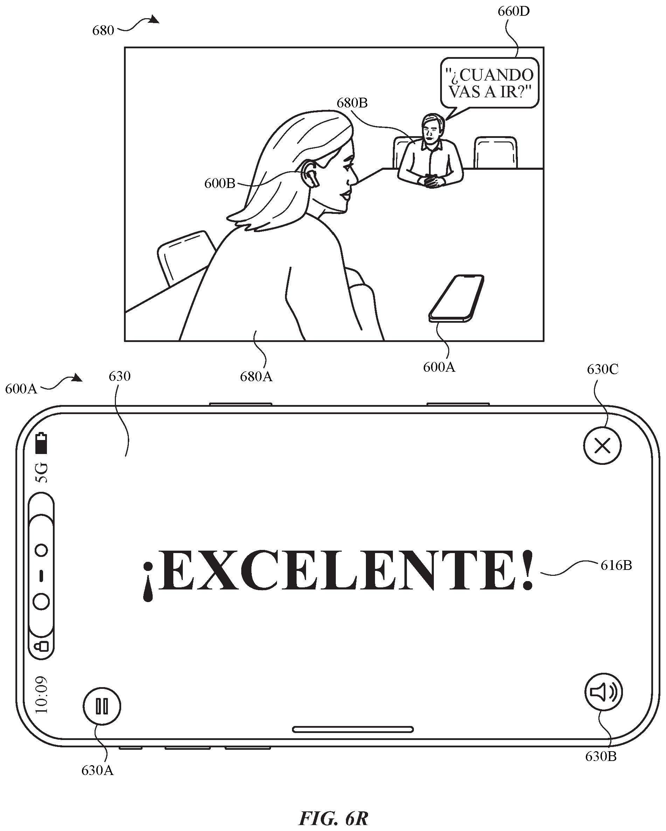

At FIG. 6R, while computer system 600 is operating in the translation mode and displaying user interface 630 for displaying enlarged translations, person 680B speaks speech 660D, as shown in scene 680. For example, person 680B says "¿Cuando vas a ir?" (in Spanish). Computer system 600 detects speech 660D using one or more microphones of earphones 600B (and, optionally, not using microphones of phone 600A). In response to detecting speech 660D, computer system 600 translates speech 660D from the second language (e.g., Spanish) to the first language (e.g., English).

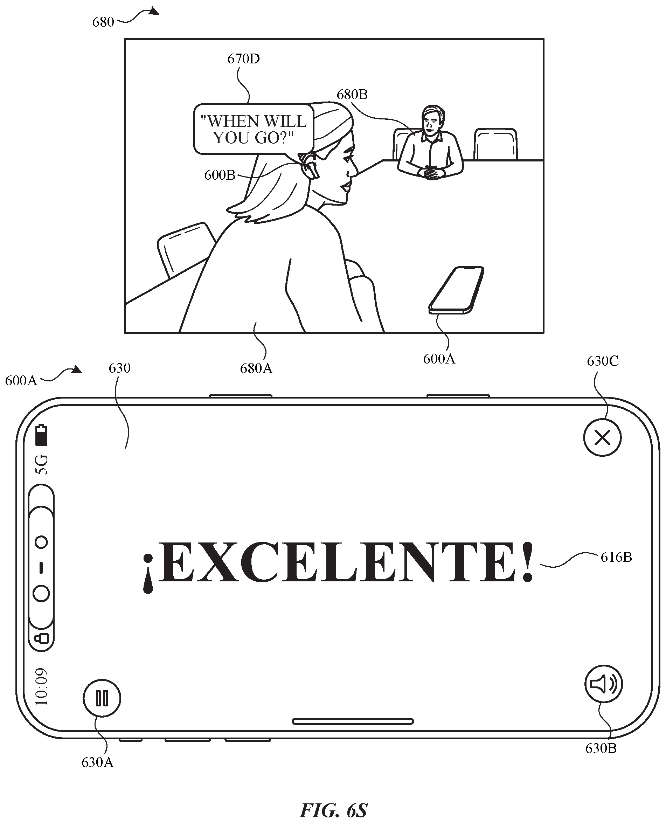

At FIG. 6S, in response to computer system 600 detecting speech 660D, computer system 600 outputs a translation of speech 660D. In some embodiments, computer system 600 outputs audio translation 670D (in the first language) of speech 660D via one or more speakers of earphones 600B without outputting a corresponding visual translation on a display of phone 600A, as shown in FIG. 6S. In some embodiments, phone 600A does not automatically output audio (translated or not) corresponding to speech 660D in response to detecting speech 660D. Accordingly, user 680A hears the translation of speech 660D while user 680A and/or person 680B can continue to see the translation of speech 662B (of user 680A).

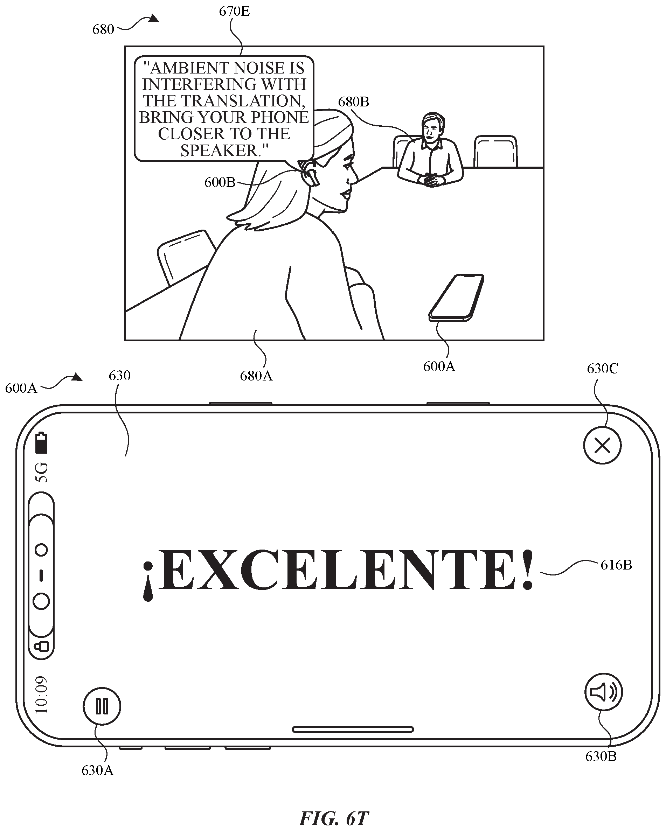

At FIG. 6T, computer system 600 detects that the ambient noise is above a threshold level and, in response, outputs an indication (e.g., audio 670E) that the ambient noise is too loud. In some examples, computer system 600 detects the ambient noise level using one or more microphones of earphones 600B. In some examples, computer system 600 detects the ambient noise level using one or more microphones of phone 600A and/or earphones 600B. For example, computer system 600 outputs (e.g., using one or more speakers of earphones 600B and without using speakers of phone 600A) audio 670E instructing user 680A to move phone 600A closer to person 680B (e.g., to enable microphones of phone 600A to better detect audio of person 680B).

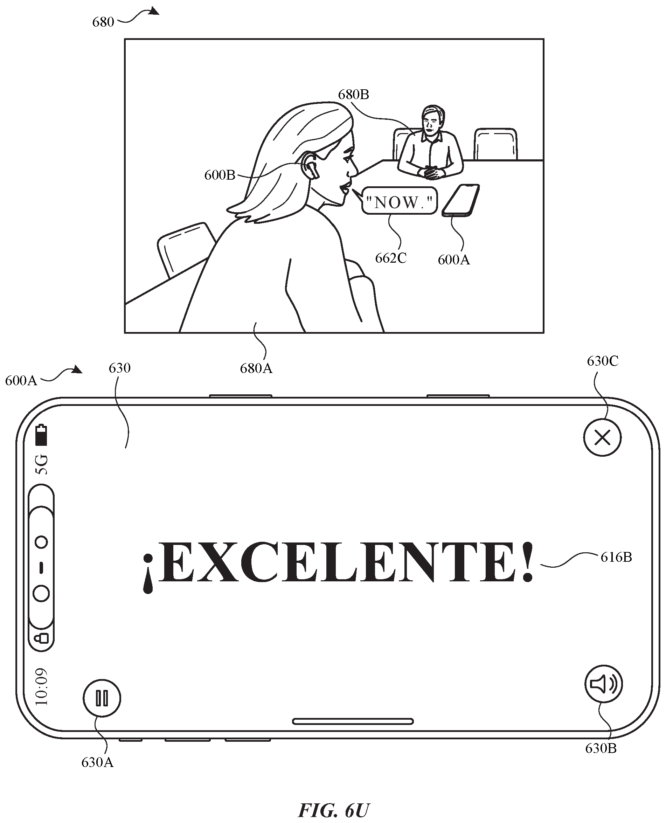

At FIG. 6U, user 680A has moved phone 600A closer to person 680B, thereby enabling one or more microphones of phone 600A to better detect audio (e.g., speech) of person 680B. At FIG. 6U, while computer system 600 is operating in the translation mode and displaying user interface 630 for displaying enlarged translations, user 680A speaks speech 662C, as shown in scene 680. For example, user 680A says "Now." (in English). Computer system 600 detects speech 662C using one or more microphones of earphones 600B. In response to detecting speech 662C, computer system 600 translates speech 662C from the first language (e.g., English) to the second language (e.g., Spanish). In some embodiments (e.g., when the ambient noise is above the threshold level and, optionally, after user 680A has moved phone 600A closer to person 680B), computer system 600 uses one or more microphones of phone 600A (e.g., without using microphones of earphones 600B) to detect speech of person 680B, of persons not wearing earphones 600B, of persons closer to phone 600A than earphones 600B, and/or of persons speaking the second language. In some embodiments (e.g., when the ambient noise is above the threshold level and, optionally, after user 680A has moved phone 600A closer to person 680B), computer system 600 uses one or more microphones of earphones 600B (e.g., without using microphones of phone 600A) to detect speech of user 680A, of persons wearing earphones 600B, of persons closer to earphones 600B than to phone 600A, and/or of persons speaking the first language.

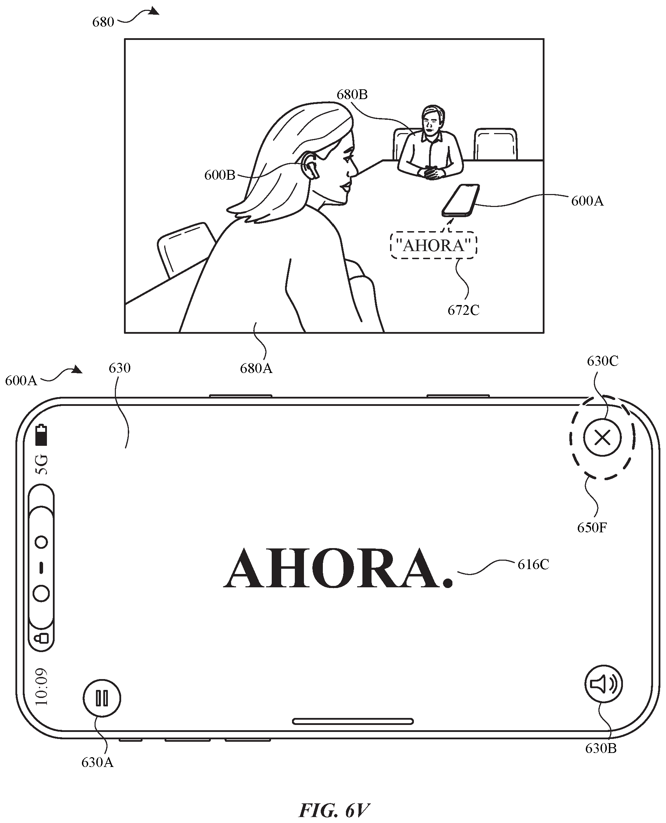

At FIG. 6V, in response to computer system 600 detecting speech 662C, computer system 600 outputs a translation of speech 662C. In some embodiments, computer system 600 outputs audio translation 672C (in the second language) of speech 662C via one or more speakers of phone 600A without outputting a corresponding audio translation via speakers of earphones 600B, as shown in FIG. 6V. In some embodiments, phone 600A does not automatically output audio (translated or not) corresponding to speech 662C in response to detecting speech 662C. In some embodiments, in response to detecting speech 662C, computer system 600 outputs corresponding visual translation 616C on a display of phone 600A as part of user interface 630. For example, visual translation 616C replaces display of visual translation 616B. Accordingly, user 680A and/or person 680B hear the translation of speech 662C and see the translation of speech 662C.

In some embodiments, as shown in FIGS. 6Q-6V, user interface 630 includes pause button 630A and/or speaker button 630B. In some embodiments, selection of pause button 630A pauses (and/or restarts) translations (e.g., audio and visual translations of detected speech). In some embodiments, selection of speaker button 630B causes phone 600A to output audio of the translated text currently displayed (e.g., 616B) as part of user interface 630. In some embodiments, selection of speaker button 630B causes phone 600A to display controls (e.g., a volume slider and/or volume buttons) for controlling a volume of audio output of phone 600A. In some embodiments, speaker button 630B mutes (and/or unmutes) audio output of future translated speech. In some embodiments, user interface 630 includes translations (e.g., 616B and/or 616C) of speech of user 680A without including transcriptions (e.g., 618B and/or 618C) of the speech in the original language. In some embodiments, user interface 630 is updated to include translations of speech of user 680A without being updated to include translations of speech of person 680B.

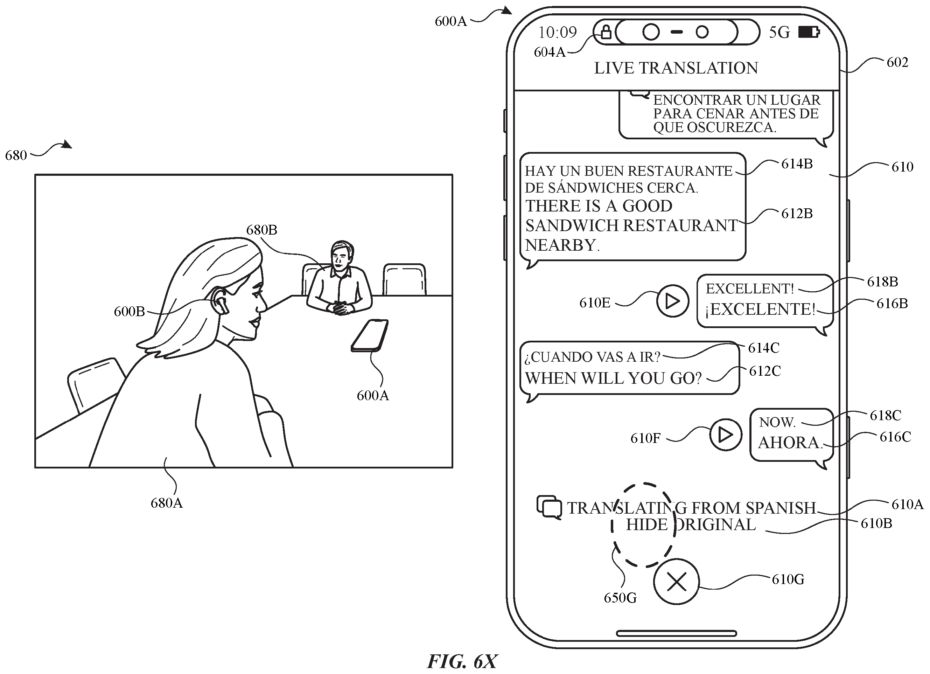

At FIG. 6V, phone 600A detects an input (e.g., tap input and/or press-and-hold input 650F) directed to button 630C. In response to detecting the input directed to button 630C, computer system 600 ceases displaying user interface 630 and returns to displaying conversation transcript user interface 610, as shown in FIG. 6W (e.g., in landscape orientation) and/or FIG. 6X (e.g., in portrait orientation). As shown in FIGS. 6W-6X, conversation transcript user interface 610 includes translations of speech that was detected while phone 600A was displaying user interface 630, including translations (e.g., to the second language, such as visual translation 616C) that were displayed as part of user interface 630 and translations (e.g., to the first language, such as visual translation 612C) that were not displayed as part of user interface 630. In some embodiments, when the ambient noise is above the threshold level (and, optionally, after user 680A has moved phone 600A closer to person 680B), computer system 600 uses one or more microphones of phone 600A to detect speech of person 680B. In some embodiments, when the ambient noise is above the threshold level (and, optionally, even after user 680A has moved phone 600A closer to person 680B), computer system 600 uses one or more microphones of earphones 600B to detect speech of user 680A.

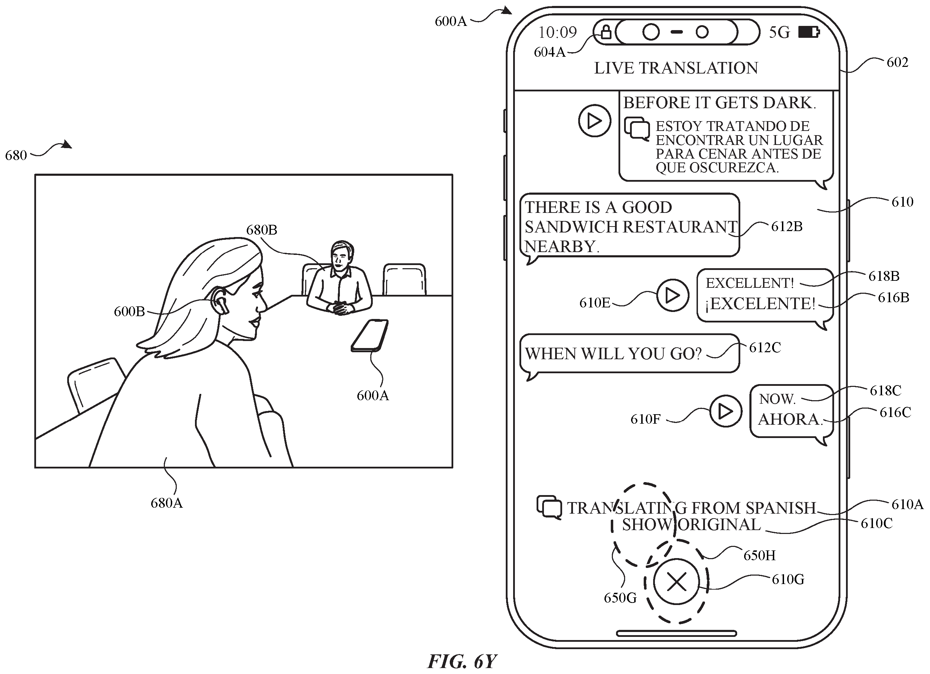

At FIG. 6X, computer system 600 detects an input (e.g., tap input and/or touch- and-hold input 650G) directed to object 610B. In response to detecting the input directed to object 610B, computer system 600 updates conversation transcript user interface 610 to not include transcriptions of speech of person 680B in the original language (e.g., 614A-614C), while continuing to include transcriptions of speech of user 680A in the original language (e.g., 618A-618C) and translations of speech of both users (e.g., 612A-612C and/or 616A-616C), as shown in FIG. 6Y. In some embodiments, in response to detecting the input directed to object 610B, computer system 600 replaces object 610B with object 610C, as shown in FIG. 6Y, visually updates object 610B.

At FIG. 6Y, while phone 600A is displaying conversation transcript user interface 610 without transcriptions of speech of person 680B in the original language (e.g., 614A-614C), phone 600A detects an input (e.g., 650G and/or 650H). In response to detecting the input and in accordance with a determination that the input (e.g., 650G) is directed to object 610C, computer system 600 updates conversation transcript user interface 610 to include transcriptions of speech of person 680B in the original language (e.g., 614A-614C), while continuing to include transcriptions of speech of user 680A in the original language (e.g., 618A-618C) and translations of speech of both users (e.g., 612A-612C and/or 616A-616C), as shown in FIG. 6Y. In response to detecting the input and in accordance with a determination that the input (e.g., 650H) is directed to end object 610G, computer system 600 exits the translation mode and, accordingly, ceases automatically detecting speech, translating speech, and/or outputting (e.g., via audio and/or visually) translated speech. In some embodiments, in response to detecting the input and in accordance with a determination that the input (e.g., 650H) is directed to end object 610G, computer system 600 returns to displaying lock screen user interface 604, as shown in FIG. 6A. In some embodiments, in response to detecting the input and in accordance with a determination that the input (e.g., 650H) is directed to end object 610G, computer system 600 deletes conversation contents (e.g., transcribed and/or translated speech) processed while computer system 600 was in the translation mode, thereby providing added security and privacy.

FIG. 7 is a flow diagram illustrating methods of managing translations, in accordance with some embodiments. Method 700 is performed at a computer system (e.g., 100, 300, 500, and/or 600) (e.g., a smart phone, a smart watch, a tablet computer, a laptop computer, a desktop computer, a wearable device, and/or a head-mounted device) that is in communication with one or more audio devices (e.g., one or more microphones (e.g., of 600A), one or more speakers, one or more earphones (e.g., 600B) with built-in microphones, one or more headsets, and/or one or more headphones), one or more input devices (e.g., a touch-sensitive surface (e.g., a touch-sensitive display, such as 602); a mouse; a keyboard; a visual input device (e.g., one or more cameras (e.g., an infrared camera, a depth camera, a visible light camera, and/or a gaze tracking camera)); a motion sensor (e.g., an accelerometer and/or a gyroscope); and/or one or more mechanical input devices (e.g., a depressible input mechanism; a button; a rotatable input mechanism; a crown; and/or a dial)), and one or more display generation components (e.g., one or more displays 602, one or more touch-screen displays, one or more monitors, a holographic display system, a transparent display, and/or a head-mounted display system). Some operations in method 700 are, optionally, combined, the orders of some operations are, optionally, changed, and some operations are, optionally, omitted.

As described below, method 700 provides an intuitive way for managing translations. The method reduces the cognitive burden on a user for managing translations, thereby creating a more efficient human-machine interface. For battery-operated computing devices, enabling a user to manage translations and/or participate in a conversation faster and more efficiently conserves power and increases the time between battery charges.

The devices, methods, and/or computer-readable storage mediums described below enhance the operability of the device and makes the user-device interface more efficient (e.g., by helping the user to provide proper inputs and reducing user mistakes when operating/interacting with the device) which, additionally, reduces power usage and/or improves battery life of the device by enabling the user to use the device more quickly and efficiently. Performing an operation when a set of conditions has been met without requiring further user input (such as by automatically translating speech and outputting (e.g., audio and/or visual) translations of the speech) enhances the operability of the device by reducing unnecessary inputs and/or steps to navigate through different user interfaces or sets of controls, reducing energy usage by the device.

While not operating in a translation mode (e.g., at FIG. 6B) that automatically detects, via the one or more audio devices, spoken audio and outputs (e.g., via the one or more audio devices and/or via one or more display generation components) a translation of the detected spoken audio, the computer system (e.g., 600) detects (702), via the one or more input devices, a set of one or more inputs (e.g., 650A and/or 650B, user inputs, touch inputs, and/or air gestures) to enable the translation mode. In some embodiments, while the computer system is not operating in the translation mode, the computer system does not automatically translate spoken audio that is detected and/or does not automatically output translations of spoken audio that is detected, such as shown in FIG. 6A-6B.

In response to detecting the set of one or more inputs (e.g., 650A and/or 650B) to enable the translation mode, the computer system (e.g., 600) operates (704) in the translation mode that includes, without requiring (and/or detecting) additional user inputs (e.g., via the one or more input devices, without requiring any commands, and/or prior to detecting the speech of the conversation participants): detecting (706), via the one or more audio devices, speech (e.g., 662A-662C and/or 660B-660D) of a conversation of two or more conversation participants (e.g., 680A and 680B), including first speech in a first language (e.g., 662A-662C) and second speech (660B-660D) in a second language that is different from the first language; outputting (708), via the one or more audio devices, an audio translation (e.g., in the second language and/or in a third language that is different from the first and second languages) of the first speech (e.g., 670B-670D) and/or an audio translation of the second speech (e.g., 672A-672C, in the first language and/or in a third language that is different from the first and second languages); and displaying (710), via the one or more display generation components (e.g., 602) and concurrently with outputting audio translations (e.g., 670B-670D and/or 672A-672C) of (e.g., at least a part of) the conversation, a conversation transcript (e.g., 610) that includes transcriptions (e.g., 612A-612C, 614A-614C, 616A-616C, and/or 618A-618C) (e.g., textual, in the first language, in the second language, in a third language, and/or a combination thereof) of the first speech and the second speech of the conversation of the two or more conversation participants.

In some embodiments, in response to detecting the set of one or more inputs (e.g., 650A and/or 650B) to enable the translation mode (e.g., as part of initiating the translation mode and/or operating in the translation mode), the computer system (e.g., 600) outputs, via the one or more audio devices (e.g., earphones worn by the user of the computer system and/or prior to outputting audio translations), an indication (e.g., 670A) of a language (e.g., Spanish, Chinese, Japanese, Korean, English, and/or German) for which the computer system (e.g., 600) will provide translations. In some embodiments, the computer system indicates that Spanish speech will be translated by outputting audio that says "Listening for Spanish".

In some embodiments, outputting, via the one or more audio devices, the audio translation of the first speech includes outputting an audio translation of the first speech in the second language (e.g., 672A). In some embodiments, outputting, via the one or more audio devices, the audio translation of the second speech includes outputting an audio translation of the second speech in the first language (e.g., 670B). In some embodiments, the computer system translates the first speech from the first language to the second language and translates the second speech from the second language to the first language.

In some embodiments, the set of one or more inputs (e.g., 650A and/or 650B) to enable the translation mode includes a first touch input (e.g., 650A, tap, and/or press) at a first earphone (e.g., 600B, worn by a user of the computer system on a first ear) and (e.g., concurrently and/or in conjunction with) a second touch input (e.g., tap and/or press) at a second earphone (e.g., worn by a user of the computer system on a second ear) that is different from the first earphone.

In some embodiments, the set of one or more inputs (e.g., 650A and/or 650B) to enable the translation mode is detected while the computer system is in a locked mode (e.g., as indicated by 604A at FIG. 6B). In some embodiments, the conversation transcript (e.g., as part of 610) is displayed while the computer system is in the locked mode (e.g., as indicated by 604A in FIGS. 6C-6Y). In some embodiments, the computer system is displaying a lock screen user interface when the set of one or more inputs is received and in response to detecting the set of one or more inputs, the computer system replaces the lock screen user interface with a conversation transcript user interface (e.g., that updates to include the transcript of the conversation while the conversation proceeds).

In some embodiments, while operating in the translation mode the computer system (e.g., 600) detects, via the one or more audio devices, respective speech. In response to detecting the respective speech: in accordance with a determination that a first set of one or more conditions is met (e.g., the speech is far-field speech, the speech originated from a user that is not wearing earphones that are part of the computer system, the speech is recognized as that of a person that is not the user of the computer system, the speech is from a person that is more than a threshold distance from the computer system, and/or the speech is in the second language) for the respective speech, the computer system (e.g., 600) outputs (e.g., audio output via the one or more audio devices (e.g., via a earphones worn by a user of the computer system) and/or visual output via the one or more display generation components) a translation of the respective speech in a respective language (e.g., the first language). In some embodiments, the computer system translates the speech from the second language to the respective language (e.g., the first language) before outputting the translation of the speech.

In some embodiments, the respective language is selected based on (e.g., is selected to be the same language as) a language of a virtual assistant (e.g., a digital voice assistant, an artificial intelligence natural language assistant) operating at the computer system (e.g., 600). In some embodiments, the computer system receives user inputs to select a preferred language for a virtual assistant that operates at the computer system. Subsequently, when conversation translation is requested, the computer system automatically selects the preferred language for use in translating speech that is not in the preferred language.

In some embodiments, while operating in the translation mode and in response to detecting the respective speech: in accordance with a determination that a second set of one or more conditions is met (e.g., the first set of one or more conditions is not met, the speech is near-field speech, the speech originated from a user that is wearing earphones that are part of the computer system, the speech is recognized as that of a person that is the user of the computer system, the speech is from a person that is less than the threshold distance from the computer system, and/or the speech is in the first language) for the respective speech, the computer system (e.g., 600) outputs (e.g., audio output via the one or more audio devices (e.g., via speakers of a phone of the computer system) and/or visual output via the one or more display generation components) a translation of the respective speech in the second language that is different from the respective language (e.g., 672A). In some embodiments, the computer system translates the respective speech from the first language to the second language before outputting the translation of the respective speech. In some embodiments, outputting the translation of the respective speech in the second language includes visually (e.g., via the one or more display generation components) outputting the translation of the respective speech in the second language without outputting audio of the translation of the respective speech in the second language (and/or in the first language).

In some embodiments, outputting the translation of the respective speech in the respective language includes outputting, via a first audio device (e.g., 600B, earphones and/or a headset) of the set of one or more audio devices, the translation (e.g., 670B) of the respective speech without outputting, via a second audio device (e.g., of 600A) of the set of one or more audio devices, an audio translation of the respective speech in the respective language. In some embodiments, outputting the translation of the respective speech in the second language includes outputting, via the second audio device (e.g., 600A and/or speakers of a phone) of the set of one or more audio devices, the translation (e.g., 672A) of the respective speech without outputting, via the first audio device (e.g., 600B) of the set of one or more audio devices, an audio translation of the respective speech in the second language. In some embodiments, the different language translations of the different participants of the conversation are output to different speakers.

In some embodiments, prior to outputting, via the one or more audio devices, the audio translation (e.g., in the second language and/or in a third language that is different from the first and second languages) of the first speech and the audio translation of the second speech, receiving (e.g., while not yet operating in the translation mode), via the one or more input devices, user input that selects the second language (e.g., for translating the first speech to the second language and/or for translating the second speech from the second language).

In some embodiments, prior to outputting, via the one or more audio devices, the audio translation (e.g., in the second language and/or in a third language that is different from the first and second languages) of the first speech and the audio translation of the second speech, automatically selecting (e.g., based on detected speech, such as the second speech, and/or while operating in the translation mode) the second language (e.g., for translating the first speech to the second language and/or for translating the second speech from the second language) without receiving user input that selects the second language.

In accordance with some embodiments, detecting, via the one or more audio devices, speech of the conversation of two or more conversation participants, including first speech in the first language and second speech in the second language that is different from the first language includes: detecting, via a first microphone (e.g., of 600A) and a second microphone (e.g., of 600B), the first speech in the first language and detecting, via the first microphone (e.g., of 600A) and the second microphone (e.g., of 600B), the second speech in the second language. In some embodiments, the audio of the participants of the conversation is detected using the same set of one or more microphones (e.g., two microphones are used to detect audio of first participant and same two microphones are used to detect audio of second participant).

In some embodiments, while operating in the translation mode, the computer system (e.g., 600) detects a level of ambient noise (or, optionally, determining that the audio volume of a participant is below a threshold volume). In accordance with (e.g., in response to) a determination that the level of ambient noise is above a threshold noise level, the computer system (e.g., 600) outputs (e.g., via the one or more audio devices and or via the one or more display generation components) an indication (e.g., 670E) that at least a portion of the computer system (e.g., 600A, a microphone, and/or a phone) should be moved closer to a conversation participant (e.g., 680B) of the two or more conversation participants. In some embodiments, in accordance with (e.g., in response to) a determination that the level of ambient noise is not above the threshold noise level, the computer system forgoes outputting the indication that at least a portion of the computer system (e.g., a microphone and/or a phone) should be moved closer to a conversation participant of the two or more conversation participants.

In some embodiments, displaying the conversation transcript (e.g., as part of 610) of the conversation of the two or more conversation participants includes: displaying, via the one or more display generation components (e.g., 602), a transcription of the first speech in the first language (e.g., 618A), a transcription of the first speech in the second language (e.g., 616A), a transcription of the second speech in the first language (e.g., 612A), and a transcription of the second speech in the second language (e.g., 614A).

In some embodiments, while operating in the translation mode (e.g., as in FIG. 6P), the computer system (e.g., 600) detects a user input (e.g., 650D, 650E, a touch gesture, and/or an air gesture) directed to a respective transcription of a respective speech in the conversation transcript, wherein the respective transcription of the respective speech is speech of a respective conversation participant of the two or more conversation participants. In response to detecting the user input e.g., 650D and/or 650E) directed to the respective transcription of the respective speech in the conversation transcript: the computer system (e.g., 600) ceases to display the conversation transcript of the two or more conversation participants (as shown in FIG. 6Q). In response to detecting the user input e.g., 650D and/or 650E) directed to the respective transcription of the respective speech in the conversation transcript: the computer system (e.g., 600) displays, via the one or more display generation components (e.g., 602), an enlarged transcript user interface (e.g., 630, replacing the conversation transcript with the enlarged transcript user interface) that includes an enlarged version (e.g., 616B at FIG. 6Q) of the respective transcription of the respective speech of the respective conversation participant. In some embodiments, the conversation transcript is replaced with an enlarged version of the respective transcription of the respective speech of the respective conversation participant. In some embodiments, the enlarged version of the respective transcription is larger than the respective transcription to which the user input is directed and that is displayed as part of the conversation transcript. While displaying the enlarged transcript user interface (e.g., 630) that includes the enlarged version of the respective transcription of the respective speech, the computer system (e.g., 600) detects, via the one or more audio devices, respective audio (e.g., 660D and/or 662C). In response to detecting the respective audio: in accordance with a determination that the respective audio includes speech that meets a first set of one or more conditions (e.g., is speech by the user of the computer system, is speech in a third language that is different from the first language and the second language, and/or is speech in the first language), the computer system (e.g., 600) updates the enlarged transcript user interface (e.g., 630) to include a transcription (e.g., an enlarged transcription) of the speech that meets the first set of one or more conditions (e.g., by replacing the enlarged version of the respective transcription of the respective speech with the transcription of the speech that meets the first set of one or more conditions), such as in FIG. 6V. In accordance with a determination that the respective audio includes speech that meets a second set of one or more conditions (e.g., is speech by a person that is not a participant of the conversation, is speech by a person who is not the user of the computer system, is speech in a third language that is different from the first language and the second language, and/or is speech in the second language) that are different from the first set of one or more conditions, the computer system (e.g., 600) forgoes updating the enlarged transcript user interface to include a transcription (e.g., an enlarged transcription) of the speech that meets the second set of one or more conditions (e.g., and, optionally, continuing to display the enlarged version of the respective transcription of the respective speech as part of the enlarged transcript user interface), as shown in FIG. 6S.

In some embodiments, in response to detecting the user input (e.g., 650D and/or 650E) directed to the respective transcription of the respective speech in the conversation transcript, the computer system (e.g., 600) outputs, via the one or more audio devices, audio (e.g., 672C at FIG. 6Q) of the respective transcription. In some embodiments, the audio of the respective transcription is output using speakers of a phone of the computer system and not using earphones and/or headphones worn by a user of the computer system.

In some embodiments, while operating in the translation mode and displaying, via the one or more display generation components (e.g., 602), the enlarged version of the respective transcription of the respective speech of the respective conversation participant (e.g., as part of 630), the computer system (e.g., 600) detects, via the one or more audio devices, respective audio. In response to detecting the respective audio and in accordance with a determination that the respective audio includes speech that meets a first set of one or more conditions (e.g., is speech by the user of the computer system, is speech in a third language that is different from the first language and the second language, and/or is speech in the first language), the computer system (e.g., 600) outputs an audio translation (e.g., 672C, translated from the first language to the second language) of the speech (e.g., 662C) that meets the first set of one or more conditions. In some embodiments, outputting, via the one or more audio devices, the audio translation (e.g., in the second language) of the speech that meets the first set of one or more conditions includes outputting the audio translation via one or more speakers integrated into a device (e.g., 600A) that is displaying, via the one or more display generation components (e.g., 602), enlarged versions of the respective transcription (e.g., one or more speakers integrated into a phone of the computer system), as in FIG. 6V. In some embodiments, outputting, via the one or more audio devices, the audio translation (e.g., in the second language) of the speech that meets the first set of one or more conditions does not include outputting the audio translation via head-worn speakers.

In some embodiments, while operating in the translation mode and displaying, via the one or more display generation components (e.g., 602), the enlarged version (e.g., 616B at FIG. 6R and/or as part of 630) of the respective transcription of the respective speech of the respective conversation participant, the computer system (e.g., 600) detects, via the one or more audio devices, respective audio (e.g., 660D). In response to detecting the respective audio (e.g., 660D) and in accordance with a determination that the respective audio includes speech that meets a second set of one or more conditions (e.g., is a far-field speaker, is speech by a person that is not a participant of the conversation, is speech by the user of the computer system, in speech by a person that is not the user of the computer system, is speech in a third language that is different from the first language and the second language, and/or is speech in the first language), outputting an audio translation (e.g., 670D at FIG. 6S, translated from the second language to the first language) of the speech that meets the second set of one or more conditions. In some embodiments, outputting, via the one or more audio devices (e.g., at earphones and/or headphones of the computer system), the audio translation (e.g., in the first language) of the speech (e.g., 660D) that meets the second set of one or more conditions includes outputting the audio translation via one or more head-worn speakers (e.g., 600B, earphones, and/or headphones) of the set of one or more audio devices (e.g., without outputting the audio translation via one or more speakers integrated into a phone of the computer system).

In some embodiments, while displaying the enlarged transcript user interface (e.g., 630) that includes the enlarged version of the respective transcription of the respective speech, the computer system (e.g., 600) detects, via the one or more input devices, a request (e.g., 650F at FIG. 6V) to display the conversation transcript (e.g., 610). In response to detecting the request to display the conversation transcript, the computer system (e.g., 600) displays, via the one or more display generation components (e.g., 602), the conversation transcript (e.g., as part of 610 at FIGS. 6W and/or 6Y), including displaying a transcription (e.g., 612C, 614C, a standard-sized transcription and/or not an enlarged transcription) of the speech (e.g., 660D) that meets the second set of one or more conditions (e.g., the conversation transcript includes transcriptions of speech from the two or more participants, whereas the enlarged transcript user interface excludes transcriptions of speech from at least one of the two or more participants).

In some embodiments, while operating in the translation mode, the computer system (e.g., 600) detects a user input (e.g., 650C, a touch gesture, and/or an air gesture) directed to a second respective transcription of a second respective speech in the conversation transcript, wherein the second respective transcription of the second respective speech is speech of a second respective conversation participant (e.g., 680B), different from the respective conversation participant (e.g., 680A), of the two or more conversation participants. In response to detecting the user input (e.g., 650C) directed to the second respective transcription of the second respective speech in the conversation transcript, the computer system (e.g., 600) forgoes displaying the enlarged transcript user interface (e.g., continues to display conversation transcript user interface 610 at FIG. 6P).

In some embodiments, while operating in the translation mode and displaying the conversation transcript (e.g., 610), the computer system (e.g., 600) detects, via the one or more audio devices, respective audio (e.g., 662B). In response to detecting the respective audio and in accordance with a determination that the respective audio includes speech that meets a first set of one or more conditions (e.g., is speech by a person that is not a participant of the conversation, is speech by the user (e.g., 680A) of the computer system, is speech in a third language that is different from the first language and the second language, and/or is speech in the first language), the computer system (e.g., 600) forgoes outputting an audio translation of the speech that meets the first set of one or more conditions (e.g., optionally does not output audio translation 672B, as indicated by the dashed lines of audio translation 672B).

In some embodiments, while operating in the translation mode and displaying the conversation transcript (e.g., 610), the computer system (e.g., 600) detects, via the one or more audio devices, respective audio (e.g., 660C). In response to detecting the respective audio and in accordance with a determination that the respective audio includes speech that meets a second set of one or more conditions (e.g., is speech by a far-field speaker, is speech in a third language that is different from the first language and the second language, and/or is speech in the second language), the computer system (e.g., 600) outputs, via the one or more audio devices (e.g., at earphones 600B and/or headphones of the computer system), an audio translation (e.g., 670C at FIGS. 6L-6M, in the first language) of the speech that meets the second set of one or more conditions.

In some embodiments, outputting, via the one or more audio devices (e.g., at earphones and/or headphones of the computer system), the audio translation (e.g., in the first language) of the speech that meets the second set of one or more conditions includes outputting the audio translation via one or more head-worn speakers (e.g., 600B, earphones, and/or headphones) of the set of one or more audio devices (e.g., without outputting the audio translation via one or more speakers integrated into a phone of the computer system).

In some embodiments, the conversation transcript (e.g., 610) is displayed while the computer system is in a locked state (e.g., as indicated by 604A). In some embodiments, displaying the conversation transcript includes replacing display of a lock screen user interface with display of the conversation transcript.

In some embodiments, while operating in the translation mode (e.g., at FIG. 6P), the computer system (e.g., 600) detects a user input (e.g., 650D, 650E, a touch gesture, and/or an air gesture) corresponding to a respective transcription of a respective speech in the conversation transcript (e.g., a tap input on a play button next to a transcription of the near-field user's speech). In response to detecting the user input corresponding to the respective transcription of the respective speech in the conversation transcript, outputting, via the one or more audio devices (e.g., speakers integrated into a phone of the computer system), an audio translation (e.g., 672C at FIG. 6Q, in the second language) of the respective speech (e.g., audio of the translation of the respective speech). In some embodiments, the audio translation of the respective speech is output using speakers of a phone of the computer system and not using earphones and/or headphones worn by a user of the computer system.

In some embodiments, outputting, via the one or more audio devices, the audio translation (e.g., in the second language) of the respective speech includes outputting the audio translation via one or more speakers integrated into a device (e.g., 600A) that is displaying, via the one or more display generation components (e.g., 602), the respective transcription (e.g., 616B and/or 618B) (e.g., , one or more speakers integrated into a phone of the computer system). In some embodiments, outputting, via the one or more audio devices, the audio translation (e.g., in the second language) of the respective speech does not include outputting the audio translation via head-worn speakers (e.g., 600B).

Note that details of the processes described above with respect to method 700 (e.g., FIG. 7) are also applicable in an analogous manner to the methods described below. For example, method 800 optionally includes one or more of the characteristics of the various methods described above with reference to method 700. For example, the computer systems are the same computer systems. For another example, the audio output process of method 800 is used during the translation process of method 700. For brevity, these details are not repeated below.

FIG. 8 is a flow diagram illustrating methods of outputting audio, in accordance with some embodiments. Method 800 is performed at a computer system (e.g., 100, 300, 500, and/or 600) (e.g., a smart phone, a smart watch, a tablet computer, a laptop computer, a desktop computer, a wearable device, and/or a head-mounted device) that is in communication with one or more audio devices (e.g., one or more microphones, one or more speakers, one or more earphones with built-in microphones, one or more headsets, and/or one or more headphones). Some operations in method 800 are, optionally, combined, the orders of some operations are, optionally, changed, and some operations are, optionally, omitted.

The devices, methods, and/or computer-readable storage mediums described below enhance the operability of the device and makes the user-device interface more efficient (e.g., by helping the user to provide proper inputs and reducing user mistakes when operating/interacting with the device) which, additionally, reduces power usage and/or improves battery life of the device by enabling the user to use the device more quickly and efficiently. Performing an operation when a set of conditions has been met without requiring further user input (such as by beginning to output audio) enhances the operability of the device by reducing unnecessary inputs and/or steps to navigate through different user interfaces or sets of controls, reducing energy usage by the device. Further, beginning to output audio (e.g., a translation of detected speech) before the end of a sentence is detected reduces the latency of the output.

As described below, method 800 provides an intuitive way for outputting audio. The method reduces the cognitive burden on a user for listening to audio, such as during a translation, thereby creating a more efficient human-machine interface. For battery-operated computing devices, enabling a user to begin listening to audio faster and more efficiently conserves power and increases the time between battery charges.

The computer system (e.g., 600) receives (802) (e.g., via one or more audio devices, such as one or more microphones, one or more earphones with built-in microphones, one or more headsets, and/or one or more headphones) an input audio stream that includes speech (e.g., 662A at FIGS. 6F-6H and/or 660C at FIGS. 6K-6L). While receiving (804) the input audio stream that includes speech, the computer system (e.g., 600) performs (806) speech processing on the input audio stream, including performing speech recognition to produce text (e.g., 682A-682C at FIG. 6J and/or 682D-682E at FIG. 6N) that is based on (e.g., is a transcription of and/or is a translation of) the speech of the input audio stream. While receiving (804) the input audio stream that includes speech, the computer system (e.g., 600) determines (808) a location for inserting punctuation (e.g., 684A, 686A, 684B, 686B, 684D, and/or 686D) within the text, wherein the location is not an end of a sentence. While receiving (804) the input audio stream that includes speech, the computer system (e.g., 600) inserts (810) punctuation at the determined location within the text (e.g., as shown in FIG. 6J and/or 6N). While receiving (804) the input audio stream that includes speech, prior to detecting an end of a sentence, and based on (e.g., in response to determining the location for inserting and/or in response to inserting) the inserted punctuation at the determined location within the text, the computer system (e.g., 600) begins outputting (812), via the one or more audio devices (e.g., 600A and/or 600B), spoken audio (e.g., 672A at FIG. 6G and/or 670C at FIG. 6L) of a first part (e.g., the part of the speech before 684A and/or 686A in FIG. 6J; the part of the speech before 684D and/or 686D in FIG. 6N) of the text that is before the inserted punctuation (e.g., without outputting spoken audio of a second part of the text that is after the inserted punctuation).

In some embodiments, performing speech processing on the input audio stream includes translating the speech from a first language (e.g., 682A1 in FIG. 6J and/or 682D1 in FIG. 6N) to a second language (e.g., 682A2 in FIG. 6J and/or 682D2 in FIG. 6N) that is different from the first language. In some embodiments, the speech of the audio input stream is in the first language and the text produced (that is based on the speech of the audio input stream) is in the second language.

In some embodiments, the location for inserting the punctuation is based on a location determined using a transcription (e.g., text) in the first language of the speech of the audio input stream. In some embodiments, the speech of the audio input stream is in the first language and a transcription in the first language of the speech is used (e.g., without using a transcription in the second language) to determine the location for inserting the punctuation (e.g., into the transcription in the first language). In some embodiments, the inserted punctuation is then carried over into the translated transcription in the second language.

In some embodiments, the location for inserting the punctuation is based on a location determined using a transcription (e.g., text) in the second language of the speech of the audio input stream. In some embodiments, the speech of the audio input stream is in the first language and a transcription in the first language of the speech is used to translate the text into the second language. The transcription in the second language is then used (e.g., without using the transcription in the first language) to determine the location for inserting the punctuation (e.g., into the transcription in the second language).

In some embodiments, the punctuation inserted at the determined location within the text is an artificial punctuation (e.g., that is inserted as a marker of location, but that is not inserted for grammatical correctness). In some embodiments, the punctuation inserted at the determined location within the text is grammatically incorrect and/or is an unnecessary punctuation, but helps to identify the determined location in the text.

In some embodiments, the punctuation inserted at the determined location within the text is a (e.g., a grammatically correct or incorrect) comma (e.g., 684A, 686A, 684B, 686B, 684D, and/or 686D).

In some embodiments, determining the location for inserting punctuation within the text includes determining the location for inserting punctuation within the text based on a content of the speech (e.g., based on the words, the order of the words, and/or the quantity of the words).

In some embodiments, the location for inserting punctuation within the text is determined independent of a duration of a pause (e.g., lack of speech) between words (e.g., in the detected speech). In some embodiments, the location for inserting the punctuation is independent of the cadence (e.g., pacing, pitch, and/or volume variations) of the user's speech and/or a duration of a pause between spoken words.

Note that details of the processes described above with respect to method 800 (e.g., FIG. 8) are also applicable in an analogous manner to the methods described above. For example, method 800 optionally includes one or more of the characteristics of the various methods described above with reference to method 700. For example, the computer systems are the same computer systems. For another example, the audio output process of method 800 is used during the translation process of method 700. For brevity, these details are not repeated above.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the techniques and their practical applications. Others skilled in the art are thereby enabled to best utilize the techniques and various embodiments with various modifications as are suited to the particular use contemplated.

Although the disclosure and examples have been fully described with reference to the accompanying drawings, it is to be noted that various changes and modifications will become apparent to those skilled in the art. Such changes and modifications are to be understood as being included within the scope of the disclosure and examples as defined by the claims.

As described above, one aspect of the present technology is the gathering and use of data available from various sources to improve the delivery to users of translation of speech may be of interest to them. The present disclosure contemplates that in some instances, this gathered data may include personal information data that uniquely identifies or can be used to contact or locate a specific person. Such personal information data can include demographic data, location-based data, telephone numbers, email addresses, social network IDs, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, the personal information data can be translated to another language.

The present disclosure contemplates that the entities responsible for the collection, analysis, disclosure, transfer, storage, or other use of such personal information data will comply with well-established privacy policies and/or privacy practices. For example, such entities should consider deleting stored contents of the conversation after the translation session is complete. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app. For another example, users and/or conversation participants may be notified that a conversation is being translated.

Moreover, it is the intent of the present disclosure that personal information data should be managed and handled in a way to minimize risks of unintentional or unauthorized access or use. Risk can be minimized by limiting the collection of data and deleting data once it is no longer needed, such as when a translation session ends. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data.

Exemplary embodiments are set out in the following items:
1. A method, comprising:
   at a computer system that is in communication with one or more audio devices, one or more input devices, and one or more display generation components:
   while not operating in a translation mode that automatically detects, via the one or more audio devices, spoken audio and outputs a translation of the detected spoken audio, detecting, via the one or more input devices, a set of one or more inputs to enable the translation mode; and
   in response to detecting the set of one or more inputs to enable the translation mode, operating in the translation mode that includes, without requiring additional user inputs:
      detecting, via the one or more audio devices, speech of a conversation of two or more conversation participants, including first speech in a first language and second speech in a second language that is different from the first language;
      outputting, via the one or more audio devices, an audio translation of the first speech and/or an audio translation of the second speech; and
      displaying, via the one or more display generation components and concurrently with outputting audio translations of the conversation, a conversation transcript that includes transcriptions of the first speech and the second speech of the conversation of the two or more conversation participants.
2. The method of item 1, further comprising:
   in response to detecting the set of one or more inputs to enable the translation mode, outputting, via the one or more audio devices, an indication of a language for which the computer system will provide translations.
3. The method of any of items 1-2, wherein:
   outputting, via the one or more audio devices, the audio translation of the first speech includes outputting an audio translation of the first speech in the second language; and
   outputting, via the one or more audio devices, the audio translation of the second speech includes outputting an audio translation of the second speech in the first language.
4. The method of any of items 1-3, wherein the set of one or more inputs to enable the translation mode includes a first touch input at a first earphone and a second touch input at a second earphone that is different from the first earphone.
5. The method of any of items 1-4, wherein:
   the set of one or more inputs to enable the translation mode is detected while the computer system is in a locked mode; and
   the conversation transcript is displayed while the computer system is in the locked mode.
6. The method of any of items 1-5, further comprising:
   while operating in the translation mode:
   detecting, via the one or more audio devices, respective speech; and
   in response to detecting the respective speech:
      in accordance with a determination that a first set of one or more conditions is met for the respective speech, outputting a translation of the respective speech in a respective language.
7. The method of item 6, wherein the respective language is selected based on a language of a virtual assistant operating at the computer system.
8. The method of any of items 6-7, further comprising:
   while operating in the translation mode and in response to detecting the respective speech:
   in accordance with a determination that a second set of one or more conditions is met for the respective speech, outputting a translation of the respective speech in the second language that is different from the respective language.
9. The method of item 8, wherein:
   outputting the translation of the respective speech in the respective language includes outputting, via a first audio device of the set of one or more audio devices, the translation of the respective speech without outputting, via a second audio device of the set of one or more audio devices, an audio translation of the respective speech in the respective language; and
   outputting the translation of the respective speech in the second language includes outputting, via the second audio device of the set of one or more audio devices, the translation of the respective speech without outputting, via the first audio device of the set of one or more audio devices, an audio translation of the respective speech in the second language.
10. The method of any of items 1-9, further comprising:
   prior to outputting, via the one or more audio devices, the audio translation of the first speech and the audio translation of the second speech, receiving, via the one or more input devices, user input that selects the second language.
11. The method of any of items 1-9, further comprising:
   prior to outputting, via the one or more audio devices, the audio translation of the first speech and the audio translation of the second speech, automatically selecting the second language without receiving user input that selects the second language.
12. The method of any of items 1-11, wherein detecting, via the one or more audio devices, speech of the conversation of two or more conversation participants, including first speech in the first language and second speech in the second language that is different from the first language includes:
   detecting, via a first microphone and a second microphone, the first speech in the first language; and
   detecting, via the first microphone and the second microphone, the second speech in the second language.
13. The method of any of items 1-12, further comprising:
   while operating in the translation mode, detecting a level of ambient noise; and
   in accordance with a determination that the level of ambient noise is above a threshold noise level, outputting an indication that at least a portion of the computer system should be moved closer to a conversation participant of the two or more conversation participants.
14. The method of any of items 1-13, wherein displaying the conversation transcript of the conversation of the two or more conversation participants includes:
   displaying, via the one or more display generation components, a transcription of the first speech in the first language, a transcription of the first speech in the second language, a transcription of the second speech in the first language, and a transcription of the second speech in the second language.
15. The method of any of items 1-14, further comprising:
   while operating in the translation mode, detecting a user input directed to a respective transcription of a respective speech in the conversation transcript, wherein the respective transcription of the respective speech is speech of a respective conversation participant of the two or more conversation participants; and
   in response to detecting the user input directed to the respective transcription of the respective speech in the conversation transcript:
      ceasing to display the conversation transcript of the two or more conversation participants; and
      displaying, via the one or more display generation components, an enlarged transcript user interface that includes an enlarged version of the respective transcription of the respective speech of the respective conversation participant;
   while displaying the enlarged transcript user interface that includes the enlarged version of the respective transcription of the respective speech, detecting, via the one or more audio devices, respective audio; and
   in response to detecting the respective audio:
      in accordance with a determination that the respective audio includes speech that meets a first set of one or more conditions, updating the enlarged transcript user interface to include a transcription of the speech that meets the first set of one or more conditions; and
      in accordance with a determination that the respective audio includes speech that meets a second set of one or more conditions that are different from the first set of one or more conditions, forgoing updating the enlarged transcript user interface to include a transcription of the speech that meets the second set of one or more conditions.
16. The method of item 15, further comprising:
   in response to detecting the user input directed to the respective transcription of the respective speech in the conversation transcript:
   outputting, via the one or more audio devices, audio of the respective transcription.
17. The method of any of items 15-16, further comprising:
   while operating in the translation mode and displaying, via the one or more display generation components, the enlarged version of the respective transcription of the respective speech of the respective conversation participant, detecting, via the one or more audio devices, respective audio; and
   in response to detecting the respective audio and in accordance with a determination that the respective audio includes speech that meets a first set of one or more conditions, outputting an audio translation of the speech that meets the first set of one or more conditions.
18. The method of item 17, wherein outputting, via the one or more audio devices, the audio translation of the speech that meets the first set of one or more conditions includes outputting the audio translation via one or more speakers integrated into a device that is displaying, via the one or more display generation components, enlarged versions of the respective transcription.
19. The method of any of items 15-18, further comprising:
   while operating in the translation mode and displaying, via the one or more display generation components, the enlarged version of the respective transcription of the respective speech of the respective conversation participant, detecting, via the one or more audio devices, respective audio; and
   in response to detecting the respective audio and in accordance with a determination that the respective audio includes speech that meets a second set of one or more conditions, outputting an audio translation of the speech that meets the second set of one or more conditions.
20. The method of item 19, wherein outputting, via the one or more audio devices, the audio translation of the speech that meets the second set of one or more conditions includes outputting the audio translation via one or more head-worn speakers of the set of one or more audio devices.
21. The method of any of items 15-20, further comprising:
   while displaying the enlarged transcript user interface that includes the enlarged version of the respective transcription of the respective speech, detecting, via the one or more input devices, a request to display the conversation transcript; and
   in response to detecting the request to display the conversation transcript, displaying, via the one or more display generation components, the conversation transcript, including displaying a transcription of the speech that meets the second set of one or more conditions.
22. The method of any of items 15-21, further comprising:
   while operating in the translation mode, detecting a user input directed to a second respective transcription of a second respective speech in the conversation transcript, wherein the second respective transcription of the second respective speech is speech of a second respective conversation participant, different from the respective conversation participant, of the two or more conversation participants; and
   in response to detecting the user input directed to the second respective transcription of the second respective speech in the conversation transcript, forgoing displaying the enlarged transcript user interface.
23. The method of any of items 1-22, further comprising:
   while operating in the translation mode and displaying the conversation transcript, detecting, via the one or more audio devices, respective audio; and
   in response to detecting the respective audio and in accordance with a determination that the respective audio includes speech that meets a first set of one or more conditions, forgoing outputting an audio translation of the speech that meets the first set of one or more conditions.
24. The method of any of items 1-23, further comprising:
   while operating in the translation mode and displaying the conversation transcript, detecting, via the one or more audio devices, respective audio; and
   in response to detecting the respective audio and in accordance with a determination that the respective audio includes speech that meets a second set of one or more conditions, outputting, via the one or more audio devices, an audio translation of the speech that meets the second set of one or more conditions.
25. The method of item 24, wherein outputting, via the one or more audio devices, the audio translation of the speech that meets the second set of one or more conditions includes outputting the audio translation via one or more head-worn speakers of the set of one or more audio devices.
26. The method of any of items 1-25, wherein the conversation transcript is displayed while the computer system is in a locked state.
27. The method of any of items 1-26, further comprising:
   while operating in the translation mode, detecting a user input corresponding to a respective transcription of a respective speech in the conversation transcript; and
   in response to detecting the user input corresponding to the respective transcription of the respective speech in the conversation transcript, outputting, via the one or more audio devices, an audio translation of the respective speech.
28. The method of item 27, wherein outputting, via the one or more audio devices, the audio translation of the respective speech includes outputting the audio translation via one or more speakers integrated into a device that is displaying, via the one or more display generation components, the respective transcription.
29. A non-transitory computer-readable storage medium storing one or more programs configured to be executed by one or more processors of a computer system that is in communication with one or more audio devices, one or more input devices, and one or more display generation components, the one or more programs including instructions for performing the method of any of items 1-28.
30. A computer system that is configured to communicate with one or more audio devices, one or more input devices, and one or more display generation components, the computer system comprising:
   one or more processors; and
   memory storing one or more programs configured to be executed by the one or more processors, the one or more programs including instructions for performing the method of any of items 1-28.
31. A computer system that is configured to communicate with one or more audio devices, one or more input devices, and one or more display generation components, comprising:
   means for performing the method of any of items 1-28.
32. A computer program product, comprising one or more programs configured to be executed by one or more processors of a computer system that is in communication with one or more audio devices, one or more input devices, and one or more display generation components, the one or more programs including instructions for performing the method of any of items 1-28.
33. A non-transitory computer-readable storage medium storing one or more programs configured to be executed by one or more processors of a computer system that is in communication with one or more audio devices, one or more input devices, and one or more display generation components, the one or more programs including instructions for:
   while not operating in a translation mode that automatically detects, via the one or more audio devices, spoken audio and outputs a translation of the detected spoken audio, detecting, via the one or more input devices, a set of one or more inputs to enable the translation mode; and
   in response to detecting the set of one or more inputs to enable the translation mode, operating in the translation mode that includes, without requiring additional user inputs:
      detecting, via the one or more audio devices, speech of a conversation of two or more conversation participants, including first speech in a first language and second speech in a second language that is different from the first language;
      outputting, via the one or more audio devices, an audio translation of the first speech and/or an audio translation of the second speech; and
      displaying, via the one or more display generation components and concurrently with outputting audio translations of the conversation, a conversation transcript that includes transcriptions of the first speech and the second speech of the conversation of the two or more conversation participants.
34. A computer system configured to communicate with one or more audio devices, one or more input devices, and one or more display generation components, comprising:
   one or more processors; and
   memory storing one or more programs configured to be executed by the one or more processors, the one or more programs including instructions for:
      while not operating in a translation mode that automatically detects, via the one or more audio devices, spoken audio and outputs a translation of the detected spoken audio, detecting, via the one or more input devices, a set of one or more inputs to enable the translation mode; and
      in response to detecting the set of one or more inputs to enable the translation mode, operating in the translation mode that includes, without requiring additional user inputs:
         detecting, via the one or more audio devices, speech of a conversation of two or more conversation participants, including first speech in a first language and second speech in a second language that is different from the first language;
         outputting, via the one or more audio devices, an audio translation of the first speech and/or an audio translation of the second speech; and
         displaying, via the one or more display generation components and concurrently with outputting audio translations of the conversation, a conversation transcript that includes transcriptions of the first speech and the second speech of the conversation of the two or more conversation participants.
35. A computer system configured to communicate with one or more audio devices, one or more input devices, and one or more display generation components, comprising:
   means, while not operating in a translation mode that automatically detects, via the one or more audio devices, spoken audio and outputs a translation of the detected spoken audio, for detecting, via the one or more input devices, a set of one or more inputs to enable the translation mode; and
   means, responsive to detecting the set of one or more inputs to enable the translation mode, for operating in the translation mode that includes, without requiring additional user inputs:
      means for detecting, via the one or more audio devices, speech of a conversation of two or more conversation participants, including first speech in a first language and second speech in a second language that is different from the first language;
      means for outputting, via the one or more audio devices, an audio translation of the first speech and/or an audio translation of the second speech; and
      means for displaying, via the one or more display generation components and concurrently with outputting audio translations of the conversation, a conversation transcript that includes transcriptions of the first speech and the second speech of the conversation of the two or more conversation participants.
36. A computer program product, comprising one or more programs configured to be executed by one or more processors of a computer system that is in communication with one or more audio devices, one or more input devices, and one or more display generation components, the one or more programs including instructions for:
   while not operating in a translation mode that automatically detects, via the one or more audio devices, spoken audio and outputs a translation of the detected spoken audio, detecting, via the one or more input devices, a set of one or more inputs to enable the translation mode; and
   in response to detecting the set of one or more inputs to enable the translation mode, operating in the translation mode that includes, without requiring additional user inputs:
      detecting, via the one or more audio devices, speech of a conversation of two or more conversation participants, including first speech in a first language and second speech in a second language that is different from the first language;
      outputting, via the one or more audio devices, an audio translation of the first speech and/or an audio translation of the second speech; and
      displaying, via the one or more display generation components and concurrently with outputting audio translations of the conversation, a conversation transcript that includes transcriptions of the first speech and the second speech of the conversation of the two or more conversation participants.
37. A method, comprising:
   at a computer system that is in communication with one or more audio devices:
   receiving an input audio stream that includes speech; and
   while receiving the input audio stream that includes speech:
      performing speech processing on the input audio stream, including performing speech recognition to produce text that is based on the speech of the input audio stream;
      determining a location for inserting punctuation within the text, wherein the location is not an end of a sentence;
      inserting punctuation at the determined location within the text; and
      prior to detecting an end of a sentence and based on the inserted punctuation at the determined location within the text, beginning outputting, via the one or more audio devices, spoken audio of a first part of the text that is before the inserted punctuation.
38. The method of item 37, wherein performing speech processing on the input audio stream includes translating the speech from a first language to a second language that is different from the first language.
39. The method of any of items 37-38, wherein the location for inserting the punctuation is based on a location determined using a transcription in the first language of the speech of the audio input stream.
40. The method of any of items 37-39, wherein the location for inserting the punctuation is based on a location determined using a transcription in the second language of the speech of the audio input stream.
41. The method of any of items 37-40, wherein the punctuation inserted at the determined location within the text is an artificial punctuation.
42. The method of any of items 37-41, wherein the punctuation inserted at the determined location within the text is a comma.
43. The method of any of items 37-42, wherein determining the location for inserting punctuation within the text includes determining the location for inserting punctuation within the text based on a content of the speech.
44. The method of any of items 37-43, wherein the location for inserting punctuation within the text is determined independent of a duration of a pause between words.
45. A non-transitory computer-readable storage medium storing one or more programs configured to be executed by one or more processors of a computer system that is in communication with one or more audio devices, the one or more programs including instructions for performing the method of any of items 37-44.
46. A computer system that is configured to communicate with one or more audio devices, the computer system comprising:
   one or more processors; and
   memory storing one or more programs configured to be executed by the one or more processors, the one or more programs including instructions for performing the method of any of items 37-44.
47. A computer system that is configured to communicate with one or more audio devices, comprising:
   means for performing the method of any of items 37-44.
48. A computer program product, comprising one or more programs configured to be executed by one or more processors of a computer system that is in communication with one or more audio devices, the one or more programs including instructions for performing the method of any of items 37-44.
49. A non-transitory computer-readable storage medium storing one or more programs configured to be executed by one or more processors of a computer system that is in communication with one or more audio devices, the one or more programs including instructions for:
   receiving an input audio stream that includes speech; and
   while receiving the input audio stream that includes speech:
      performing speech processing on the input audio stream, including performing speech recognition to produce text that is based on the speech of the input audio stream;
      determining a location for inserting punctuation within the text, wherein the location is not an end of a sentence;
      inserting punctuation at the determined location within the text; and
      prior to detecting an end of a sentence and based on the inserted punctuation at the determined location within the text, beginning outputting, via the one or more audio devices, spoken audio of a first part of the text that is before the inserted punctuation.
50. A computer system configured to communicate with one or more audio devices, comprising:
   one or more processors; and
   memory storing one or more programs configured to be executed by the one or more processors, the one or more programs including instructions for:
      receiving an input audio stream that includes speech; and
      while receiving the input audio stream that includes speech:
         performing speech processing on the input audio stream, including performing speech recognition to produce text that is based on the speech of the input audio stream;
         determining a location for inserting punctuation within the text, wherein the location is not an end of a sentence;
         inserting punctuation at the determined location within the text; and
         prior to detecting an end of a sentence and based on the inserted punctuation at the determined location within the text, beginning outputting, via the one or more audio devices, spoken audio of a first part of the text that is before the inserted punctuation.
51. A computer system configured to communicate with one or more audio devices, comprising:
   means for receiving an input audio stream that includes speech; and
   means, while receiving the input audio stream that includes speech, for:
      performing speech processing on the input audio stream, including performing speech recognition to produce text that is based on the speech of the input audio stream;
      determining a location for inserting punctuation within the text, wherein the location is not an end of a sentence;
      inserting punctuation at the determined location within the text; and
      prior to detecting an end of a sentence and based on the inserted punctuation at the determined location within the text, beginning outputting, via the one or more audio devices, spoken audio of a first part of the text that is before the inserted punctuation.
52. A computer program product, comprising one or more programs configured to be executed by one or more processors of a computer system that is in communication with one or more audio devices, the one or more programs including instructions for:
   receiving an input audio stream that includes speech; and
   while receiving the input audio stream that includes speech:
      performing speech processing on the input audio stream, including performing speech recognition to produce text that is based on the speech of the input audio stream;
      determining a location for inserting punctuation within the text, wherein the location is not an end of a sentence;
      inserting punctuation at the determined location within the text; and prior to detecting an end of a sentence and based on the inserted punctuation at the determined location within the text, beginning outputting, via the one or more audio devices, spoken audio of a first part of the text that is before the inserted punctuation.

## Claims

1. A method, comprising:
at a computer system that is in communication with one or more audio devices, one or more input devices, and one or more display generation components:
while not operating in a translation mode that automatically detects, via the one or more audio devices, spoken audio and outputs a translation of the detected spoken audio, detecting, via the one or more input devices, a set of one or more inputs to enable the translation mode; and
in response to detecting the set of one or more inputs to enable the translation mode, operating in the translation mode that includes, without requiring additional user inputs:
detecting, via the one or more audio devices, speech of a conversation of two or more conversation participants, including first speech in a first language and second speech in a second language that is different from the first language;
outputting, via the one or more audio devices, an audio translation of the first speech and/or an audio translation of the second speech; and
displaying, via the one or more display generation components and concurrently with outputting audio translations of the conversation, a conversation transcript that includes transcriptions of the first speech and the second speech of the conversation of the two or more conversation participants.

2. The method of claim 1, further comprising:
in response to detecting the set of one or more inputs to enable the translation mode, outputting, via the one or more audio devices, an indication of a language for which the computer system will provide translations.

3. The method of any of claims 1-2, wherein:
outputting, via the one or more audio devices, the audio translation of the first speech includes outputting an audio translation of the first speech in the second language; and
outputting, via the one or more audio devices, the audio translation of the second speech includes outputting an audio translation of the second speech in the first language.

4. The method of any of claims 1-3, wherein the set of one or more inputs to enable the translation mode includes a first touch input at a first earphone and a second touch input at a second earphone that is different from the first earphone.

5. The method of any of claims 1-4, wherein:
the set of one or more inputs to enable the translation mode is detected while the computer system is in a locked mode; and
the conversation transcript is displayed while the computer system is in the locked mode.

6. The method of any of claims 1-5, further comprising:
while operating in the translation mode:
detecting, via the one or more audio devices, respective speech; and
in response to detecting the respective speech:
in accordance with a determination that a first set of one or more conditions is met for the respective speech, outputting a translation of the respective speech in a respective language.

7. The method of any of claims 1-6, further comprising:
prior to outputting, via the one or more audio devices, the audio translation of the first speech and the audio translation of the second speech, receiving, via the one or more input devices, user input that selects the second language.

8. The method of any of claims 1-6, further comprising:
prior to outputting, via the one or more audio devices, the audio translation of the first speech and the audio translation of the second speech, automatically selecting the second language without receiving user input that selects the second language.

9. The method of any of claims 1-8, further comprising:
while operating in the translation mode, detecting a level of ambient noise; and
in accordance with a determination that the level of ambient noise is above a threshold noise level, outputting an indication that at least a portion of the computer system should be moved closer to a conversation participant of the two or more conversation participants.

10. The method of any of claims 1-9, wherein displaying the conversation transcript of the conversation of the two or more conversation participants includes:
displaying, via the one or more display generation components, a transcription of the first speech in the first language, a transcription of the first speech in the second language, a transcription of the second speech in the first language, and a transcription of the second speech in the second language.

11. The method of any of claims 1-10, further comprising:
while operating in the translation mode, detecting a user input directed to a respective transcription of a respective speech in the conversation transcript, wherein the respective transcription of the respective speech is speech of a respective conversation participant of the two or more conversation participants; and
in response to detecting the user input directed to the respective transcription of the respective speech in the conversation transcript:
ceasing to display the conversation transcript of the two or more conversation participants; and
displaying, via the one or more display generation components, an enlarged transcript user interface that includes an enlarged version of the respective transcription of the respective speech of the respective conversation participant;
while displaying the enlarged transcript user interface that includes the enlarged version of the respective transcription of the respective speech, detecting, via the one or more audio devices, respective audio; and
in response to detecting the respective audio:
in accordance with a determination that the respective audio includes speech that meets a first set of one or more conditions, updating the enlarged transcript user interface to include a transcription of the speech that meets the first set of one or more conditions; and
in accordance with a determination that the respective audio includes speech that meets a second set of one or more conditions that are different from the first set of one or more conditions, forgoing updating the enlarged transcript user interface to include a transcription of the speech that meets the second set of one or more conditions.

12. The method of any of claims 1-11, further comprising:
while operating in the translation mode and displaying the conversation transcript, detecting, via the one or more audio devices, respective audio; and
in response to detecting the respective audio and in accordance with a determination that the respective audio includes speech that meets a first set of one or more conditions, forgoing outputting an audio translation of the speech that meets the first set of one or more conditions.

13. The method of any of claims 1-12, further comprising:
while operating in the translation mode and displaying the conversation transcript, detecting, via the one or more audio devices, respective audio; and
in response to detecting the respective audio and in accordance with a determination that the respective audio includes speech that meets a second set of one or more conditions, outputting, via the one or more audio devices, an audio translation of the speech that meets the second set of one or more conditions.

14. A computer-readable storage medium storing one or more programs configured to be executed by one or more processors of a computer system that is in communication with one or more audio devices, one or more input devices, and one or more display generation components, the one or more programs including instructions for performing the method of any of claims 1-13.

15. A computer system that is configured to communicate with one or more audio devices, one or more input devices, and one or more display generation components, the computer system comprising:
one or more processors; and
memory storing one or more programs configured to be executed by the one or more processors, the one or more programs including instructions for performing the method of any of claims 1-13.
